(19) Europäisches Patentamt / European Patent Office / Office européen des brevets

(11) **EP 4 723 622 A1**

(12) **EUROPEAN PATENT APPLICATION**
published in accordance with Art. 153(4) EPC

(43) Date of publication:
08.04.2026 Bulletin 2026/15

(21) Application number: 24815749.7

(22) Date of filing: 16.05.2024

(51) International Patent Classification (IPC):
*H04N 19/105* (2014.01)   *H04N 19/176* (2014.01)
*H04N 19/11* (2014.01)   *H04N 19/593* (2014.01)
*H04N 19/157* (2014.01)   *H04N 19/70* (2014.01)

(52) Cooperative Patent Classification (CPC):
H04N 19/105; H04N 19/11; H04N 19/157;
H04N 19/176; H04N 19/593; H04N 19/70

(86) International application number:
PCT/KR2024/006660

(87) International publication number:
WO 2024/248371 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.05.2023 KR 20230068624
04.08.2023 KR 20230102278

(71) Applicant: Samsung Electronics Co., Ltd.
Suwon-si, Gyeonggi-do 16677 (KR)

(72) Inventors:
• PIAO, Yinji
Suwon-si, Gyeonggi-do 16677 (KR)
• KIM, Kyungah
Suwon-si, Gyeonggi-do 16677 (KR)
• PARK, Minwoo
Suwon-si, Gyeonggi-do 16677 (KR)
• CHOI, Kwangpyo
Suwon-si, Gyeonggi-do 16677 (KR)

(74) Representative: Appleyard Lees IP LLP
G Mill
Dean Clough Industrial Park
Halifax HX3 5AH (GB)

(54) **IMAGE CODING METHOD AND DEVICE THEREFOR**

(57) The disclosure relates to an image decoding method, and more particularly, to a method comprising: obtaining a residual difference signal of the current block by processing a bitstream; determining a reference block corresponding to the current block, in the current picture including the current block; determining a residual signal of a reference block, based on a reconstructed signal of the reference block and a prediction signal of the reference block; and determining a reconstructed signal of the current block, based on a residual difference signal of the current block, a residual signal of the reference block, and a prediction signal of the current block, wherein the prediction signal of the reference block is determined based on at least one reference pixel included in a neighboring block of the reference block in the current picture, and the prediction signal of the current block is determined based on at least one reference pixel included in a neighboring block of the current block in the current picture. The disclosure also relates to an apparatus for performing the method.

FIG. 18

OBTAIN RESIDUAL DIFFERENCE SIGNAL OF CURRENT BLOCK BY PROCESSING BITSTREAM — 1802

DETERMINE REFERENCE BLOCK CORRESPONDING TO CURRENT BLOCK IN CURRENT PICTURE INCLUDING CURRENT BLOCK — 1804

DETERMINE RESIDUAL SIGNAL OF REFERENCE BLOCK, BASED ON RECONSTRUCTED SIGNAL OF REFERENCE BLOCK AND PREDICTION SIGNAL OF REFERENCE BLOCK — 1806

DETERMINE RECONSTRUCTED SIGNAL OF CURRENT BLOCK, BASED ON RESIDUAL DIFFERENCE SIGNAL OF CURRENT BLOCK, RESIDUAL SIGNAL OF REFERENCE BLOCK, AND PREDICTION SIGNAL OF CURRENT BLOCK — 1808

EP 4 723 622 A1

## Description

### Technical Field

The disclosure relates to image coding, and more particularly, to an image encoding method, an apparatus for performing the image encoding method, an image decoding method, an apparatus for performing the image decoding method, a method of storing or obtaining a bitstream, an apparatus for performing the method of storing or obtaining a bitstream, and a non-transitory storage medium storing a bitstream.

### Background Art

Coding refers to a series of signal processing techniques for transmitting digital information through communication lines or storing digital information in a form suitable for storage media. Targets of coding are objects such as audio, images, and text, and technology for performing coding specifically on images is referred to as image coding. Coding on a video signal, which is a sequence of images, is accomplished by removing redundant information while considering spatial correlation, temporal correlation, probabilistic correlation, etc. However, due to recent developments in various media and data transmission media, more efficient image coding methods and apparatuses are required.

### Disclosure of Invention

### Technical Problem

A technical problem to be solved in the disclosure provides an image coding method capable of reducing the number of bits necessary for coding a residual signal due to intra prediction and improving coding efficiency by applying residual prediction to intra prediction, and an apparatus for performing the image coding method.

Another technical problem to be solved in the disclosure provides an image coding method capable of reducing the number of bits necessary for signaling an intra prediction mode by determining the intra prediction mode in manners corresponding to each other on the encoder side and the decoder side without signaling the intra prediction mode, and an apparatus for performing the image coding method.

Technical problems to be solved in the disclosure are not limited to the aforementioned technical problems, and also include other technical problems that can be seen from the detailed description of the disclosure.

### Solution to Problem

According to an aspect of the disclosure, a method, performed by an apparatus, of decoding a bitstream, includes obtaining a residual difference signal of a current block by processing the bitstream; determining a reference block corresponding to the current block in a current picture including the current block; determining a residual signal of the reference block, based on a reconstructed signal of the reference block and a prediction signal of the reference block; and determining a reconstructed signal of the current block, based on the residual difference signal of the current block, the residual signal of the reference block, and the prediction signal of the current block. The prediction signal of the reference block may be determined based on at least one reference pixel included in a neighboring block of the reference block in the current picture, and the prediction signal of the current block may be determined based on at least one reference pixel included in a neighboring block of the current block in the current picture.

According to another aspect of the disclosure, an apparatus configured to decode a bitstream includes a memory including executable instructions; and at least one processor configured to execute the instructions to implement a decoding method, the method including obtaining a residual difference signal of a current block by processing the bitstream; determining a reference block corresponding to the current block in a current picture including the current block; determining a residual signal of the reference block, based on a reconstructed signal of the reference block and a prediction signal of the reference block; and determining a reconstructed signal of the current block, based on the residual difference signal of the current block, the residual signal of the reference block, and the prediction signal of the current block. The prediction signal of the reference block may be determined based on at least one reference pixel included in a neighboring block of the reference block in the current picture, and the prediction signal of the current block may be determined based on at least one reference pixel included in a neighboring block of the current block in the current picture.

The method may further include determining an intra prediction mode of the reference block from among a plurality of intra prediction modes, based on the reconstructed signal of the reference block and at least one reference pixel included in the neighboring block of the reference block. The prediction signal of the reference block may be determined based on the intra prediction mode of the reference block and at least one reference pixel included in the neighboring block of the reference block in the current picture, and the prediction signal of the current block may be determined based on the intra prediction mode of the reference block and at least one reference pixel included in the neighboring block of the current block in the current picture.

The determining of the intra prediction mode of the reference block from among the plurality of intra prediction modes may include calculating a function value for each of the plurality of intra prediction modes, based on the reconstructed signal of the reference block and the at least one reference pixel included in the neighboring block of the reference block; and determining, as an intra prediction mode of the current block, an intra prediction mode corresponding to a lowest function value or a highest function value among the calculated function values.

The function value may include at least one of a sum of absolute differences (SAD), a sum of squared differences (SSD), or the number of pixels having the same pixel value.

The method may further include identifying an intra prediction mode of the reference block, based on the reference block being coded in an intra prediction mode. The prediction signal of the reference block may be determined based on the intra prediction mode of the reference block and at least one reference pixel included in the neighboring block of the reference block in the current picture, and the prediction signal of the current block may be determined based on the intra prediction mode of the reference block and at least one reference pixel included in the neighboring block of the current block in the current picture.

The method may further include obtaining an intra prediction mode of the current block from the bitstream. The prediction signal of the reference block may be determined based on the intra prediction mode of the current block and at least one reference pixel included in the neighboring block of the reference block in the current picture, and the prediction signal of the current block may be determined based on the intra prediction mode of the current block and at least one reference pixel included in the neighboring block of the current block in the current picture.

The method may further include determining an intra prediction mode of the current block from among a plurality of intra prediction modes, based on a pixel region adjacent to the current block. The prediction signal of the reference block may be determined based on the intra prediction mode of the current block and at least one reference pixel included in the neighboring block of the reference block in the current picture, and the prediction signal of the current block may be determined based on the intra prediction mode of the current block and at least one reference pixel included in the neighboring block of the current block in the current picture.

The determining of the reference block corresponding to the current block may include determining a first pixel region adjacent to the current block in the current picture; determining a second pixel region corresponding to the first pixel region adjacent to the current block in the current picture; and determining the reference block corresponding to the second pixel region in the current picture.

The first pixel region adjacent to the current block may include at least one of a pixel region adjacent to the top of the current block, a pixel region adjacent to the top-left of the current block, or a pixel region adjacent to the left side of the current block.

The first pixel region adjacent to the current block may have a fixed size, or have a size determined based on a size of the current block, or have a same width or a same height as a coding unit containing the current block, or have a width or a height that is twice the width or the height of the coding unit including the current block.

The determining of the second pixel region corresponding to the first pixel region adjacent to the current block in the current picture may include determining a pixel region corresponding to a lowest function value or a highest function value among calculated function values, as the second pixel region, based on a pixel of the first pixel region and a pixel of a pixel region within a reconstructed area of the current picture.

The function value may include at least one of a sum of absolute differences (SAD), a sum of squared differences (SSD), or the number of pixels having the same pixel value.

The determining of the reference block corresponding to the current block may include obtaining a block vector of the current block from the bitstream; and determining the reference block in the current picture, based on the block vector of the current block.

The method may further include obtaining, from the bitstream, flag information indicating whether residual prediction is performed for the current block. The obtaining of the residual difference signal of the current block and the determining of the reconstructed signal of the current block, based on the residual difference signal of the current block, the residual signal of the reference block, and the prediction signal of the current block may be performed based on the flag information indicating that residual prediction is performed for the current block.

According to another aspect of the disclosure, a method, performed by an apparatus, of encoding a bitstream, includes determining a reference block corresponding to the current block in a current picture including a current block; determining a residual signal of the reference block, based on a reconstructed signal of the reference block and a prediction signal of the reference block; determining a residual difference signal of the current block, based on the residual signal of the reference block, an original signal of the current block, and a prediction signal of the current block; and encoding the residual difference signal of the current block into the bitstream by processing the residual difference signal. The prediction signal of the reference block may be determined based on at least one reference pixel included in a neighboring block of the reference block in the current picture, and the prediction signal of the current block may be determined based on at least one reference pixel included in a neighboring block of the current block in the current picture.

According to another aspect of the disclosure, an apparatus configured to encode a bitstream includes a memory including executable instructions; and at least one processor configured to execute the instructions to implement an encoding method, the method including determining a reference block corresponding to a current block in a current picture including the current block; determining a residual signal of the reference block, based on a reconstructed signal of the reference block and a prediction signal of the reference block; determining a residual difference signal of the current block, based on the residual signal of the reference block, an original signal of the current block, and a prediction signal of the current block; and encoding the residual difference signal of the current block into the bitstream by processing the residual difference signal. The prediction signal of the reference block may be determined based on at least one reference pixel included in a neighboring block of the reference block in the current picture, and the prediction signal of the current block may be determined based on at least one reference pixel included in a neighboring block of the current block in the current picture.

According to another aspect of the disclosure, a non-transitory storage medium for storing a bitstream generated by an encoding method, the method including determining a reference block corresponding to a current block in a current picture including the current block; determining a residual signal of the reference block, based on a reconstructed signal of the reference block and a prediction signal of the reference block; determining a residual difference signal of the current block, based on the residual signal of the reference block, an original signal of the current block, and a prediction signal of the current block; and encoding the residual difference signal of the current block into the bitstream by processing the residual difference signal. The prediction signal of the reference block may be determined based on at least one reference pixel included in a neighboring block of the reference block in the current picture, and the prediction signal of the current block may be determined based on at least one reference pixel included in a neighboring block of the current block in the current picture.

According to another aspect of the disclosure, a method of storing a bitstream generated by an encoding method, the method including determining a reference block corresponding to a current block in a current picture including the current block; determining a residual signal of the reference block, based on a reconstructed signal of the reference block and a prediction signal of the reference block; determining a residual difference signal of the current block, based on the residual signal of the reference block, an original signal of the current block, and a prediction signal of the current block; and encoding the residual difference signal of the current block into the bitstream by processing the residual difference signal. The prediction signal of the reference block may be determined based on at least one reference pixel included in a neighboring block of the reference block in the current picture, and the prediction signal of the current block may be determined based on at least one reference pixel included in a neighboring block of the current block in the current picture.

According to another aspect of the disclosure, a non-transitory storage medium for storing a bitstream generated by an encoding method, the encoding method including determining a reference block corresponding to a current block in a current picture including the current block; determining a residual signal of the reference block, based on a reconstructed signal of the reference block and a prediction signal of the reference block; determining a residual difference signal of the current block, based on the residual signal of the reference block, an original signal of the current block, and a prediction signal of the current block; and encoding the residual difference signal of the current block into the bitstream by processing the residual difference signal. The prediction signal of the reference block may be determined based on at least one reference pixel included in a neighboring block of the reference block in the current picture, and the prediction signal of the current block may be determined based on at least one reference pixel included in a neighboring block of the current block in the current picture.

## Advantageous Effects of Invention

According to a proposed method of the disclosure, residual prediction may be applied to intra prediction, so that the number of bits necessary for coding a residual signal due to intra prediction may be reduced and coding efficiency may be improved.

According to a proposed method of the disclosure, the number of bits necessary for signaling an intra prediction mode may be reduced by determining the intra prediction mode according to a predetermined method on the encoder side and the decoder side without signaling the intra prediction mode.

Technical effects according to a proposed method of the disclosure are not limited to the aforementioned technical effects, and also include other technical effects that can be seen from the detailed description of the disclosure.

## Brief Description of Drawings

A brief description of each drawing is provided for better understanding of the drawings cited herein.

FIG. 1 is a schematic block diagram of an image decoding apparatus, according to an embodiment.

FIG. 2 is a flow diagram of an image decoding method, according to an embodiment.

FIG. 3 illustrates a process in which the image decoding apparatus determines at least one coding unit by splitting the current coding unit, according to an embodiment.

FIG. 4 illustrates a process in which the image decoding apparatus determines at least one coding unit by splitting a non-square coding unit, according to an embodiment.

FIG. 5 illustrates a process in which the image decoding apparatus splits a coding unit based on at least one of block shape information and split shape mode information, according to an embodiment.

FIG. 6 illustrates a method in which the image decoding apparatus determines a certain coding unit from among an odd number of coding units, according to an embodiment.

FIG. 7 illustrates an order of processing a plurality of coding units when the image decoding apparatus determines the plurality of coding units by splitting the current coding unit, according to an embodiment.

FIG. 8 illustrates a process in which the image decoding apparatus determines that the current coding unit is to be split into an odd number of coding units, when the coding units are not processable in a certain order, according to an embodiment.

FIG. 9 illustrates a process in which the image decoding apparatus determines at least one coding unit by splitting a first coding unit, according to an embodiment.

FIG. 10 illustrates that a shape into which a second coding unit is splittable is restricted when the second coding unit having a non-square shape, which is determined when the image decoding apparatus splits a first coding unit, satisfies a certain condition, according to an embodiment.

FIG. 11 illustrates a process in which the image decoding apparatus splits a square coding unit when split shape mode information indicates that the square coding unit is not to be split into four square coding units, according to an embodiment.

FIG. 12 illustrates that a processing order between a plurality of coding units may vary according to a process of splitting a coding unit, according to an embodiment.

FIG. 13 illustrates a process of determining a depth of a coding unit as a shape and a size of the coding unit change, when the coding unit is recursively split to determine a plurality of coding units, according to an embodiment.

FIG. 14 illustrates depths that are determinable based on shapes and sizes of coding units, and part indexes (PIDs) that are for distinguishing the coding units, according to an embodiment.

FIG. 15 illustrates that a plurality of coding units are determined based on a plurality of certain data units included in a picture, according to an embodiment.

FIG. 16 is a block diagram of an image encoding and decoding system.

FIG. 17 is a flowchart of an image encoding method according to a proposed method of the disclosure.

FIG. 18 is a flowchart of an image decoding method according to a proposed method of the disclosure.

FIG. 19 is a flowchart of a bitstream storage method according to a proposed method of the disclosure.

FIGS. 20 and 21 illustrate intra prediction modes applicable to a proposed method of the disclosure.

FIG. 22 illustrates inter template matching applicable to a proposed method of the disclosure.

FIG. 23 illustrates intra template matching applicable to a proposed method of the disclosure.

FIG. 24 illustrates intra block copying applicable to a proposed method of the disclosure.

FIG. 25 illustrates a proposed method 1 of the disclosure.

FIG. 26 illustrates templates applicable to a proposed method of the disclosure.

FIG. 27 illustrates a reference pixel for intra prediction applicable to a proposed method of the disclosure.

FIG. 28 illustrates a proposed method 2 of the disclosure.

FIG. 29 illustrates a proposed method 3 of the disclosure.

FIG. 30 illustrates a proposed method 4 of the disclosure.

FIGS. 31 and 32 illustrate apparatuses configured to perform a proposed method of the disclosure.

## Mode for the Invention

As the disclosure allows for various changes and numerous embodiments, exemplary embodiments will be illustrated in the drawings and described in detail in the written description. However, this is not intended to limit the disclosure to particular modes of practice, and it is to be appreciated that all changes, equivalents, and substitutes that do not depart from the spirit and technical scope of the disclosure are encompassed in the disclosure.

In the description of embodiments, certain detailed explanations of the related art are omitted when it is deemed that they may unnecessarily obscure the essence of the disclosure. Also, numbers (e.g., first and second) used in the description of the specification are merely identifier codes for distinguishing one component from another.

Also, in the specification, it will be understood that when elements are "connected" or "coupled" to each other, the elements may be directly connected or coupled to each other, but may alternatively be connected or coupled to each other with an intervening element therebetween, unless specified otherwise.

In the specification, regarding a component represented as a "portion (unit)" or a "module", two or more components may be combined into one component or one component may be divided into two or more components according to subdivided functions. In addition, each component described hereinafter may additionally perform some or all of functions performed by another component, in addition to main functions of itself, and some of the main functions of each component may be performed entirely by another component.

Also, the term 'image' or picture' used herein may refer to a still image, a still image of a video, or a moving image, i.e., a video itself. An image or a picture may referred to as a frame.

Also, the term 'sample' used herein refers to data that is assigned to a sampling location of an image and is to be processed. For example, a sample may be used interchangeably with a pixel of an image in the spatial domain, and may be used interchangeably with a transform coefficient in the transform domain. A unit including one or more samples may be defined as a block.

Also, in the specification, the term 'Current Block' may refer to a block corresponding to a largest coding unit, a coding unit, a prediction unit, or a transform unit within the current picture to be encoded or decoded.

Also, in the specification, a motion vector being in the direction of list 0 may mean that the motion vector is used to point to a block in a reference picture included in list 0 (also referred to as reference list 0 or reference picture list 0), and a motion vector being in the direction of list 1 may mean that the motion vector is used to point to a block in a reference picture included in list 1 (also referred to as reference list 1 or reference picture list 1). Further, a motion vector being unidirectional may mean that it points to a block in a reference picture included in either list 0 or list 1, while a motion vector being bidirectional may mean that it includes both a motion vector in the direction of list 0 and a motion vector in the direction of list 1. List 0 may be briefly represented as L0, and list 1 may be briefly represented as L1.

Also, in the specification, the term 'binary split' of a block refers to a split in which the block is divided into two sub-blocks, each having either half the width or half the height of the block. Specifically, if a 'binary vertical split' is performed for the current block, the current block is split vertically (in the vertical direction) at the midpoint of its width, resulting in two sub-blocks each having half the width and the same height as the current block. If a 'binary horizontal split' is performed for the current block, the current block is split horizontally (in the horizontal direction) at the midpoint of its height, resulting in two sub-blocks each having half the height and the same width as the current block.

Also, in the specification, the term 'ternary split' of a block refers to a split in which the block is divided into three sub-blocks with a 1:2:1 ratio in width or height. Specifically, if a "ternary vertical split' is performed for the current block, the current block is split vertically (in the vertical direction) at positions corresponding to a 1:2:1 ratio of its width, resulting in two sub-blocks each having one-fourth the width and the same height as the current block, and one sub-block having half the width and the same height as the current block. If a "ternary horizontal split' is performed for the current block, the current block is split horizontally at positions corresponding to a 1:2:1 ratio of its height, resulting in two sub-blocks each having one-fourth the height and the same width as the current block, and one sub-block having half the height and the same width as the current block.

Also, in the specification, the term 'quad split' of a block refers to a split in which both the width and the height of the block are divided in a 1:1 ratio, resulting in four sub-blocks. Specifically, when a 'quad split' is performed for the current block, the current block is split vertically at the midpoint of its width and horizontally at the midpoint of its height, resulting in four sub-blocks, each having half the width and half the height of the current block.

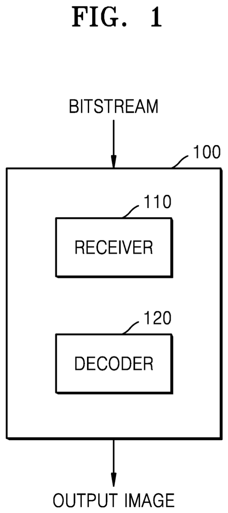

Hereinafter, an image encoding method and apparatus and an image decoding method and apparatus according to an embodiment will be disclosed with reference to FIGS. 1 to 16.

FIG. 1 is a schematic block diagram of an image decoding apparatus, according to an embodiment.

The image decoding apparatus 100 may include a receiver 110 and a decoder 120. The receiver 110 and the decoder 120 may include at least one processor. Also, the receiver 110 and the decoder 120 may include a memory storing instructions to be executed by the at least one processor.

The receiver 110 may receive a bitstream. The bitstream may include information resulting from image encoding by an image encoding apparatus 200 which will be described below. Also, the bitstream may be transmitted from the image encoding apparatus 200. The image decoding apparatus 100 may be connected to the image encoding apparatus 200 in a wired or wireless manner, and the receiver 110 may receive a bitstream in a wired or wireless manner. The receiver 110 may receive a bitstream from a storage medium, such as an optical medium or a hard disk. The decoder 120 may reconstruct an image based on information obtained from the received bitstream. The decoder 120 may obtain a syntax element for reconstructing an image from the bitstream. The decoder 120 may reconstruct the image based on the syntax element.

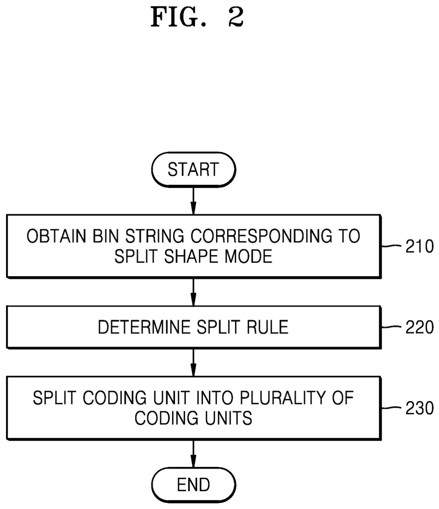

An operation of the image decoding apparatus 100 will be described in more detail with reference to FIG. 2.

FIG. 2 illustrates a flow diagram of an image decoding method, according to an embodiment.

According to an embodiment of the disclosure, the receiver 110 may receive a bitstream.

The image decoding apparatus 100 may perform an operation 210 of obtaining a bin string corresponding to a split shape mode of a coding unit from the bitstream. The image decoding apparatus 100 may perform an operation 220 of determining a split rule of a coding unit. Also, the image decoding apparatus 100 may perform an operation of splitting a coding unit into a plurality of coding units, based on at least one of the bin string corresponding to the split shape mode and the split rule. The image decoding apparatus 100 may determine a first range which is an allowable size range of a coding unit, according to a ratio of a height to a width of the coding unit, in order to determine the split rule. The image decoding apparatus 100 may determine a second range which is an allowable size range of a coding unit, according to a split shape mode of the coding unit, in order to determine the split rule.

Hereinafter, splitting of a coding unit will be described in detail according to an embodiment of the disclosure.

First, one picture may be split into one or more slices or one or more tiles. One slice or one tile may be a sequence of one or more largest coding units (coding tree units (CTUs)). As a concept corresponding to a largest coding unit (CTU), there is a largest coding block (coding tree block (CTB)).

A largest coding block (CTB) denotes an NxN block including NxN samples (N is an integer). Each color component may be split into one or more largest coding blocks.

When a picture has three sample arrays (sample arrays for Y, Cr, and Cb components), a largest coding unit (CTU) includes a largest coding block of a luma sample, two corresponding largest coding blocks of chroma samples, and syntax structures used to encode the luma sample and the chroma samples. When a picture is a monochrome picture, a largest coding unit includes a largest coding block of a monochrome sample and syntax structures used to encode the monochrome samples. When a picture is a picture encoded in color planes separated according to color components, a largest coding unit includes syntax structures used to encode the picture and samples of the picture.

One largest coding block (CTB) may be split into MxN coding blocks including MxN samples (M and N are integers).

When a picture has sample arrays for Y, Cr, and Cb components, a coding unit (CU) includes a coding block of a luma sample, two corresponding coding blocks of chroma samples, and syntax structures used to encode the luma sample and the chroma samples. When a picture is a monochrome picture, a coding unit includes a coding block of a monochrome sample and syntax structures used to encode the monochrome samples. When a picture is a picture encoded in color planes separated according to color components, a coding unit includes syntax structures used to encode the picture and samples of the picture.

As described above, a largest coding block and a largest coding unit are conceptually distinguished from each other, and a coding block and a coding unit are conceptually distinguished from each other. That is, a (largest) coding unit refers to a data structure including a (largest) coding block including a corresponding sample and a syntax structure corresponding to the (largest) coding block. However, because it is understood by one of ordinary skill in the art that a (largest) coding unit or a (largest) coding block refers to a block of a certain size including a certain number of samples, a largest coding block and a largest coding unit, or a coding block and a coding unit are mentioned in the following specification without being distinguished unless otherwise described.

An image may be split into largest coding units (CTUs). A size of each largest coding unit may be determined based on information obtained from a bitstream. A shape of each largest coding unit may be a square shape of the same size. However, an embodiment is not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128, and 256x256.

For example, information about a luma block size difference and a maximum size of a luma coding block that may be split into two may be obtained from a bitstream. The information about the luma block size difference may refer to a size difference between a luma largest coding unit and a largest luma coding block that may be split into two. Accordingly, when the information about the maximum size of the luma coding block that may be split into two and the information about the luma block size difference obtained from the bitstream are combined with each other, a size of the luma largest coding unit may be determined. A size of a chroma largest coding unit may be determined by using the size of the luma largest coding unit. For example, when a Y: Cb: Cr ratio is 4:2:0 according to a color format, a size of a chroma block may be half a size of a luma block, and a size of a chroma largest coding unit may be half a size of a luma largest coding unit.

According to an embodiment, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed. For example, the maximum size of the luma coding block that is ternary splittable in an I-picture may be 32x32, and the maximum size of the luma coding block that is ternary splittable in a P-picture or a B-picture may be 64x64.

Also, a largest coding unit may be hierarchically split into coding units based on split shape mode information obtained from a bitstream. At least one of information indicating whether quad splitting is performed, information indicating whether multi-splitting is performed, split direction information, and split type information may be obtained as the split shape mode information from the bitstream.

For example, the information indicating whether quad splitting is performed may indicate whether the current coding unit is quad split (QUAD_SPLIT) or not.

When the current coding unit is not quad split, the information indicating whether multi-splitting is performed may indicate whether the current coding unit is no longer split (NO_SPLIT) or binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode (SPLIT_TT_VER).

The image decoding apparatus 100 may obtain, from the bitstream, the split shape mode information from one bin string. A form of the bitstream received by the image decoding apparatus 100 may include fixed length binary code, unary code, truncated unary code, pre-determined binary code, or the like. The bin string is information in a binary number. The bin string may include at least one bit. The image decoding apparatus 100 may obtain the split shape mode information corresponding to the bin string, based on the split rule. The image decoding apparatus 100 may determine whether to quad split a coding unit, whether not to split a coding unit, a split direction, and a split type, based on one bin string.

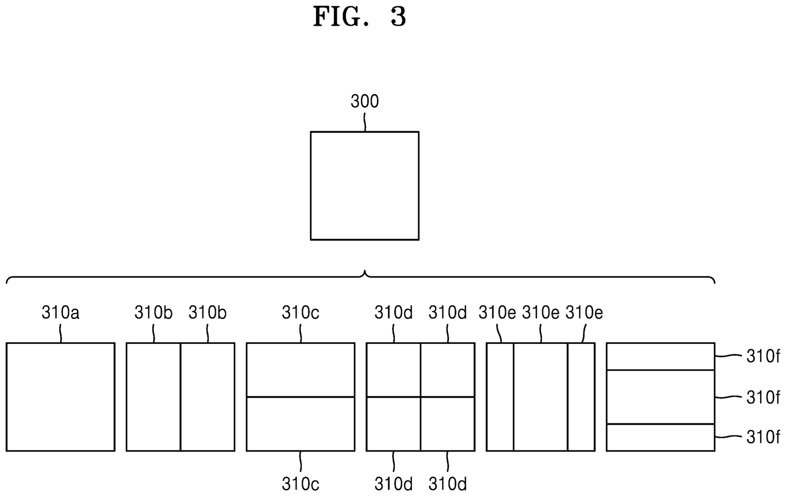

The coding unit may be smaller than or the same as the largest coding unit. For example, because a largest coding unit is a coding unit having a maximum size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. Also, when split shape mode information about a coding unit indicates that splitting is performed, the coding unit may be split into smaller coding units. However, the splitting of the image is not limited thereto, and the largest coding unit and the coding unit may not be distinguished. The splitting of the coding unit will be described in more detail with reference to FIGS. 3 to 16.

Also, one or more prediction blocks for prediction may be determined from a coding unit. The prediction block may be the same as or smaller than the coding unit. Also, one or more transform blocks for transformation may be determined from a coding unit. The transform block may be equal to or smaller than the coding unit.

The shapes and sizes of the transform block and prediction block may not be related to each other.

In another embodiment, prediction may be performed by using a coding unit as a prediction unit. Also, transformation may be performed by using a coding unit as a transform block.

The current block and a neighboring block of the disclosure may indicate one of the largest coding unit, the coding unit, the prediction block, and the transform block. Also, the current block or the current coding unit is a block that is currently being decoded or encoded or a block that is currently being split. The neighboring block may be a block reconstructed before the current block. The neighboring block may be adjacent to the current block spatially or temporally. The neighboring block may be located at one of the lower-left, left, upper-left, top, upper-right, right, lower-right of the current block.

FIG. 3 illustrates a process in which the image decoding apparatus determines at least one coding unit by splitting the current coding unit, according to an embodiment.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a ratio of width and height, and size of a coding unit.

The shape of the coding unit may include a square and a non-square. When the width and height of the coding unit are the same (i.e., when the block shape of the coding unit is 4Nx4N), the image decoding apparatus 100 may determine the block shape information of the coding unit as a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit as a non-square. When the shape of the coding unit is a non-square, the image decoding apparatus 100 may determine the ratio of the width and height among the block shape information of the coding unit as at least one of 1:2, 2:1, 1:4, 4:1, 1:8, 8:1, 1:16, 16:1, 1:32, and 32:1. Also, the image decoding apparatus 100 may determine whether the coding unit is in a horizontal direction or a vertical direction, based on the length of the width and the length of the height of the coding unit. Also, the image decoding apparatus 100 may determine the size of the coding unit, based on at least one of the length of the width, the length of the height, and the area of the coding unit.

According to an embodiment, the image decoding apparatus 100 may determine the shape of the coding unit by using the block shape information, and may determine a splitting method of the coding unit by using split shape mode information. That is, a coding unit splitting method indicated by the split shape mode information may be determined based on a block shape indicated by the block shape information used by the image decoding apparatus 100.

The image decoding apparatus 100 may obtain the split shape mode information from a bitstream. However, an embodiment is not limited thereto, and the image decoding apparatus 100 and the image encoding apparatus 200 may determine pre-agreed split shape mode information, based on the block shape information. The image decoding apparatus 100 may determine the pre-agreed split shape mode information with respect to a largest coding unit or a smallest coding unit. For example, the image decoding apparatus 100 may determine the split shape mode information with respect to the largest coding unit to be a quad split. Also, the image decoding apparatus 100 may determine the split shape mode information with respect to the smallest coding unit to be "not to perform splitting". In particular, the image decoding apparatus 100 may determine the size of the largest coding unit to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the largest coding unit of a 256x256 size, based on the split shape mode information. Also, the image decoding apparatus 100 may determine the size of the smallest coding unit to be 4x4. The image decoding apparatus 100 may obtain split shape mode information indicating "not to perform splitting" with respect to the smallest coding unit.

According to an embodiment, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information of the current coding unit 300 indicates a square shape, the decoder 120 may not split a coding unit 310a having the same size as the current coding unit 300, based on the split shape mode information indicating not to perform splitting, or may determine coding units 310b, 310c, 310d, 310e, or 310f split based on the split shape mode information indicating a certain splitting method.

Referring to FIG. 3, according to an embodiment, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment, the image decoding apparatus 100 may determine three coding units 310e obtained by splitting the current coding unit 300 in a vertical direction, based on the split shape mode information indicating to perform ternary splitting in a vertical direction. The image decoding apparatus 100 may determine three coding units 310f obtained by splitting the current coding unit 300 in a horizontal direction, based on the split shape mode information indicating to perform ternary splitting in a horizontal direction. However, splitting methods of the square coding unit are not limited to the above-described methods, and the split shape mode information may indicate various methods. Certain splitting methods of splitting the square coding unit will be described in detail below through various embodiments.

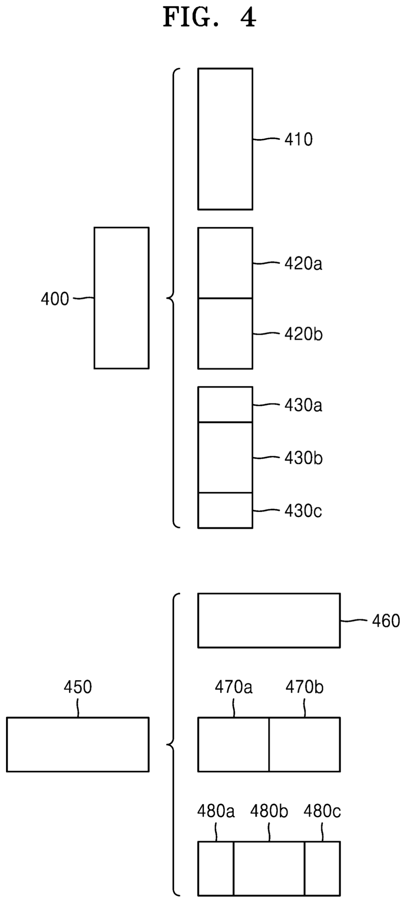

FIG. 4 illustrates a process in which the image decoding apparatus determines at least one coding unit by splitting a non-square coding unit, according to an embodiment.

According to an embodiment, the image decoding apparatus 100 may use block shape information indicating that the current coding unit has a non-square shape. The image decoding apparatus 100 may determine whether not to split the non-square current coding unit or whether to split the non-square current coding unit by using a certain splitting method, based on split shape mode information. Referring to FIG. 4, when the block shape information of the current coding unit 400 or 450 indicates a non-square shape, the image decoding apparatus 100 may determine a coding unit 410 or 460 having the same size as the current coding unit 400 or 450, based on the split shape mode information indicating not to perform splitting, or may determine coding units 420a and 420b, 430a to 430c, 470a and 470b, or 480a to 480c split based on the split shape mode information indicating a certain splitting method. Certain splitting methods of splitting a non-square coding unit will be described in detail below through various embodiments.

According to an embodiment, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment, when the image decoding apparatus 100 splits the non-square current coding unit 400 or 450 based on the split shape mode information, the image decoding apparatus 100 may consider the location of a long side of the non-square current coding unit 400 or 450 to split the current coding unit. For example, the image decoding apparatus 100 may determine a plurality of coding units by splitting the current coding unit 400 or 450 in a direction of splitting a long side of the current coding unit 400 or 450, in consideration of the shape of the current coding unit 400 or 450.

According to an embodiment, when the split shape mode information indicates to split (ternary split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment, a ratio of the width and height of the current coding unit 400 or 450 may be 4:1 or 1:4. When the ratio of the width and height is 4:1, the block shape information may indicate a horizontal direction because the length of the width is longer than the length of the height. When the ratio of the width and height is 1:4, the block shape information may indicate a vertical direction because the length of the width is shorter than the length of the height. The image decoding apparatus 100 may determine to split the current coding unit into an odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a, 430b, and 430c by splitting the current coding unit 400 in the horizontal direction. Also, when the current coding unit 450 is in the horizontal direction, the image decoding apparatus 100 may determine the coding units 480a, 480b, and 480c by splitting the current coding unit 450 in the vertical direction.

According to an embodiment, the image decoding apparatus 100 may determine an odd number of coding units included in the current coding unit 400 or 450, and not all the determined coding units may have the same size. For example, a certain coding unit 430b or 480b from among the determined odd number of coding units 430a, 430b, and 430c, or 480a, 480b, and 480c may have a size different from the size of the other coding units 430a and 430c, or 480a and 480c. That is, coding units which may be determined by splitting the current coding unit 400 or 450 may have multiple sizes and, in some cases, all of the odd number of coding units 430a, 430b, and 430c, or 480a, 480b, and 480c may have different sizes.

According to an embodiment, when the split shape mode information indicates to split a coding unit into the odd number of blocks, the image decoding apparatus 100 may determine the odd number of coding units included in the current coding unit 400 or 450, and moreover, may put a certain restriction on at least one of the odd number of coding units generated by splitting the current coding unit 400 or 450. Referring to FIG. 4, the image decoding apparatus 100 may set a decoding process regarding the coding unit 430b or 480b located at the center among the three coding units 430a, 430b, and 430c, or 480a, 480b, and 480c generated as the current coding unit 400 or 450 is split to be different from that of the other coding units 430a and 430c, or 480a and 480c. For example, the image decoding apparatus 100 may restrict the coding unit 430b or 480b at the center location to be no longer split or to be split only a certain number of times, unlike the other coding units 430a and 430c, or 480a and 480c.

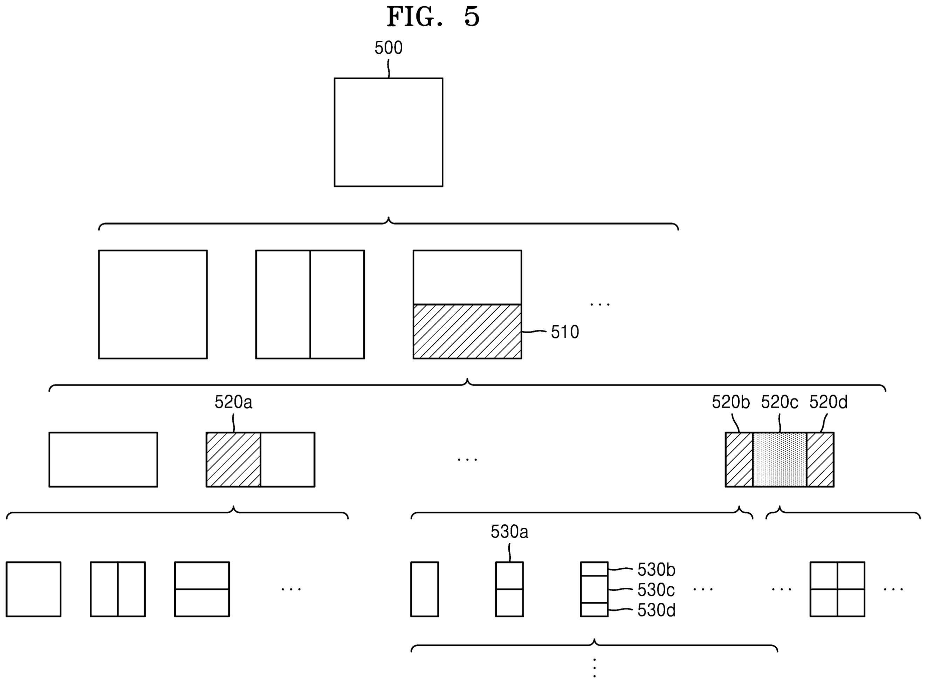

FIG. 5 illustrates a process in which the image decoding apparatus splits a coding unit based on at least one of block shape information and split shape mode information, according to an embodiment.

According to an embodiment, the image decoding apparatus 100 may determine to split or not to split a square first coding unit 500 into coding units, based on at least one of the block shape information and the split shape mode information. According to an embodiment, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment are terms used to understand a relation before and after splitting a coding unit. For example, a second coding unit may be determined by splitting a first coding unit, and a third coding unit may be determined by splitting the second coding unit. It will be understood that the relation of the first coding unit, the second coding unit, and the third coding unit follows the above descriptions.

According to an embodiment, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, 520b, 520c, and 520d based on the split shape mode information. The image decoding apparatus 100 may obtain the split shape mode information, and may obtain a plurality of various-shaped second coding units (e.g., 510) by splitting the first coding unit 500, based on the obtained split shape mode information, and the second coding unit 510 may be split by using a splitting method of the first coding unit 500 based on the split shape mode information. According to an embodiment, when the first coding unit 500 is split into the second coding units 510 based on the split shape mode information of the first coding unit 500, the second coding unit 510 may also be split into the third coding units (e.g., 520a, 520b, 520c, and 520d) based on the split shape mode information of the second coding unit 510. That is, a coding unit may be recursively split based on the split shape mode information of each coding unit. Accordingly, a square coding unit may be determined by splitting a non-square coding unit, and a non-square coding unit may be determined by recursively splitting the square coding unit.

Referring to FIG. 5, a certain coding unit (e.g., a coding unit located at a center location, or a square coding unit) from among an odd number of third coding units 520b, 520c, and 520d determined by splitting the non-square second coding unit 510 may be recursively split. According to an embodiment, the square third coding unit 520b from among the odd number of third coding units 520b, 520c, and 520d may be split in a horizontal direction into a plurality of fourth coding units. A non-square fourth coding unit 530b or 530d from among the plurality of fourth coding units 530a, 530b, 530c, and 530d may be re-split into a plurality of coding units. For example, the non-square fourth coding unit 530b or 530d may be re-split into an odd number of coding units. A method that may be used to recursively split a coding unit will be described below through various embodiments.

According to an embodiment, the image decoding apparatus 100 may split each of the third coding units 520a, 520b, 520c, and 520d into coding units, based on the split shape mode information. Also, the image decoding apparatus 100 may determine not to split the second coding unit 510 based on the split shape mode information. According to an embodiment, the image decoding apparatus 100 may split the non-square second coding unit 510 into the odd number of third coding units 520b, 520c, and 520d. The image decoding apparatus 100 may put a certain restriction on a certain third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a certain splitting method (e.g., split into only four coding units or split by using a splitting method of the second coding unit 510), or to be split only a certain number of times (e.g., split only n times (where n>0)). However, the restrictions on the third coding unit 520c at the center location are not limited to the above-described examples, and may include various restrictions for decoding the third coding unit 520c at the center location differently from the other third coding units 520b and 520d.

According to an embodiment, the image decoding apparatus 100 may obtain the split shape mode information, which is used to split the current coding unit, from a certain location in the current coding unit.

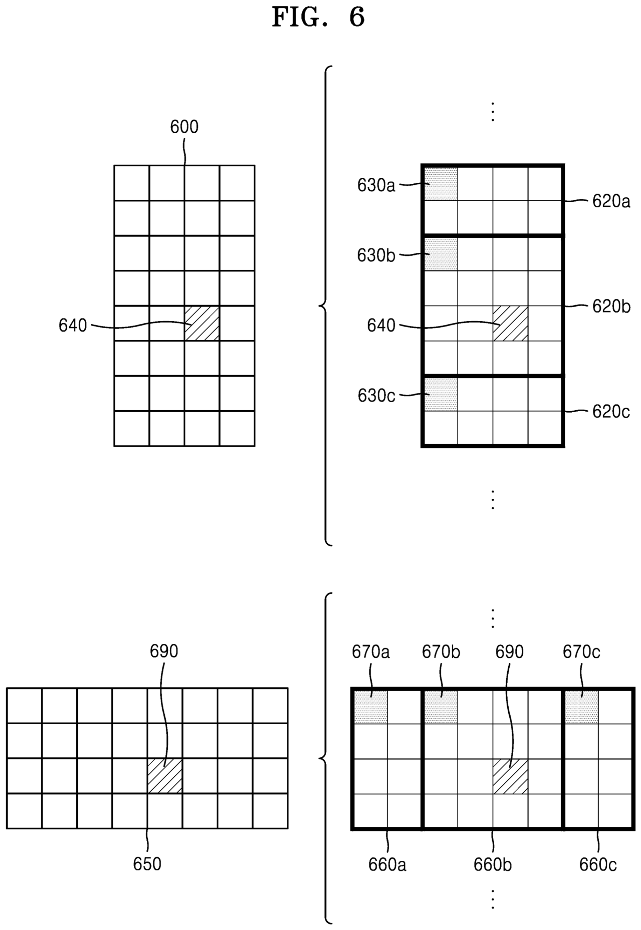

FIG. 6 illustrates a method in which the image decoding apparatus determines a certain coding unit from among an odd number of coding units, according to an embodiment.

Referring to FIG. 6, split shape mode information of the current coding unit 600 or 650 may be obtained from a sample of a certain location (e.g., a sample 640 or 690 of a center location) from among a plurality of samples included in the current coding unit 600 or 650. However, the certain location in the current coding unit 600, from which at least one piece of the split shape mode information may be obtained, is not limited to the center location in FIG. 6, and may include various locations included in the current coding unit 600 (e.g., top, bottom, left, right, upper-left, lower-left, upper-right, lower-right locations, or the like). The image decoding apparatus 100 may obtain the split shape mode information from the certain location and may determine to split or not to split the current coding unit into various-shaped and various-sized coding units.

According to an embodiment, when the current coding unit is split into a certain number of coding units, the image decoding apparatus 100 may select one of the coding units. Various methods may be used to select one of a plurality of coding units, as will be described below through various embodiments.

According to an embodiment, the image decoding apparatus 100 may split the current coding unit into a plurality of coding units, and may determine a coding unit at a certain location.

According to an embodiment, the image decoding apparatus 100 may use information indicating locations of the odd number of coding units, to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of certain samples included in the coding units 620a, 620b, and 620c. In detail, the image decoding apparatus 100 may determine the coding unit 620b at the center location by determining the locations of the coding units 620a, 620b, and 620c based on information indicating locations of upper-left samples 630a, 630b, and 630c of the coding units 620a, 620b, and 620c.

According to an embodiment, the information indicating the locations of the upper-left samples 630a, 630b, and 630c, which are respectively included in the coding units 620a, 620b, and 620c, may include information about locations or coordinates of the coding units 620a, 620b, and 620c in a picture. According to an embodiment, the information indicating the locations of the upper-left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment, information indicating the location of the upper-left sample 630a of the upper coding unit 620a may include coordinates (xa, ya), information indicating the location of the upper-left sample 630b of the middle coding unit 620b may include coordinates (xb, yb), and information indicating the location of the upper-left sample 630c of the lower coding unit 620c may include coordinates (xc, yc). The image decoding apparatus 100 may determine the middle coding unit 620b by using the coordinates of the upper-left samples 630a, 630b, and 630c which are included in the coding units 620a, 620b, and 620c, respectively. For example, when the coordinates of the upper-left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper-left samples 630a, 630b, and 630c may include coordinates indicating absolute locations in the picture, or may use coordinates (dxb, dyb) indicating a relative location of the upper-left sample 630b of the middle coding unit 620b and coordinates (dxc, dyc) indicating a relative location of the upper-left sample 630c of the lower coding unit 620c with respect to the location of the upper-left sample 630a of the upper coding unit 620a. A method of determining a coding unit at a certain location by using coordinates of a sample included in the coding unit as information indicating a location of the sample is not limited to the above-described method, and may include various arithmetic methods capable of using the coordinates of the sample.

According to an embodiment, the image decoding apparatus 100 may split the current coding unit 600 into a plurality of coding units 620a, 620b, and 620c, and may select one of the coding units 620a, 620b, and 620c based on a certain criterion. For example, the image decoding apparatus 100 may select the coding unit 620b, which has a size different from that of the others, from among the coding units 620a, 620b, and 620c.

According to an embodiment, the image decoding apparatus 100 may determine the width or height of each of the coding units 620a, 620b, and 620c by using the coordinates (xa, ya) that is the information indicating the location of the upper-left sample 630a of the upper coding unit 620a, the coordinates (xb, yb) that is the information indicating the location of the upper-left sample 630b of the middle coding unit 620b, and the coordinates (xc, yc) that are the information indicating the location of the upper-left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment, the image decoding apparatus 100 may determine the width of the upper coding unit 620a to be the width of the current coding unit 600. The image decoding apparatus 100 may determine the height of the upper coding unit 620a to be yb-ya. According to an embodiment, the image decoding apparatus 100 may determine the width of the middle coding unit 620b to be the width of the current coding unit 600. The image decoding apparatus 100 may determine the height of the middle coding unit 620b to be yc-yb. According to an embodiment, the image decoding apparatus 100 may determine the width or height of the lower coding unit 620c by using the width or height of the current coding unit 600 and the widths or heights of the upper and middle coding units 620a and 620b. The image decoding apparatus 100 may determine a coding unit, which has a size different from that of the others, based on the determined widths and heights of the coding units 620a, 620b, and 620c. Referring to FIG. 6, the image decoding apparatus 100 may determine the middle coding unit 620b, which has a size different from the size of the upper and lower coding units 620a and 620c, as the coding unit of the certain location. However, the above-described process in which the image decoding apparatus 100 determines a coding unit having a size different from the size of the other coding units merely corresponds to an example of determining a coding unit at a certain location by using the sizes of coding units, which are determined based on coordinates of samples, and thus various processes of determining a coding unit at a certain location by comparing the sizes of coding units, which are determined based on coordinates of certain samples, may be used.

The image decoding apparatus 100 may determine the width or height of each of the coding units 660a, 660b, and 660c by using coordinates (xd, yd) that are information indicating a location of an upper-left sample 670a of the left coding unit 660a, coordinates (xe, ye) that are information indicating a location of an upper-left sample 670b of the middle coding unit 660b, and coordinates (xf, yf) that are information indicating a location of an upper-left sample 670c of the right coding unit 660c. The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment, the image decoding apparatus 100 may determine the width of the left coding unit 660a to be xe-xd. The image decoding apparatus 100 may determine the height of the left coding unit 660a to be the height of the current coding unit 650. According to an embodiment, the image decoding apparatus 100 may determine the width of the middle coding unit 660b to be xf-xe. The image decoding apparatus 100 may determine the height of the middle coding unit 660b to be the height of the current coding unit 650. According to an embodiment, the image decoding apparatus 100 may determine the width or height of the right coding unit 660c by using the width or height of the current coding unit 650 and the widths or heights of the left and middle coding units 660a and 660b. The image decoding apparatus 100 may determine a coding unit, which has a size different from that of the others, based on the determined widths and heights of the coding units 660a, 660b, and 660c. Referring to FIG. 6, the image decoding apparatus 100 may determine the middle coding unit 660b, which has a size different from the size of the left and right coding units 660a and 660c, as the coding unit of the certain location. However, the above-described process in which the image decoding apparatus 100 determines a coding unit having a size different from the size of the other coding units merely corresponds to an example of determining a coding unit at a certain location by using the sizes of coding units, which are determined based on coordinates of samples, and thus various processes of determining a coding unit at a certain location by comparing the sizes of coding units, which are determined based on coordinates of certain samples, may be used.

However, locations of samples considered to determine locations of coding units are not limited to the above-described upper-left locations, and information about arbitrary locations of samples included in the coding units may be used.

According to an embodiment, the image decoding apparatus 100 may select a coding unit at a certain location from among an odd number of coding units determined by splitting the current coding unit, by considering the shape of the current coding unit. For example, when the current coding unit has a non-square shape, a width of which is longer than a height, the image decoding apparatus 100 may determine the coding unit at the certain location in a horizontal direction. That is, the image decoding apparatus 100 may determine one of coding units at different locations in a horizontal direction and may put a restriction on the coding unit. When the current coding unit has a non-square shape, a height of which is longer than a width, the image decoding apparatus 100 may determine the coding unit at the certain location in a vertical direction. That is, the image decoding apparatus 100 may determine one of coding units at different locations in a vertical direction and may put a restriction on the coding unit.

According to an embodiment, the image decoding apparatus 100 may use information indicating respective locations of an even number of coding units, to determine the coding unit at the certain location from among the even number of coding units. The image decoding apparatus 100 may determine an even number of coding units by splitting (binary splitting) the current coding unit, and may determine the coding unit at the certain location by using the information about the locations of the even number of coding units. An operation related thereto may correspond to the operation of determining a coding unit at a certain location (e.g., a center location) from among an odd number of coding units, which has been described in detail above with reference to FIG. 6, and thus detailed descriptions thereof will be omitted.

According to an embodiment, when a non-square current coding unit is split into a plurality of coding units, certain information about a coding unit at a certain location may be used in a splitting operation to determine the coding unit at the certain location from among the plurality of coding units. For example, the image decoding apparatus 100 may use at least one of block shape information and split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, in consideration of a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment, certain information for identifying the coding unit at the certain location may be obtained from a certain sample included in a coding unit to be determined. Referring to FIG. 6, the image decoding apparatus 100 may use the split shape mode information, which is obtained from a sample at a certain location in the current coding unit 600 (e.g., a sample at a center location of the current coding unit 600) to determine a coding unit at a certain location from among the plurality of the coding units 620a, 620b, and 620c determined by splitting the current coding unit 600 (e.g., a coding unit at a center location from among a plurality of split coding units). That is, the image decoding apparatus 100 may determine the sample at the certain location by considering a block shape of the current coding unit 600, may determine the coding unit 620b including a sample, from which certain information (e.g., the split shape mode information) may be obtained, from among the plurality of coding units 620a, 620b, and 620c determined by splitting the current coding unit 600, and may put a certain restriction on the coding unit 620b. Referring to FIG. 6, according to an embodiment, the image decoding apparatus 100 may determine the sample 640 at the center location of the current coding unit 600 as the sample from which the certain information may be obtained, and may put a certain restriction on the coding unit 620b including the sample 640, in a decoding process. However, the location of the sample from which the certain information may be obtained is not limited to the above-described location, and may include arbitrary locations of samples included in the coding unit 620b to be determined for a restriction.

According to an embodiment, the location of the sample from which the certain information may be obtained may be determined based on the shape of the current coding unit 600. According to an embodiment, the block shape information may indicate whether the current coding unit has a square or non-square shape, and the location of the sample from which the certain information may be obtained may be determined based on the shape. For example, the image decoding apparatus 100 may determine a sample located at a boundary for splitting at least one of a width and height of the current coding unit in half, as the sample from which the certain information may be obtained, by using at least one of information about the width of the current coding unit and information about the height of the current coding unit. As another example, when the block shape information of the current coding unit indicates a non-square shape, the image decoding apparatus 100 may determine one of samples including a boundary for splitting a long side of the current coding unit in half, as the sample from which the certain information may be obtained.

According to an embodiment, when the current coding unit is split into a plurality of coding units, the image decoding apparatus 100 may use the split shape mode information to determine a coding unit at a certain location from among the plurality of coding units. According to an embodiment, the image decoding apparatus 100 may obtain the split shape mode information from a sample at a certain location in a coding unit, and may split the plurality of coding units, which are generated by splitting the current coding unit, by using the split shape mode information, which is obtained from the sample of the certain location in each of the plurality of coding units. That is, a coding unit may be recursively split based on the split shape mode information, which is obtained from the sample at the certain location in each coding unit. A process of recursively splitting a coding unit has been described above with reference to FIG. 5, and thus detailed descriptions thereof will be omitted.

According to an embodiment, the image decoding apparatus 100 may determine one or more coding units by splitting the current coding unit, and may determine an order of decoding the one or more coding units, based on a certain block (e.g., the current coding unit).

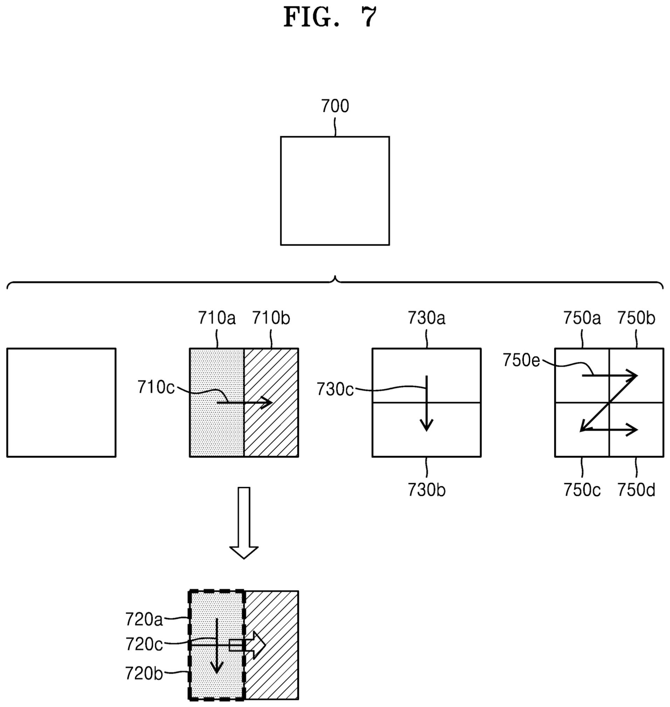

FIG. 7 illustrates an order of processing a plurality of coding units when the image decoding apparatus determines the plurality of coding units by splitting the current coding unit, according to an embodiment.

According to an embodiment, the image decoding apparatus 100 may determine second coding units 710a and 710b by splitting a first coding unit 700 in a vertical direction, may determine second coding units 730a and 730b by splitting the first coding unit 700 in a horizontal direction, or may determine second coding units 750a, 750b, 750c, and 750d by splitting the first coding unit 700 in vertical and horizontal directions, based on split shape mode information.

Referring to FIG. 7, the image decoding apparatus 100 may determine to process the second coding units 710a and 710b, which are determined by splitting the first coding unit 700 in a vertical direction, in a horizontal direction order 710c. The image decoding apparatus 100 may determine to process the second coding units 730a and 730b, which are determined by splitting the first coding unit 700 in a horizontal direction, in a vertical direction order 730c. The image decoding apparatus 100 may determine to process the second coding units 750a, 750b, 750c, and 750d, which are determined by splitting the first coding unit 700 in vertical and horizontal directions, according to a certain order (e.g., a raster scan order or Z-scan order 750e) by which coding units in a row are processed and then coding units in a next row are processed.

According to an embodiment, the image decoding apparatus 100 may recursively split coding units. Referring to FIG. 7, the image decoding apparatus 100 may determine the plurality of coding units 710a and 710b, 730a and 730b, or 750a, 750b, 750c, and 750d by splitting the first coding unit 700, and may recursively split each of the determined plurality of coding units 710a, 710b, 730a, 730b, 750a, 750b, 750c, and 750d. A splitting method of the plurality of coding units 710a and 710b, 730a and 730b, or 750a, 750b, 750c, and 750d may correspond to a splitting method of the first coding unit 700. Accordingly, each of the plurality of coding units 710a and 710b, 730a and 730b, or 750a, 750b, 750c, and 750d may be independently split into a plurality of coding units. Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment, the image decoding apparatus 100 may determine third coding units 720a and 720b by splitting the left second coding unit 710a in a horizontal direction, and may not split the right second coding unit 710b.

According to an embodiment, a processing order of coding units may be determined based on a process of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c. A process of determining a processing order of coding units based on a coding unit before being split is not limited to the above-described example, and various methods may be used to independently process coding units, which are split and determined to various shapes, in a certain order.

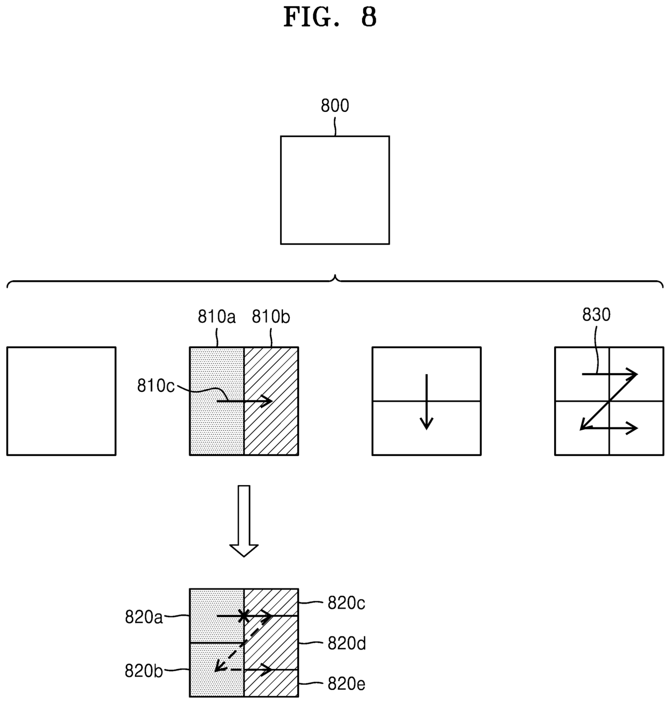

FIG. 8 illustrates a process in which the image decoding apparatus determines that the current coding unit is to be split into an odd number of coding units, when the coding units are not processable in a certain order, according to an embodiment.

According to an embodiment, the image decoding apparatus 100 may determine that the current coding unit is to be split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c, 820d, and 820e. According to an embodiment, the image decoding apparatus 100 may determine the plurality of third coding units 820a and 820b by splitting the left second coding unit 810a in a horizontal direction, and may split the right second coding unit 810b into the odd number of third coding units 820c, 820d, and 820e.

According to an embodiment, the image decoding apparatus 100 may determine whether any coding unit is split into an odd number of coding units, by determining whether the third coding units 820a and 820b, and 820c, 820d, and 820e are processable in a certain order. Referring to FIG. 8, the image decoding apparatus 100 may determine the third coding units 820a and 820b, and 820c, 820d, and 820e by recursively splitting the first coding unit 800. The image decoding apparatus 100 may determine whether any of the first coding unit 800, the second coding units 810a and 810b, or the third coding units 820a and 820b, and 820c, 820d, and 820e are split into an odd number of coding units, based on at least one of the block shape information and the split shape mode information. For example, a right coding unit from among the second coding units 810a and 810b may be split into an odd number of third coding units 820c, 820d, and 820e. A processing order of a plurality of coding units included in the first coding unit 800 may be a certain order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the certain order.

According to an embodiment, the image decoding apparatus 100 may determine whether the third coding units 820a and 820b, and 820c, 820d, and 820e included in the first coding unit 800 satisfy the condition for processing in the certain order, and the condition relates to whether at least one of a width and height of the second coding units 810a and 810b is to be split in half along a boundary of the third coding units 820a and 820b, and 820c, 820d, and 820e. For example, the third coding units 820a and 820b determined when the height of the left second coding unit 810a of the non-square shape is split in half may satisfy the condition. It may be determined that the third coding units 820c, 820d, and 820e do not satisfy the condition because the boundaries of the third coding units 820c, 820d, and 820e determined when the right second coding unit 810b is split into three coding units are unable to split the width or height of the right second coding unit 810b in half. When the condition is not satisfied as described above, the image decoding apparatus 100 may decide disconnection of a scan order, and may determine that the right second coding unit 810b is to be split into an odd number of coding units, based on a result of the decision. According to an embodiment, when a coding unit is split into an odd number of coding units, the image decoding apparatus 100 may put a certain restriction on a coding unit at a certain location from among the split coding units. The restriction or the certain location has been described above through various embodiments, and thus detailed descriptions thereof will be omitted.

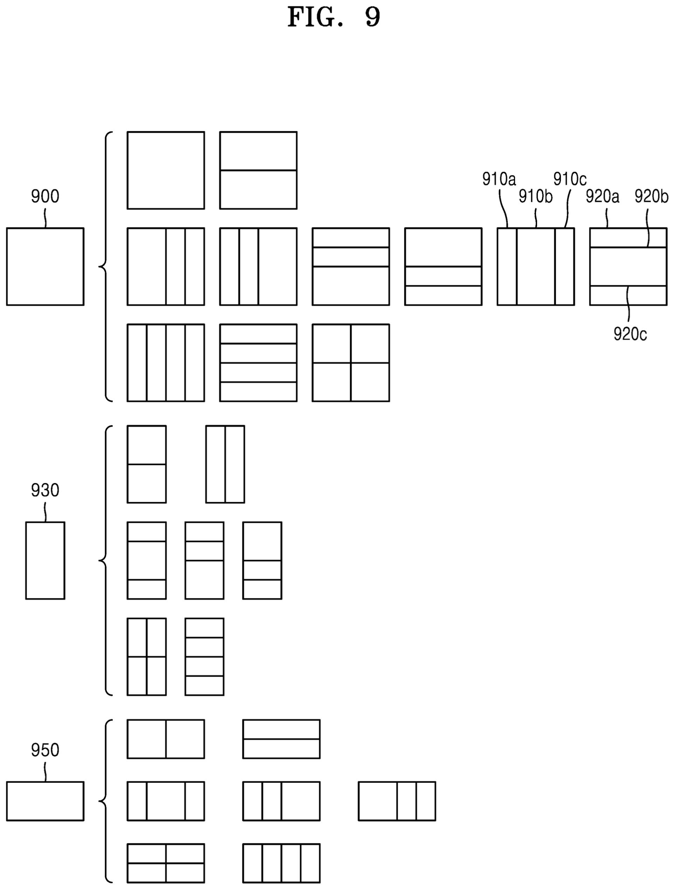

FIG. 9 illustrates a process in which the image decoding apparatus determines at least one coding unit by splitting a first coding unit, according to an embodiment.

According to an embodiment, the image decoding apparatus 100 may split the first coding unit 900, based on split shape mode information, which is obtained by the receiver 110. The square first coding unit 900 may be split into four square coding units, or may be split into a plurality of non-square coding units. For example, referring to FIG. 9, when the first coding unit 900 has a square shape and the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units, e.g., second coding units 910a, 910b, and 910c determined by splitting the square first coding unit 900 in a vertical direction or second coding units 920a, 920b, and 920c determined by splitting the square first coding unit 900 in a horizontal direction.

According to an embodiment, the image decoding apparatus 100 may determine whether the second coding units 910a, 910b, 910c, 920a, 920b, and 920c included in the first coding unit 900 satisfy a condition for processing in a certain order, and the condition relates to whether at least one of a width and height of the first coding unit 900 is to be split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the certain order. Also, because boundaries of the second coding units 920a, 920b, and 920c determined by splitting the square first coding unit 900 in a horizontal direction do not split the width of the first coding unit 900 in half, it may be determined that the first coding unit 900 does not satisfy the condition for processing in the certain order. When the condition is not satisfied as described above, the image decoding apparatus 100 may decide disconnection of a scan order, and may determine that the first coding unit 900 is to be split into an odd number of coding units, based on a result of the decision. According to an embodiment, when a coding unit is split into an odd number of coding units, the image decoding apparatus 100 may put a certain restriction on a coding unit at a certain location from among the split coding units. The restriction or the certain location has been described above through various embodiments, and thus detailed descriptions thereof will be omitted.

According to an embodiment, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

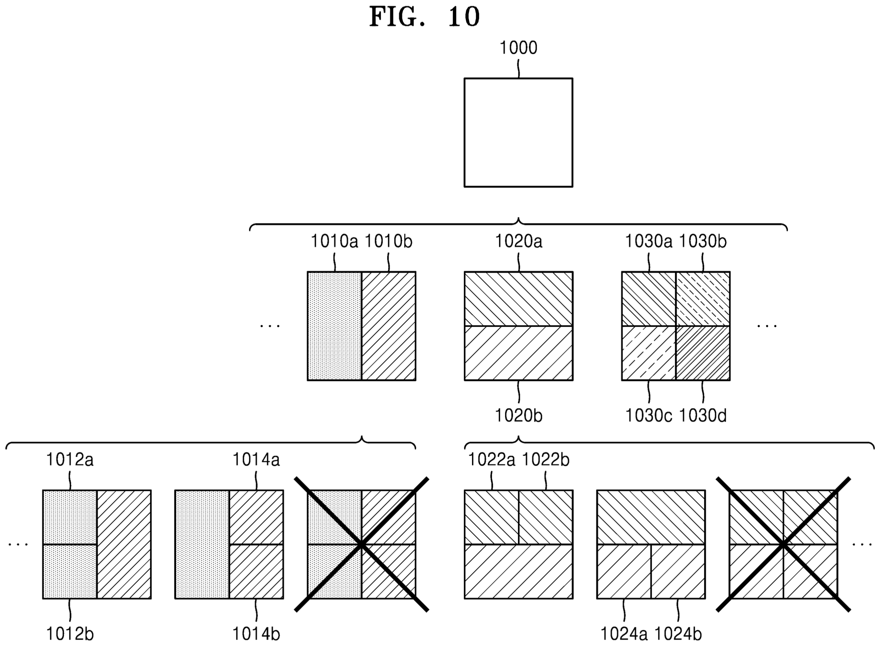

FIG. 10 illustrates that a shape into which a second coding unit is splittable is restricted when the second coding unit having a non-square shape, which is determined when the image decoding apparatus splits a first coding unit, satisfies a certain condition, according to an embodiment.

According to an embodiment, the image decoding apparatus 100 may determine to split the square first coding unit 1000 into non-square second coding units 1010a, and 1010b or 1020a and 1020b, based on split shape mode information, which is obtained by the receiver 110. The second coding units 1010a and 1010b, or 1020a and 1020b may be independently split. Accordingly, the image decoding apparatus 100 may determine to split or not to split each of the second coding units 1010a and 1010b, or 1020a and 1020b into a plurality of coding units, based on the split shape mode information of each of the second coding units 1010a and 1010b, or 1020a and 1020b. According to an embodiment, the image decoding apparatus 100 may determine third coding units 1012a and 1012b by splitting the non-square left second coding unit 1010a, which is determined by splitting the first coding unit 1000 in a vertical direction, in a horizontal direction. However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in the same direction, because the left and right second coding units 1010a and 1010b are independently split in a horizontal direction, the third coding units 1012a, 1012b, 1014a, and 1014b may be determined. However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

According to an embodiment, the image decoding apparatus 100 may determine third coding units 1022a and 1022b, or 1024a and 1024b by splitting the non-square second coding unit 1020a or 1020b, which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) not to be split in a vertical direction in which the upper second coding unit 1020a is split.

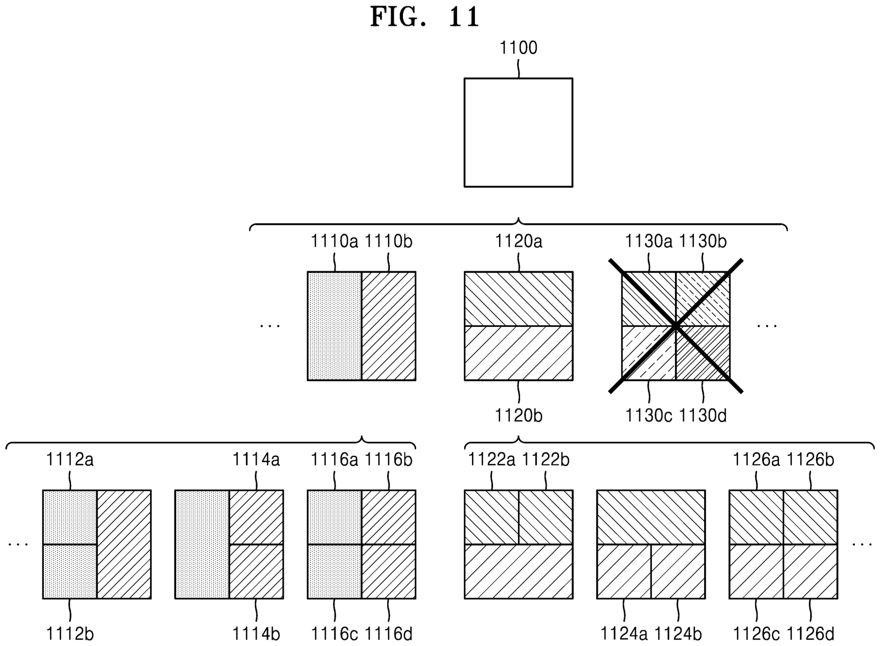

FIG. 11 illustrates a process in which the image decoding apparatus splits a square coding unit when split shape mode information indicates that the square coding unit is not to be split into four square coding units, according to an embodiment.

According to an embodiment, the image decoding apparatus 100 may determine second coding units 1110a and 1110b, or 1120a and 1120b, etc. by splitting a first coding unit 1100, based on split shape mode information. The split shape mode information may include information about various methods of splitting a coding unit but, the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. The image decoding apparatus 100 may determine the non-square second coding units 1110a and 1110b, or 1120a and 1120b, etc., based on the split shape mode information.

According to an embodiment, the image decoding apparatus 100 may independently split the non-square second coding units 1110a and 1110b, or 1120a and 1120b, etc. Each of the second coding units 1110a and 1110b, or 1120a and 1120b, etc. may be recursively split in a certain order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both the upper and lower second coding units 1120a and 1120b in a vertical direction. In this case, coding units having the same shape as the four square second coding units 1130a, 1130b, 1130c, and 1130d split from the first coding unit 1100 may be determined.

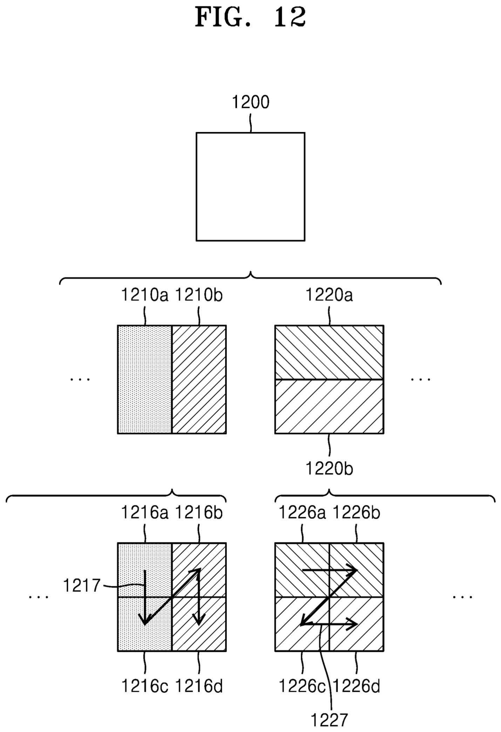

FIG. 12 illustrates that a processing order between a plurality of coding units may vary according to a process of splitting a coding unit, according to an embodiment.

According to an embodiment, the image decoding apparatus 100 may split a first coding unit 1200, based on split shape mode information. When a block shape indicates a square shape and the split shape mode information indicates to split the first coding unit 1200 in at least one of horizontal and vertical directions, the image decoding apparatus 100 may determine second coding units (e.g., 1210a and 1210b, or 1220a and 1220b, etc.) by splitting the first coding unit 1200. Referring to FIG. 12, the non-square second coding units 1210a and 1210b, or 1220a and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a horizontal direction. A process of splitting the second coding units 1210a and 1210b, or 1220a and 1220b has been described above with reference to FIG. 11, and thus detailed descriptions thereof will be omitted.

According to an embodiment, the image decoding apparatus 100 may process coding units in a certain order. An operation of processing coding units in a certain order has been described above with reference to FIG. 7, and thus detailed descriptions thereof will be omitted. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment, the image decoding apparatus 100 may determine processing orders of the third coding units 1216a, 1216b, 1216c, and 1216d, and 1226a, 1226b, 1226c, and 1226d based on a split shape into which the first coding unit 1200 is split.

According to an embodiment, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. As such, by recursively splitting a coding unit in different manners based on the split shape mode information, the image decoding apparatus 100 may process a plurality of coding units in different orders even when the coding units are eventually determined to have the same shape.

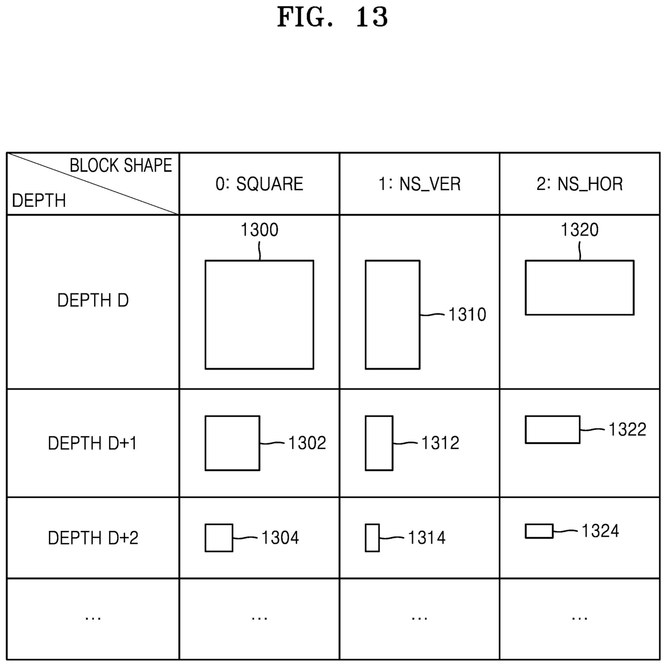

FIG. 13 illustrates a process of determining a depth of a coding unit as a shape and a size of the coding unit change, when the coding unit is recursively split to determine a plurality of coding units, according to an embodiment.

According to an embodiment, the image decoding apparatus 100 may determine a depth of a coding unit, based on a certain criterion. For example, the certain criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. In the following descriptions, a coding unit having an increased depth is represented as a coding unit of a lower depth.

Referring to FIG. 13, according to an embodiment, the image decoding apparatus 100 may determine a second coding unit 1302 and a third coding unit 1304 of lower depths by splitting a square first coding unit 1300 based on block shape information indicating a square shape (e.g., the block shape information may be represented as '0: SQUARE'). Assuming that the size of the square first coding unit 1300 is 2NX2N, the second coding unit 1302 determined by splitting a width and height of the first coding unit 1300 in 1/2 may have a size of NXN. Furthermore, the third coding unit 1304 determined by splitting a width and height of the second coding unit 1302 in 1/2 may have a size of N/2XN/2. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment, the image decoding apparatus 100 may determine a second coding unit 1312 or 1322 and a third coding unit 1314 or 1324 of lower depths by splitting a non-square first coding unit 1310 or 1320 based on block shape information indicating a non-square shape (e.g., the block shape information may be represented as '1: NS_VER' indicating a non-square shape, a height of which is longer than a width, or as '2: NS_HOR' indicating a non-square shape, a width of which is longer than a height).

The image decoding apparatus 100 may determine the second coding unit 1302, 1312, or 1322 by splitting at least one of a width and height of the first coding unit 1310 having a size of NX2N. That is, the image decoding apparatus 100 may determine the second coding unit 1302 having a size of NXN or the second coding unit 1322 having a size of NXN/2 by splitting the first coding unit 1310 in a horizontal direction, or may determine the second coding unit 1312 having a size of N/2XN by splitting the first coding unit 1310 in horizontal and vertical directions.

According to an embodiment, the image decoding apparatus 100 may determine a second coding unit (e.g., 1302, 1312, or 1322) by splitting at least one of a width and height of the first coding unit 1320 having a size of 2NXN. That is, the image decoding apparatus 100 may determine the second coding unit 1302 having a size of NXN or the second coding unit 1312 having a size of N/2XN by splitting the first coding unit 1320 in a vertical direction, or may determine the second coding unit 1322 having a size of NXN/2 by splitting the first coding unit 1320 in horizontal and vertical directions.

According to an embodiment, the image decoding apparatus 100 may determine a third coding unit (e.g., 1304, 1314, or 1324) by splitting at least one of a width and height of the second coding unit 1302 having a size of NXN. That is, the image decoding apparatus 100 may determine the third coding unit 1304 having a size of N/2XN/2, the third coding unit 1314 having a size of N/4XN/2, or the third coding unit 1324 having a size of N/2XN/4 by splitting the second coding unit 1302 in vertical and horizontal directions.

According to an embodiment, the image decoding apparatus 100 may determine a third coding unit (e.g., 1304, 1314, or 1324) by splitting at least one of a width and height of the second coding unit 1312 having a size of N/2XN. That is, the image decoding apparatus 100 may determine the third coding unit 1304 having a size of N/2XN/2 or the third coding unit 1324 having a size of N/2XN/4 by splitting the second coding unit 1312 in a horizontal direction, or may determine the third coding unit 1314 having a size of N/4XN/2 by splitting the second coding unit 1312 in vertical and horizontal directions.

According to an embodiment, the image decoding apparatus 100 may determine a third coding unit (e.g., 1304, 1314, or 1324) by splitting at least one of a width and height of the second coding unit 1322 having a size of NXN/2. That is, the image decoding apparatus 100 may determine the third coding unit 1304 having a size of N/2XN/2 or the third coding unit 1314 having a size of N/4XN/2 by splitting the second coding unit 1322 in a vertical direction, or may determine the third coding unit 1324 having a size of N/2XN/4 by splitting the second coding unit 1322 in vertical and horizontal directions.

According to an embodiment, the image decoding apparatus 100 may split a square coding unit (e.g., 1300, 1302, or 1304) in a horizontal or vertical direction. For example, the image decoding apparatus 100 may determine the first coding unit 1310 having a size of NX2N by splitting the first coding unit 1300 having a size of 2NX2N in a vertical direction, or may determine the first coding unit 1320 having a size of 2NXN by splitting the first coding unit 1300 in a horizontal direction. According to an embodiment, when a depth is determined based on the length of a longest side of a coding unit, a depth of a coding unit determined by splitting the first coding unit 1300 having a size of 2NX2N in a horizontal or vertical direction may be the same as the depth of the first coding unit 1300.

According to an embodiment, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

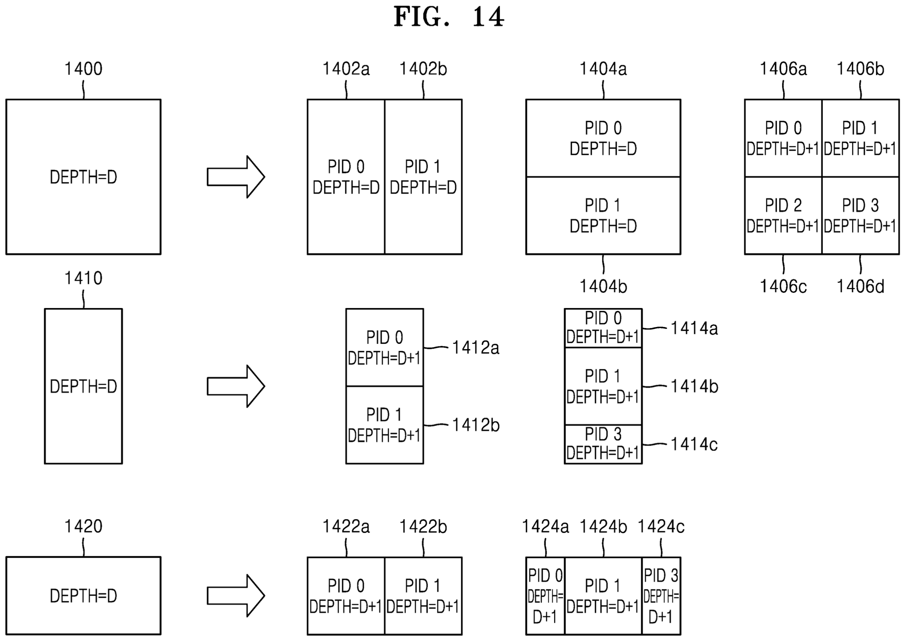

FIG. 14 illustrates depths that are determinable based on shapes and sizes of coding units, and part indexes (PIDs) that are for distinguishing the coding units, according to an embodiment.

According to an embodiment, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of vertical and horizontal directions based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment, depths of the second coding units 1402a and 1402b, 1404a and 1404b, and 1406a, 1406b, 1406c, and 1406d that are determined based on the split shape mode information of the square first coding unit 1400 may be determined based on the length of a long side thereof. For example, because the length of a side of the square first coding unit 1400 equals the length of a long side of the non-square second coding units 1402a and 1402b, and 1404a and 1404b, the first coding unit 1400 and the non-square second coding units 1402a and 1402b, and 1404a and 1404b may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is deeper than the depth D of the first coding unit 1400 by 1.

According to an embodiment, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment, a depth of the second coding units 1412a and 1412b, and 1414a, 1414b, and 1414c, or 1422a and 1422b, and 1424a, 1424b, and 1424c, which are determined based on the split shape mode information of the non-square first coding unit 1410 or 1420, may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is deeper than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is deeper than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment, the image decoding apparatus 100 may determine PIDs for identifying split coding units, based on a size ratio between the coding units when an odd number of split coding units do not have the same size. Referring to FIG. 14, the coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Accordingly, when a PID of the coding unit 1414b at the center location is 1 based on a scan order, a PID of the coding unit 1414c located next to the coding unit 1414b may be increased by 2 and thus may be 3. That is, discontinuity in PID values may be present. According to an embodiment, the image decoding apparatus 100 may determine whether an odd number of split coding units do not have the same size, based on whether discontinuity is present in PIDs for identifying the split coding units.

According to an embodiment, the image decoding apparatus 100 may determine whether to use a specific splitting method, based on PID values for identifying a plurality of coding units determined by splitting the current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify the respective coding units. According to an embodiment, the PID may be obtained from a sample at a certain location of each coding unit (e.g., an upper-left sample).

According to an embodiment, the image decoding apparatus 100 may determine a coding unit at a certain location from among the split coding units, by using the PIDs for distinguishing the coding units. According to an embodiment, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units to determine a coding unit at a center location from among the coding units. The image decoding apparatus 100 may determine the coding unit 1414b having a PID corresponding to a middle value among the PIDs of the coding units, as the coding unit at the center location from among the coding units determined by splitting the first coding unit 1410. According to an embodiment, the image decoding apparatus 100 may determine PIDs for distinguishing split coding units, based on a size ratio between the coding units when the split coding units do not have the same size. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus may be 3. When the PID is not uniformly increased as described above, the image decoding apparatus 100 may determine that a coding unit is split into a plurality of coding units including a coding unit having a size different from that of the other coding units. According to an embodiment, when the split shape mode information indicates to split a coding unit into an odd number of coding units, the image decoding apparatus 100 may split the current coding unit in such a manner that a coding unit of a certain location among an odd number of coding units (e.g., a coding unit of a center location) has a size different from that of the other coding units. In this case, the image decoding apparatus 100 may determine the coding unit of the center location, which has a different size, by using PIDs of the coding units. However, the PIDs and the size or location of the coding unit of the certain location to be determined are not limited to the above-described examples, and various PIDs and various locations and sizes of coding units may be used.

According to an embodiment, the image decoding apparatus 100 may use a certain data unit where a coding unit starts to be recursively split.

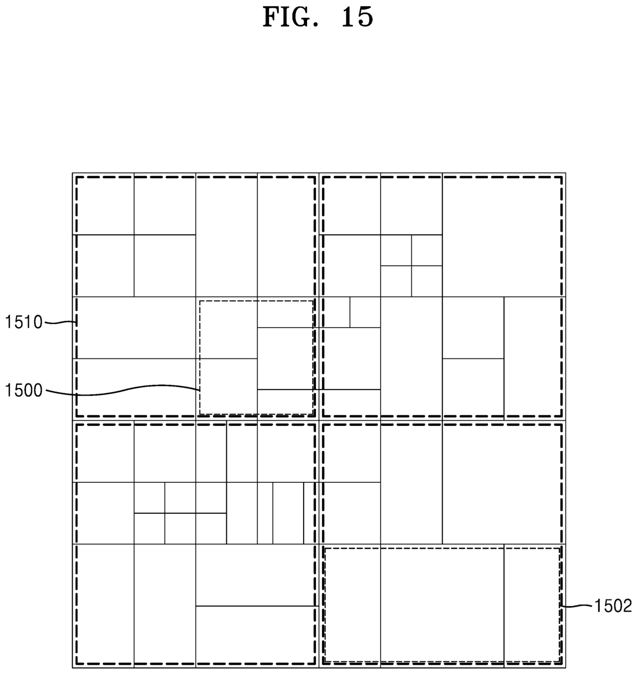

FIG. 15 illustrates that a plurality of coding units are determined based on a plurality of certain data units included in a picture, according to an embodiment.

According to an embodiment, a certain data unit may be defined as a data unit where a coding unit starts to be recursively split by using split shape mode information. That is, the certain data unit may correspond to a coding unit of an uppermost depth, which is used to determine a plurality of coding units split from the current picture. In the following descriptions, for convenience of explanation, the certain data unit is referred to as a reference data unit.

According to an embodiment, the reference data unit may have a certain size and a certain shape. According to an embodiment, a reference coding unit may include MxN samples. Herein, M and N may be equal to each other, and may be integers represented as powers of 2. That is, the reference data unit may have a square or non-square shape, and may be split into an integer number of coding units.

According to an embodiment, the image decoding apparatus 100 may split the current picture into a plurality of reference data units. According to an embodiment, the image decoding apparatus 100 may split the plurality of reference data units, which are split from the current picture, by using the split shape mode information of each reference data unit. The process of splitting the reference data unit may correspond to a splitting process using a quadtree structure.

According to an embodiment, the image decoding apparatus 100 may predetermine a minimum size allowed for the reference data units included in the current picture. Accordingly, the image decoding apparatus 100 may determine reference data units having various sizes equal to or greater than the minimum size, and may determine one or more coding units by using the split shape mode information with reference to the determined reference data unit.

Referring to FIG. 15, the image decoding apparatus 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, tiles, tile groups, largest coding units, or the like).

According to an embodiment, the receiver 110 of the image decoding apparatus 100 may obtain, from a bitstream, at least one of reference coding unit shape information and reference coding unit size information for each of the various data units. A process of splitting the square reference coding unit 1500 into one or more coding units has been described above in relation to the process of splitting the current coding unit 300 of FIG. 3, and a process of splitting the non-square reference coding unit 1502 into one or more coding units has been described above in relation to the process of splitting the current coding unit 400 or 450 of FIG. 4, and thus detailed descriptions thereof will be omitted.

According to an embodiment, the image decoding apparatus 100 may use an index for identifying the size and shape of reference coding units, to determine the size and shape of reference coding units according to some data units pre-determined based on a certain condition. That is, the receiver 110 may obtain, from the bitstream, only the index for identifying the size and shape of reference coding units with respect to each slice, slice segment, tile, tile group, or largest coding unit which is a data unit satisfying a certain condition (e.g., a data unit having a size equal to or smaller than a slice) among the various data units (e.g., sequences, pictures, slices, slice segments, tiles, tile groups, largest coding units, or the like). The image decoding apparatus 100 may determine the size and shape of reference data units for each data unit, which satisfies the certain condition, by using the index. When the reference coding unit shape information and the reference coding unit size information are obtained and used from the bitstream according to each data unit having a relatively small size, the efficiency of using the bitstream may not be high, and therefore, only the index may be obtained and used instead of directly obtaining the reference coding unit shape information and the reference coding unit size information. In this case, at least one of the size and shape of reference coding units corresponding to the index for identifying the size and shape of reference coding units may be pre-determined. That is, the image decoding apparatus 100 may determine at least one of the size and shape of reference coding units included in a data unit serving as a unit for obtaining the index, by selecting the pre-determined at least one of the size and shape of reference coding units based on the index.

According to an embodiment, the image decoding apparatus 100 may use one or more reference coding units included in a largest coding unit. That is, a largest coding unit split from a picture may include one or more reference coding units, and coding units may be determined by recursively splitting each reference coding unit. According to an embodiment, at least one of a width and height of the largest coding unit may be integer times at least one of the width and height of the reference coding units. According to an embodiment, the size of reference coding units may be obtained by splitting the largest coding unit n times based on a quadtree structure. That is, the image decoding apparatus 100 may determine the reference coding units by splitting the largest coding unit n times based on a quadtree structure, and may split the reference coding unit based on at least one of the block shape information and the split shape mode information according to various embodiments.

According to an embodiment, the image decoding apparatus 100 may obtain block shape information indicating the shape of the current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, syntax information (e.g., a syntax element) corresponding to the block shape information or the split shape mode information according to each largest coding unit, each reference coding unit, or each processing block, and may use the obtained syntax element.

Hereinafter, a method of determining a split rule according to an embodiment of the disclosure will be described in detail.

The image decoding apparatus 100 may determine a split rule of an image. The split rule may be pre-determined between the image decoding apparatus 100 and the image encoding apparatus 200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, and a tile group header. The image decoding apparatus 100 may determine the split rule differently according to frames, slices, tiles, temporal layers, largest coding units, or coding units.

The image decoding apparatus 100 may determine the split rule based on a block shape of a coding unit. The block shape may include a size, a shape, a ratio of width and height, and a direction of the coding unit. The image decoding apparatus 100 may predetermine to determine the split rule based on the block shape of the coding unit. However, an embodiment is not limited thereto. The image decoding apparatus 100 may determine the split rule based on the information obtained from the received bitstream.

The shape of the coding unit may include a square and a non-square. When the lengths of the width and height of the coding unit are the same, the image decoding apparatus 100 may determine the shape of the coding unit to be a square. Also, when the lengths of the width and height of the coding unit are not the same, the image decoding apparatus 100 may determine the shape of the coding unit to be a non-square.

The size of the coding unit may include various sizes, such as 4x4, 8x4, 4x8, 8x8, 16x4, 16x8, ··· and 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of long sides as having the same size. Also, the image decoding apparatus 100 may apply the same split rule to coding units having the same lengths of long sides.

The ratio of the width and height of the coding unit may include 1:2, 2:1, 1:4, 4:1, 1:8, 8:1, 1:16, 16:1, 32:1, 1:32, or the like. Also, the direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

The split rule determined based on the size of the coding unit may be a split rule pre-determined at the image decoding apparatus 100. Also, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

Also, the image decoding apparatus 100 may determine the split rule so that coding units generated via different splitting paths do not have the same block shape. However, an embodiment is not limited thereto, and the coding units generated via different splitting paths have the same block shape. The coding units generated via the different splitting paths may have different decoding processing orders. Because the decoding processing orders have been described above with reference to FIG. 12, detailed descriptions thereof will be omitted.

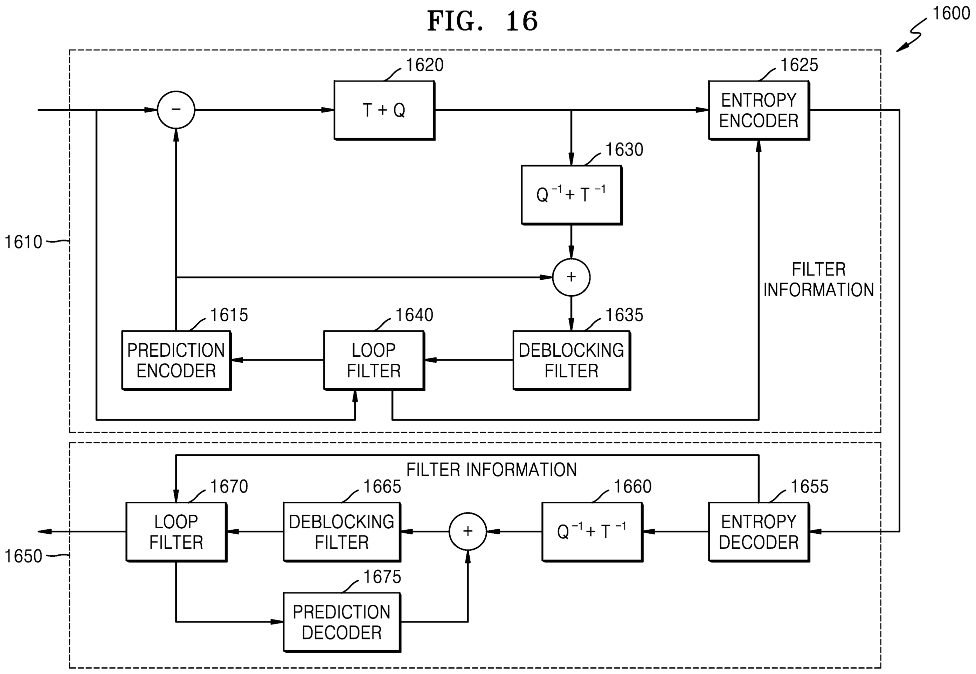

FIG. 16 is a block diagram of an image encoding and decoding system.

An encoding end 1610 (e.g., the image encoding apparatus 200) of an image encoding and decoding system 1600 transmits an encoded bitstream of an image, and a decoding end 1650 (e.g., the image decoding apparatus 100) of the image encoding and decoding system 1600 receives a bitstream and decodes the bitstream to output a reconstructed image. The decoding end 1650 may be a configuration that is similar to the image decoding apparatus 100.

In the encoding end 1610, a prediction encoder 1615 outputs a reference image through inter-prediction and intra-prediction, and a transformer and quantizer 1616 quantizes residual data between the reference image and a current input image into a quantized transform coefficient and outputs the quantized transform coefficient. An entropy encoder 1625 encodes the quantized transform coefficient and outputs the encoded quantized transform coefficient as the bitstream. The quantized transform coefficient is reconstructed into data of a spatial domain via an inverse quantizer and inverse transformer 1630, and the reconstructed data of the spatial domain may be output as a reconstructed image via a deblocking filter 1635 and a loop filter 1640. The reconstructed image may be used as a reference image of a next input image in the prediction encoder 1615.

Encoded image data among the bitstream received by the decoding end 1650 is reconstructed as residual data of a spatial domain via an entropy decoder 1655 and an inverse quantizer and inverse transformer 1660. Image data of a spatial domain may be constructed when a reference image output by a prediction decoder 1675 and the residual data are combined, and a deblocking filter 1665 and a loop filter 1670 may output a reconstructed image for the current original image by performing filtering on the image data of the spatial domain. The reconstructed image may be used as a reference image for a next original image by the prediction decoder 1675.

The loop filter 1640 of the encoding end 1610 performs loop filtering by using filter information input according to a user input or system settings. Filter information used by the loop filter 1640 is output to the entropy encoder 1610 and transmitted to the decoding end 1650 along with the encoded image data. The loop filter 1670 of the decoding end 1650 may perform loop filtering based on the filter information input from the decoding end 1650.

In the disclosure, a "tree structure' may refer to a hierarchical structure of one or more coding units formed according to whether a splitting mode of a coding unit is a quad split, a binary split, a ternary split, or a non-split. For example, the hierarchical structure of blocks generated from the current coding unit according to the splitting process of FIG. 5 is referred to as a tree structure.

In the disclosure, 'availability of a block' refers to whether the block has already been encoded or decoded and thus information of the block may be obtained. In detail, in an encoding process, when the current block has already been encoded, a neighboring block may be encoded using encoding information of the current block, so the current block may be displayed as available. When the current block is not encoded, the current block may be displayed as unavailable. Likewise, in a decoding process, when the current block has already been decoded, a neighboring block may be decoded using encoding information of the current block, so the current block may be displayed as available. When the current block is not decoded, the current block may be displayed as unavailable.

In the disclosure, 'availability of motion information of a block' refers to whether motion prediction for the block (prediction other than prediction according to an intra mode or intra block copy mode) may be performed and thus motion information (a motion vector, a prediction direction (L0-pred, L1-pred or Bi-pred), and a reference picture index) of the block may be obtained. In detail, in an encoding process, when motion prediction has already been performed for the current block and motion information of the current block exists, motion prediction of a neighboring block may be performed using the motion information of the current block, so the motion information of the current block may be displayed as available. In an encoding process, when motion prediction is not performed for the current block, the motion information of the current block may be displayed as unavailable. Likewise, in a decoding process, when motion prediction has already been performed for the current block and motion information of the current block exists, motion prediction of a neighboring block may be performed using the motion information of the current block, so the motion information of the current block may be displayed as available. In a decoding process, when motion prediction is not performed for the current block, the motion information of the current block may be displayed as unavailable.

In the disclosure, a 'merge candidate' may correspond to a motion vector corresponding to a neighboring block of the current block. Because a prediction motion vector of the current block is determined from a motion vector of the neighboring block, each prediction motion vector may correspond to the neighboring block. Therefore, in the disclosure, for convenience of explanation, a 'merge candidate' is described as corresponding to a motion vector of a neighboring block or corresponding to a neighboring block, and there is no difference in meaning between the two expressions.

In the disclosure, an 'affine merge candidate' may correspond to control point vectors corresponding to a neighboring block or block group of the current block. Because control point vectors are determined from the motion vectors of the neighboring block or the control point vectors are determined based on motion vectors of neighboring blocks belonging to a block group, each of the control point vectors may correspond to a corresponding neighboring block or a corresponding block group. Therefore, in the disclosure, for convenience of explanation, an 'affine merge candidate' is described as corresponding to control point vectors determined from a neighboring block or block group or corresponding to a neighboring block or a block group, and there is no difference in meaning between the two expressions.

In the disclosure, a 'motion vector prediction (MVP) candidate' may correspond to motion vectors corresponding to a neighboring block of the current block. Because a prediction motion vector of the current block is determined from a motion vector of the neighboring block, each prediction motion vector may correspond to the neighboring block. Therefore, in the disclosure, for convenience of explanation, a 'MVP candidate' is described as corresponding to a motion vector of a neighboring block or corresponding to a neighboring block, and there is no difference in meaning between the two expressions.

The 'merge candidate' is a neighboring block (or a motion vector of a neighboring block) used in a merge mode among inter prediction methods, whereas the 'MVP candidate' corresponds to a neighboring block (or a motion vector of a neighboring block) used in an AMVP mode among inter prediction methods. In the merge mode, the motion vector of the current block may be not only determined using a motion vector of the merge candidate, but also a prediction direction of and a reference picture index of the current block may be determined using a prediction direction (L0-pred, L1-pred, or bi-pred) of and a reference picture index of the merge candidate. On the other hand, in the AMVP mode, the motion vector of the current block may be determined using a motion vector of the MVP candidate, but a prediction direction of and a reference picture index of the current block may be determined separately from a prediction direction of and a reference picture index of the MVP candidate.

PROPOSED METHOD ACCODING TO THE DISCLOSURE

The disclosure proposes an image encoding method based on residual prediction, an apparatus for performing the image encoding method, an image decoding method, an apparatus for performing the image decoding method, a method of storing or obtaining a bitstream, an apparatus for performing the method of storing or obtaining a bitstream, and a non-transitory storage medium storing a bitstream.

In general, a picture sequence (or a video) has continuous characteristics, so there is a high degree of similarity between pictures. Accordingly, inter prediction utilizing similarity between different pictures provides relatively high prediction performance, requires a relatively small number of bits to code a residual signal representing a difference between an original image and a predicted image, and provides relatively high coding efficiency. In contrast, in the case of intra prediction, a predicted value of a pixel of the current block in the current picture is determined using a decoded neighboring sample (or a sample of a neighboring block) of the current block as a reference sample. Because it is general that the decoded neighboring sample of the current block (or the sample of the neighboring block) have similar characteristics to those of the current block but does not properly represent the characteristics of the current block, the prediction performance of intra prediction is relatively lower than that of inter prediction, the number of bits required to code the residual signal representing the difference between the original image and the predicted image is relatively large, and the coding efficiency is relatively low.

The disclosure proposes a method of applying residual prediction to intra prediction as a method for reducing the number of bits necessary for coding a residual signal determined by intra prediction and improving coding efficiency. Although the disclosure describes the proposed method by focusing on intra prediction based on residual prediction, the proposed method according to the disclosure may be equally/similarly applied also to inter prediction. That is, application of a proposed method of the disclosure is not limited to intra prediction.

In addition, image encoding and image decoding need to be performed in a corresponding manner so that a decoder may correctly reconstruct the encoded image. Therefore, an intra prediction mode used in image encoding is generally signaled to a decoder through a bitstream, and the intra prediction mode is signaled for each block of a certain unit, and thus a considerable number of bits may be needed for signaling the intra prediction mode.

The disclosure proposes, as a method for reducing the number of bits necessary for signaling an intra prediction mode, a method of determining an intra prediction mode on a decoder side without signaling the intra prediction mode through a bitstream.

In this specification, for convenience of explanation, terms are expressed as follows.

$C$: current block

$R$: reference block

$C_{org}$: original signal of current block

$C_{pred}$: prediction signal of current block

$C_{res}$: residual signal of current block

$R_{rec}$: reconstructed signal of reference block

$R_{pred}$: (simulated) prediction signal of reference block

$R_{res}$: (simulated) residual signal of reference block

Tc: template of current block

$T_{R}$: template of reference block

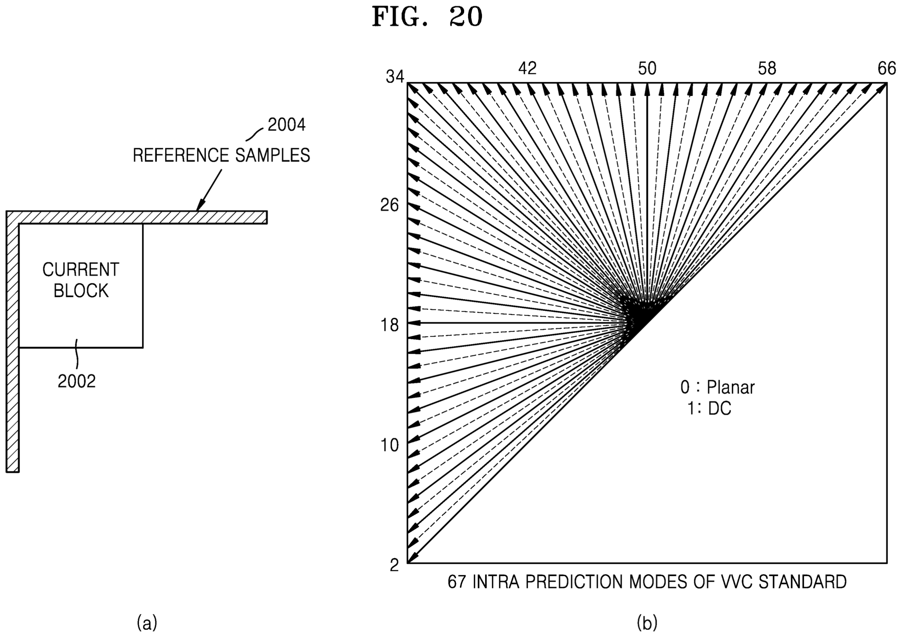

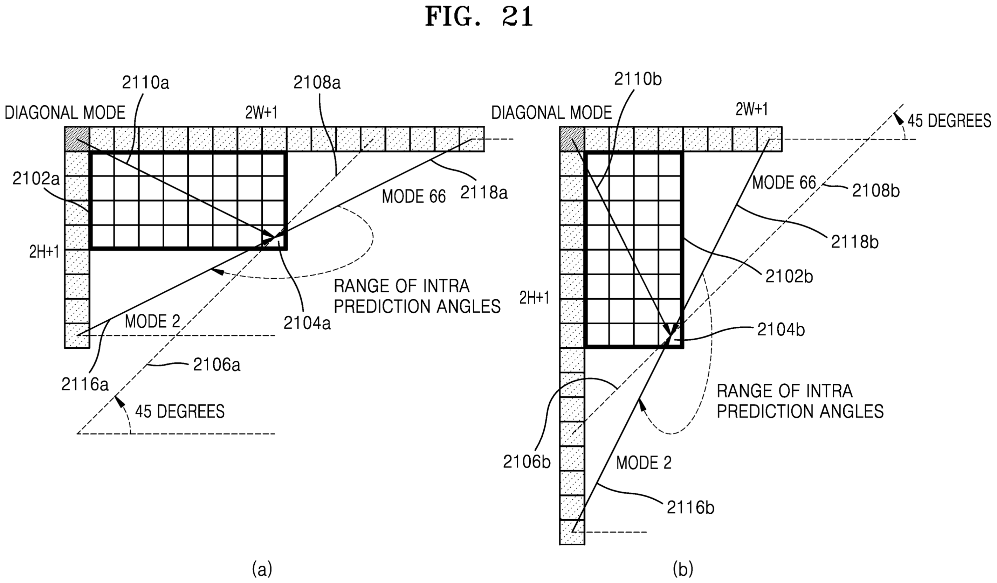

A simulated prediction signal refers to a signal (or a predictor or a prediction sample) predicted based on an intra prediction mode having best prediction performance by predicting a block (e.g., the current block or a reference block) based on at least one of available intra prediction modes (e.g., see FIG. 20, FIG. 21, and related descriptions), and, in this specification, may be briefly referred to as a prediction signal or a virtual prediction signal. In an example, a prediction signal $R_{pred}$ of a reference block may be a simulated prediction signal or a virtual prediction signal of the reference block. However, in the proposed method according to the disclosure, the prediction signal $R_{pred}$ of the reference block is not limited to the simulated prediction signal or the virtual prediction signal of the reference block. In an example, the prediction signal $R_{pred}$ of the reference block may be an actual prediction signal used during reconstruction of the reference block.

A simulated residual signal refers to a residual signal (or a residual sample) determined using a signal or a predictor predicted based on an intra prediction mode having best prediction performance among available intra prediction modes (e.g., see FIG. 20, FIG. 21, and related descriptions), and, in this specification, may be briefly referred to as a residual signal or a virtual residual signal. In an example, a residual signal $R_{res}$ of a reference block may be a simulated residual signal or a virtual residual signal of the reference block. However, in the proposed method according to the disclosure, the residual signal $R_{res}$ of the reference block is not limited to the simulated residual signal or the virtual residual signal of the reference block. In an example, the residual signal $R_{res}$ of the reference block may be an actual residual signal used during reconstruction of the reference block.

In this specification, that two blocks (e.g., the current block and a reference block) correspond to each other may mean that the two blocks (best) match each other. Similarly, that two pixel regions (e.g., a first pixel region and a second pixel region) or two templates (e.g., a template $T_C$ of the current block and a template $T_R$ of a reference block) correspond to each other may mean that the two pixel regions or the two templates (best) match each other.

In this specification, a prediction value or predicted value may be used interchangeably with a predictor.

In this specification, a block may include, but is not limited to, a coding unit (CU), a prediction unit (PU), a transform unit (TU), or a sub-block included in the block. The block may have any of various forms. For example, the block may have a shape of a square or a non-square.

In this specification, a spatial domain may refer to a picture domain that is the same as a picture including a corresponding block, and a temporal domain may refer to a picture domain that is different from a picture including a corresponding block. Therefore, the spatial domain of a block may refer to the inside of a picture including the block, and the temporal domain of a block may refer to the inside of a picture different from the picture including the block.

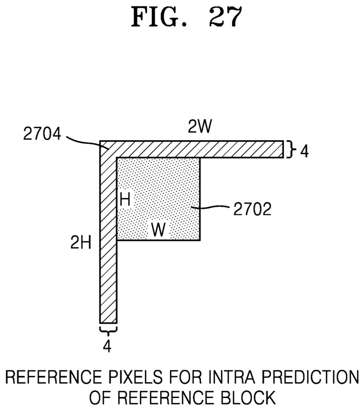

In this specification, the number of intra prediction modes (e.g., see FIG. 20 and a related description thereof) is described as a specific number as an example for convenience of explanation, and various other numbers of intra prediction modes may be provided. The range of reference samples (e.g., see FIG. 20, FIG. 27, and related descriptions thereof) may have a size equal to the current block size or a size that is a predetermined multiple of the current block size. In addition, a reference sample line (or a reference line) may be one line in contact with the current block, or may be at least one of a plurality of lines including a line in contact with the current block and a line located a predetermined distance apart from the current block.

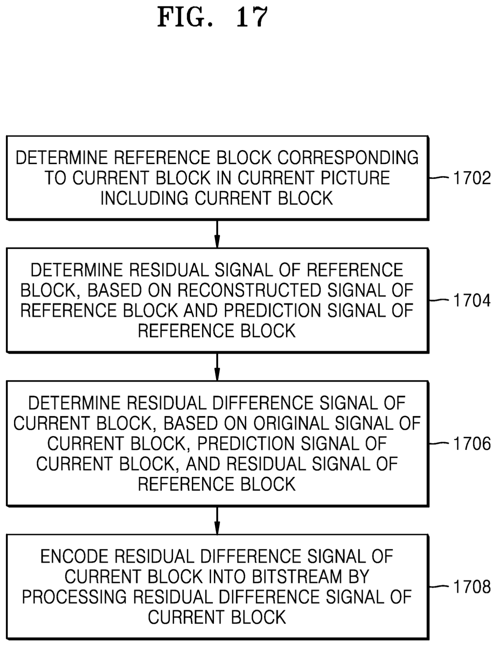

FIG. 17 is a flowchart of an image encoding method according to a proposed method of the disclosure. The method illustrated in FIG. 17 may be performed by an apparatus (e.g., the image encoding apparatus 200). FIG. 17 is only an example, and the proposed method of the disclosure is not limited to the example of FIG. 17. For example, the proposed method of the disclosure may exclude at least one operation illustrated in FIG. 17 or may include an operation not illustrated in FIG. 17.

Referring to FIG. 17, the apparatus may determine a reference block R corresponding to the current block C in the current picture including the current block C (operation 1702). For example, the reference block may be determined from a decoded area or a reconstructed area of the current picture. For example, the reference block may be determined from a predetermined portion of the decoded area or the reconstructed area of the current picture.

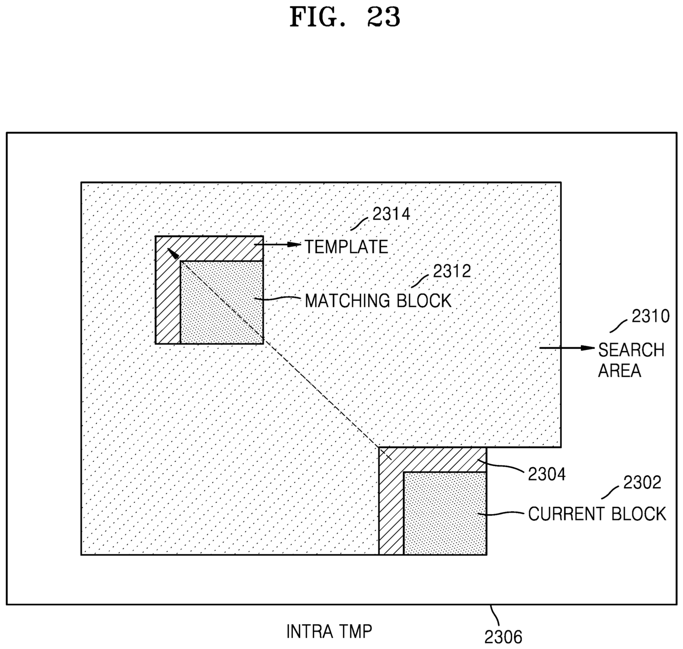

In an example, the apparatus may determine a reference block corresponding to the current block in the current picture, based on template matching, in operation 1702 (e.g., see FIGS. 23, 25, 26, and 29 and their related descriptions). In this example, an operation of determining the reference block corresponding to the current block in the current picture may include determining a first pixel region adjacent to the current block in the current picture, determining a second pixel region corresponding to (or matching) the first pixel region adjacent to the current block in the current picture, and determining a reference block corresponding to (or matching) the second pixel region in the current picture (e.g., see FIGS. 23, 25, 26, and 29 and their related descriptions). In this example, the first pixel region represents a template $T_C$ for the current block, and may be referred to as a first template. In this example, the second pixel region represents a template $T_R$ for the reference block, and may be referred to as a second template.

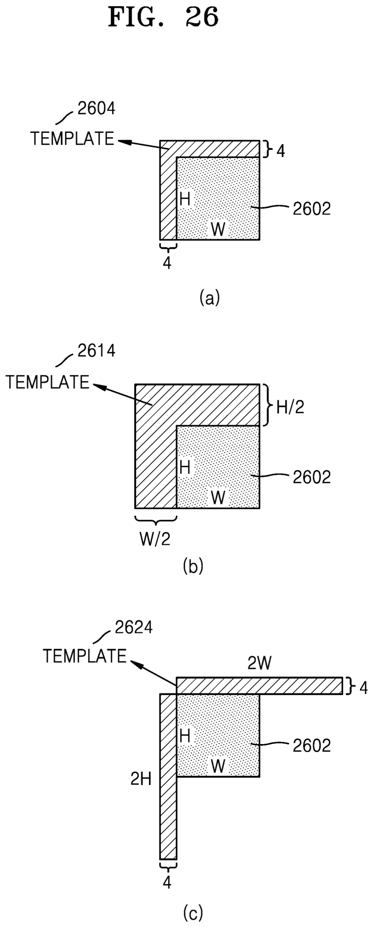

In this example (e.g., an example based on template matching), the first pixel region and the second pixel region may have various forms. In detail, the first pixel region may include at least one of a pixel region adjacent to the top of the current block, a pixel region adjacent to the top-left of the current block, or a pixel region adjacent to the left of the current block, and the second pixel region may include at least one of a pixel region adjacent to the top of the reference block, a pixel region adjacent to the top-left of the reference block, or a pixel region adjacent to the left of the reference block (e.g., see FIG. 26 and its related description). In this example, the first pixel region adjacent to the current block may have a fixed size (e.g., 4 or 4xH_4x4_Wx4), or a size (e.g., W/2 and H/2 where W and H are a width and a height of the current block) determined based on a size of the current block, or a width or height (e.g., 4xH and Wx4 where W and H are a width and a height of a coding unit including the current block) that are the same as those of the coding unit including the current block, or a width or height (e.g., 4x2H and 2Wx4 where W and H are the width and height of the coding unit including the current block) that are twice the width or height of the coding unit including the current block (e.g., see FIG. 26 and its related description).

In this example (e.g., an example based on template matching), an operation of determining the second pixel region corresponding to the first pixel region adjacent to the current block in the current picture may include calculating values of a cost function, based on a pixel of the first pixel region and a pixel of a pixel region in a given search area (e.g., a reconstructed area of the current picture or a specific region within the reconstructed area of the current picture), and determining, as the second pixel region, a pixel region corresponding to a lowest or highest value among the calculated values of the cost function (e.g., see FIG. 26 and its related description). As a more detailed example, the cost function may include at least one of a sum of absolute differences (SAD), a sum of squared differences (SSD), or the number of pixels having the same pixel value (e.g., see FIG. 26 and its related description).

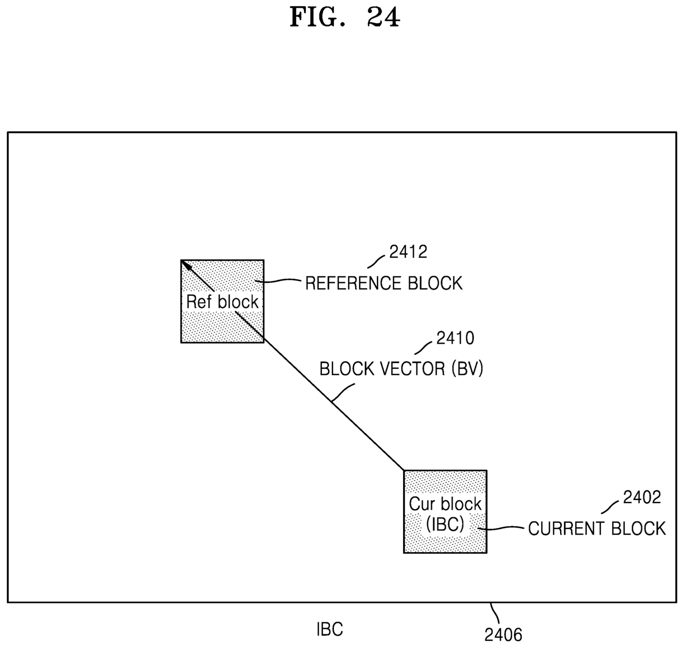

As another example, in operation 1702, the apparatus may determine a reference block corresponding to the current block in the current picture, based on a block vector (BV) (e.g., see FIGS. 24, 28, and 30 and their related descriptions). In this example, an operation of determining the reference block corresponding to the current block may include searching for the reference block matched with the current block from the given search area of the current picture to obtain a BV of the current block, and determining the reference block in the current picture, based on the BV of the current block (e.g., see FIGS. 24, 28, and 30 and their related descriptions).

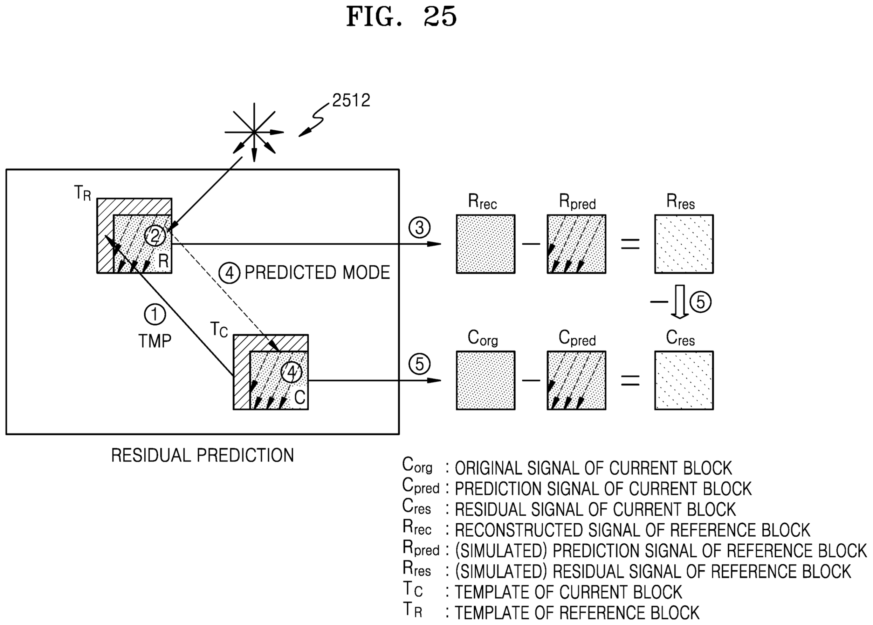

The apparatus may determine a residual signal $R_{res}$ of the reference block, based on a reconstructed signal $R_{rec}$ of the reference block and a prediction signal $R_{pred}$ of the reference block (operation 1704) (e.g., see FIGS. 25, 28, 29, and 30 and their related descriptions). The prediction signal $R_{pred}$ of the reference block may be determined based on at least one reference pixel included in a neighboring block of the reference block in the current picture.

The apparatus may determine a residual difference signal $\tilde{C}_{res}$ of the current block, based on an original signal $C_{org}$ of the current block, a prediction signal $C_{pred}$ of the current block, and a residual signal $R_{res}$ of the reference block (operation 1706) (e.g., see FIGS. 25, 28, 29, and 30 and their related descriptions). The prediction signal of the current block may be determined based on at least one reference pixel included in a neighboring block of the current block in the current picture.

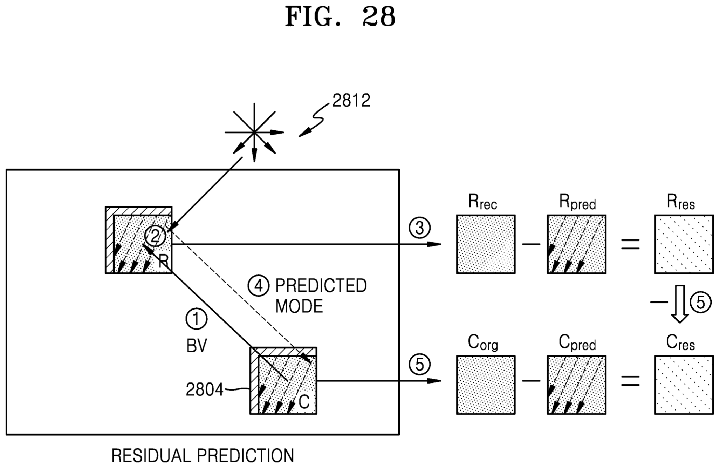

In an example, in operation 1704, the apparatus may determine an intra prediction mode of the reference block from among a plurality of intra prediction modes, based on a reconstructed signal of the reference block and at least one reference pixel included in a neighboring block of the reference block, and may determine a prediction signal of the reference block, based on the intra prediction mode of the reference block and the at least one reference pixel included in the neighboring block of the reference block in the current picture (e.g., see FIGS. 25 and 28 and their related descriptions). In this example, in operation 1706, the apparatus may determine an intra prediction mode of the reference block as an intra prediction mode of the current block, and may determine a prediction signal of the current block, based on the intra prediction mode of the reference block and the at least one reference pixel included in the neighboring block of the current block in the current picture (e.g., see FIGS. 25 and 28 and their related descriptions). In this example, an operation of determining the intra prediction mode of the reference block from among the plurality of intra prediction modes may include calculating a function value for each of the plurality of intra prediction modes, based on a reconstructed signal of the reference block and at least one reference pixel included in the neighboring block of the reference block, and determining an intra prediction mode corresponding to a lowest function value or highest function value among the calculated function values as the intra prediction mode of the current block (e.g., see FIG. 27 and its related description). As a more detailed example, the function value may be a cost function, and may include at least one of a sum of absolute differences (SAD), a sum of squared differences (SSD), or the number of pixels having the same pixel value (e.g., see FIG. 27 and its related description).

In an example, in operation 1704, the apparatus may identify the intra prediction mode of the reference block when the reference block is coded in an intra prediction mode , and may determine a prediction signal of the reference block, based on the intra prediction mode of the reference block and the at least one reference pixel included in the neighboring block of the reference block in the current picture (e.g., see FIGS. 25 and 28 and their related descriptions). In this example, in operation 1706, the apparatus may determine an intra prediction mode of the reference block as an intra prediction mode of the current block, and may determine a prediction signal of the current block, based on the intra prediction mode of the reference block and the at least one reference pixel included in the neighboring block of the current block in the current picture (e.g., see FIGS. 25 and 28 and their related descriptions).

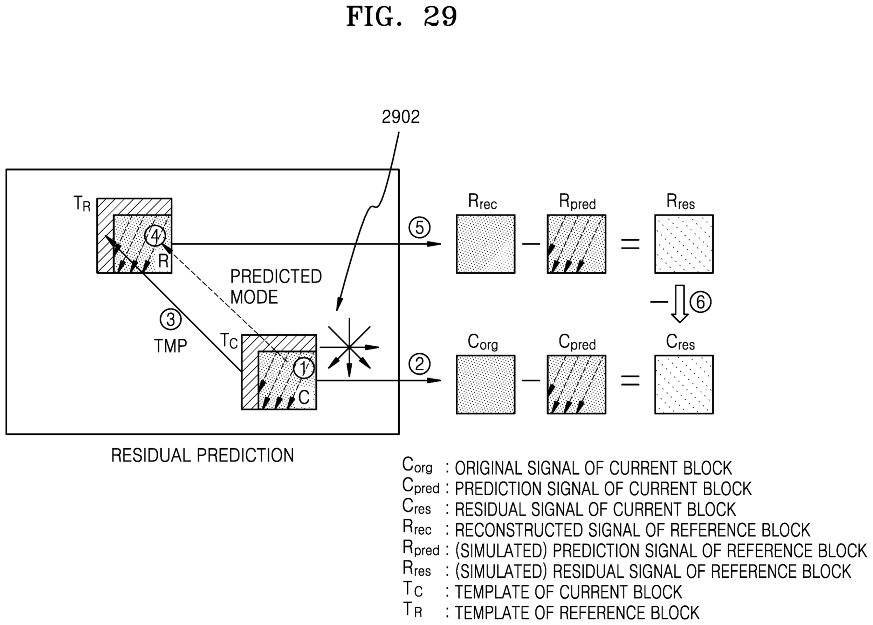

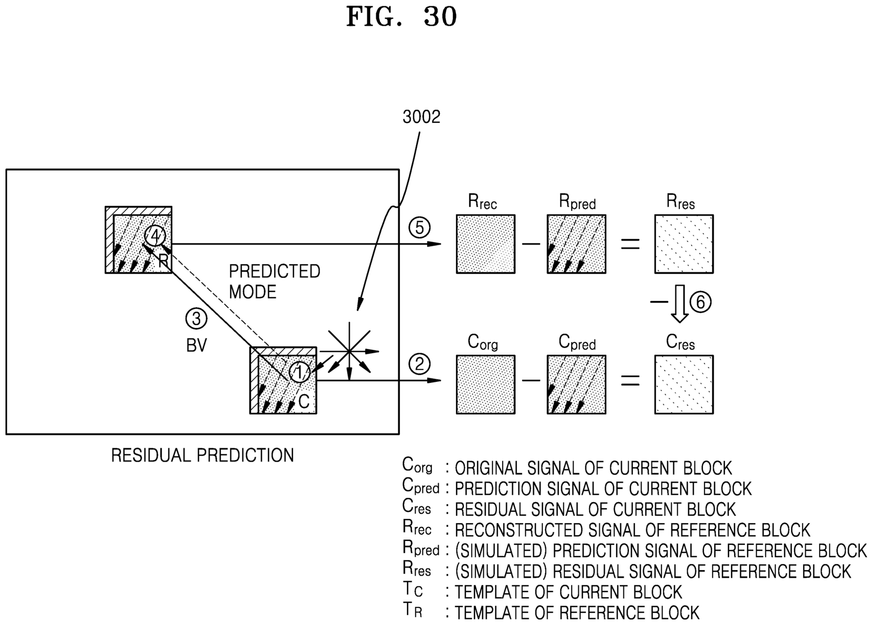

In an example, in operation 1704, the apparatus may determine the intra prediction mode of the current block from among the plurality of intra prediction modes, based on a pixel region adjacent to the current block, and may encode the intra prediction mode of the current block into the bitstream (or may signal the intra prediction mode of the current block via the bitstream). In operation 1704, the apparatus may determine an intra prediction mode of the current block as an intra prediction mode of the reference block, and may determine a prediction signal of the reference block, based on the intra prediction mode of the current block and the at least one reference pixel included in the neighboring block of the reference block in the current picture (e.g., see FIGS. 29 and 30 and their related descriptions). In this example, the apparatus may determine a prediction signal of the current block, based on the intra prediction mode of the current block and the at least one reference pixel included in the neighboring block of the current block in the current picture, in operation 1706 (e.g., see FIGS. 29 and 30 and their related descriptions).

In an example, in operation 1704, the apparatus may determine the intra prediction mode of the current block from among the plurality of intra prediction modes, based on a pixel region adjacent to the current block, and may not encode the intra prediction mode of the current block into the bitstream (or may omit encoding of the intra prediction mode of the current block into the bitstream). In this case, the decoder may determine the intra prediction mode of the current block by performing an operation corresponding to an operation performed on the encoder side, without obtaining the intra prediction mode of the current block from the bitstream. In operation 1704, the apparatus may determine an intra prediction mode of the current block as an intra prediction mode of the reference block, and may determine a prediction signal of the reference block, based on the intra prediction mode of the current block and the at least one reference pixel included in the neighboring block of the reference block in the current picture (e.g., see FIGS. 29 and 30 and their related descriptions). In this example, in operation 1706, the apparatus may determine a prediction signal of the current block, based on the intra prediction mode of the current block and the at least one reference pixel included in the neighboring block of the current block in the current picture (e.g., see FIGS. 29 and 30 and their related descriptions).

The apparatus may process the residual difference signal $\tilde{C}_{res}$ of the current block determined in operation 1706 to encode the same into the bitstream (operation 1708). In an example, the apparatus may obtain transform coefficient information for the current block by performing transformation and quantization (or scaling), based on the residual difference signal of the current block, and may encode the transform coefficient information into a bitstream. In an example, the apparatus may omit transformation and quantization (or scaling) and encode the residual difference signal of the current block into a bitstream. In a proposed method of the disclosure, the residual difference signal of the current block may be encoded into the bitstream not only by these examples, but also by various methods.

The image encoding method according to the proposed method of the disclosure is not limited to including only the configurations illustrated in FIG. 17, and may not include some of the configurations illustrated in FIG. 17, or may include other configurations described in the disclosure.

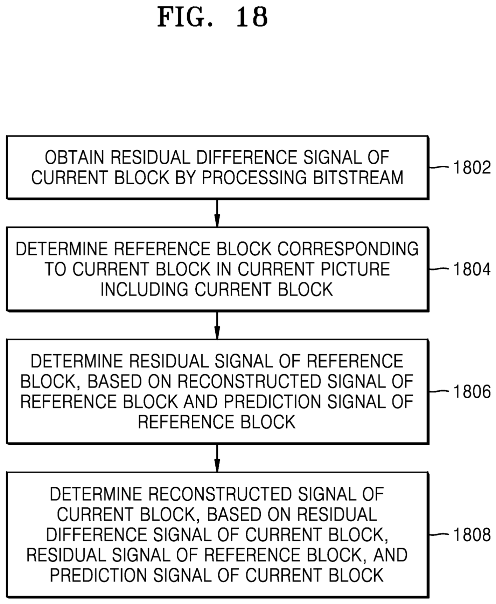

FIG. 18 is a flowchart of an image decoding method according to a proposed method of the disclosure. The example of FIG. 18 may be performed by an apparatus (e.g., the image decoding apparatus 100). FIG. 18 is only an example, and the proposed method of the disclosure is not limited to the example of FIG. 18. For example, the proposed method of the disclosure may exclude at least one operation illustrated in FIG. 18 or may include an operation not illustrated in FIG. 18.

Referring to FIG. 18, the apparatus may obtain a residual difference signal $\tilde{C}_{res}$ of the current block by processing a bitstream (operation 1802). In an example, the apparatus may obtain transform coefficient information for the current block from the bitstream, and perform inverse quantization (or scaling) and inverse transformation, based on the transform coefficient information, to obtain a residual difference signal of the current block. In an example, the apparatus may omit inverse transformation and inverse quantization (or scaling) and obtain the residual difference signal of the current block from the bitstream. In a proposed method of the disclosure, the residual difference signal of the current block may be obtained not only by these examples, but also by various methods.

The apparatus may determine a reference block R corresponding to the current block C in the current picture (e.g., a decoded area or a reconstructed area in the current picture) including the current block C (operation 1804). For example, the reference block may be determined from the decoded area or the reconstructed area of the current picture. For example, the reference block may be determined from a predetermined portion of the decoded area or the reconstructed area of the current picture.

In an example, the apparatus may determine a reference block corresponding to the current block in the current picture, based on template matching, in operation 1804 (e.g., see FIGS. 23, 25, 26, and 29 and their related descriptions). In this example, the operation of determining the reference block corresponding to the current block in the current picture may include determining a first pixel region adjacent to the current block in the current picture, determining a second pixel region corresponding to the first pixel region adjacent to the current block in the current picture, and determining a reference block corresponding to the second pixel region in the current picture (e.g., see FIGS. 23, 25, 26, and 29 and their related descriptions). In this example, the first pixel region represents a template for the current block, and may be referred to as a first template. In this example, the second pixel region represents a template for the reference block, and may be referred to as a second template.

In this example (e.g., an example based on template matching), the first pixel region and the second pixel region may have various forms. In detail, the first pixel region may include at least one of a pixel region adjacent to the top of the current block, a pixel region adjacent to the top-left of the current block, or a pixel region adjacent to the left of the current block, and the second pixel region may include at least one of a pixel region adjacent to the top of the reference block, a pixel region adjacent to the top-left of the reference block, or a pixel region adjacent to the left of the reference block (e.g., see FIG. 26 and its related description). In this example, the first pixel region adjacent to the current block may have a fixed size (e.g., 4 or 4xH_4x4_Wx4), or a size (e.g., W/2 and H/2 where W and H are a width and a height of the current block) determined based on a size of the current block, or a width or height (e.g., 4xH and Wx4 where W and H are a width and a height of a coding unit including the current block) that are the same as those of the coding unit including the current block, or a width or height (e.g., 4x2H and 2Wx4 where W and H are the width and height of the coding unit including the current block) that are twice the width or height of the coding unit including the current block (e.g., see FIG. 26 and its related description).

In this example (e.g., an example based on template matching), an operation of determining the second pixel region corresponding to the first pixel region adjacent to the current block in the current picture may include calculating values of a cost function, based on a pixel of the first pixel region and a pixel of a pixel region in a given search area (e.g., a reconstructed area of the current picture or a specific region within the reconstructed area of the current picture), and determining, as the second pixel region, a pixel region corresponding to a lowest or highest value among the calculated values of the cost function (e.g., see FIG. 26 and its related description). As a more detailed example, the cost function may include at least one of a sum of absolute differences (SAD), a sum of squared differences (SSD), or the number of pixels having the same pixel value (e.g., see FIG. 26 and its related description).

As another example, the apparatus may determine a reference block corresponding to the current block in the current picture, based on a block vector, in operation 1804 (e.g., see FIGS. 24, 28, and 30 and their related descriptions). In this example, an operation of determining the reference block corresponding to the current block may include obtaining a block vector of the current block from the bitstream, and determining the reference block in the current picture, based on the block vector of the current block (e.g., see FIGS. 24, 28, and 30 and their related descriptions).

The apparatus may determine a residual signal $R_{res}$ of the reference block, based on a reconstructed signal $R_{rec}$ of the reference block and a prediction signal $R_{pred}$ of the reference block (operation 1806) (e.g., see FIGS. 25, 28, 29, and 30 and their related descriptions). The prediction signal of the reference block may be determined based on at least one reference pixel included in a neighboring block of the reference block in the current picture.

The apparatus may determine a reconstructed signal $C_{rec}$ of the current block, based on the residual difference signal $\tilde{C}_{res}$ of the current block, the residual signal $R_{res}$ of the reference block, and the prediction signal $C_{pred}$ of the current block (operation 1808) (e.g., see FIGS. 25, 28, 29, and 30 and their related descriptions). The prediction signal of the current block may be determined based on at least one reference pixel included in a neighboring block of the current block in the current picture.

In an example, in operation 1806, the apparatus may determine an intra prediction mode of the reference block from among a plurality of intra prediction modes, based on a reconstructed signal of the reference block and at least one reference pixel included in a neighboring block of the reference block, and may determine a prediction signal of the reference block, based on the intra prediction mode of the reference block and the at least one reference pixel included in the neighboring block of the reference block in the current picture (e.g., see FIGS. 25 and 28 and their related descriptions). In this example, in operation 1808, the apparatus may determine an intra prediction mode of the reference block as an intra prediction mode of the current block, and may determine a prediction signal of the current block, based on the intra prediction mode of the reference block and the at least one reference pixel included in the neighboring block of the current block in the current picture (e.g., see FIGS. 25 and 28 and their related descriptions). In this example, an operation of determining the intra prediction mode of the reference block from among the plurality of intra prediction modes may include calculating a function value for each of the plurality of intra prediction modes, based on a reconstructed signal of the reference block and at least one reference pixel included in the neighboring block of the reference block, and determining an intra prediction mode corresponding to a lowest function value or highest function value among the calculated function values as the intra prediction mode of the current block (e.g., see FIG. 27 and its related description). As a more detailed example, the function value may be a cost function, and may include at least one of a sum of absolute differences (SAD), a sum of squared differences (SSD), or the number of pixels having the same pixel value (e.g., see FIG. 27 and its related description).

In an example, the apparatus may identify the intra prediction mode of the reference block when the reference block is coded in an intra prediction mode in operation 1806, and may determine a prediction signal of the reference block, based on the intra prediction mode of the reference block and the at least one reference pixel included in the neighboring block of the reference block in the current picture (e.g., see FIGS. 25 and 28 and their related descriptions). In this example, in operation 1808, the apparatus may determine an intra prediction mode of the reference block as an intra prediction mode of the current block, and may determine a prediction signal of the current block, based on the intra prediction mode of the reference block and the at least one reference pixel included in the neighboring block of the current block in the current picture (e.g., see FIGS. 25 and 28 and their related descriptions).

In an example, in operation 1806, the apparatus may obtain the intra prediction mode of the current block from the bitstream (e.g., see FIG. 20 and its related description), determine the intra prediction mode of the current block as an intra prediction mode of the reference block, and determine a prediction signal of the reference block, based on the intra prediction mode of the current block and the at least one reference pixel included in the neighboring block of the reference block in the current picture (e.g., see FIGS. 29 and 30 and their related descriptions). In this example, in operation 1808, the apparatus may determine a prediction signal of the current block, based on the intra prediction mode of the current block and the at least one reference pixel included in the neighboring block of the current block in the current picture (e.g., see FIGS. 29 and 30 and their related descriptions).

In an example, in operation 1806, the apparatus may determine the intra prediction mode of the current block from among a plurality of intra prediction modes, based on a pixel region adjacent to the current block, without obtaining the intra prediction mode of the current block from the bitstream. In operation 1806, the apparatus may determine an intra prediction mode of the current block as an intra prediction mode of the reference block, and may determine a prediction signal of the reference block, based on the intra prediction mode of the current block and the at least one reference pixel included in the neighboring block of the reference block in the current picture (e.g., see FIGS. 29 and 30 and their related descriptions). In this example, in operation 1808, the apparatus may determine a prediction signal of the current block, based on the intra prediction mode of the current block and the at least one reference pixel included in the neighboring block of the current block in the current picture (e.g., see FIGS. 29 and 30 and their related descriptions).

The image decoding method according to the proposed method of the disclosure is not limited to including only the configurations exemplified in FIG. 18, and may not include some of the configurations exemplified in FIG. 18, or may include other configurations described in the disclosure.

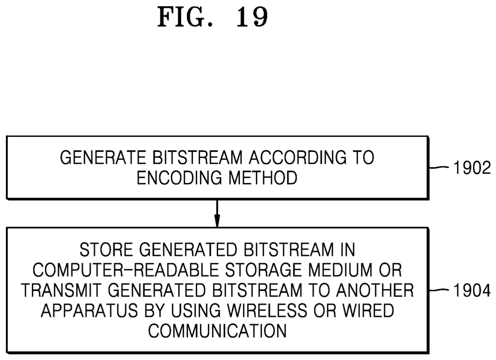

FIG. 19 is a flowchart of a bitstream storing method according to a proposed method of the disclosure. The method illustrated in FIG. 19 may be performed by an apparatus (e.g., the image encoding apparatus 200). FIG. 19 is only an example, and the proposed method of the disclosure is not limited to the example of FIG. 19. For example, the proposed method of the disclosure may exclude at least one operation illustrated in FIG. 19 or may include an operation not illustrated in FIG. 19.

Referring to FIG. 19, the apparatus may generate a bitstream according to an encoding method (operation 1902). For example, the encoding method may include an image encoding method according to a proposed method of the disclosure. In detail, the encoding method may include the image encoding method described above with reference to FIG. 17.

Alternatively, in operation 1902, the apparatus may generate a bitstream that is decoded according to a decoding method. For example, the decoding method may include an image decoding method according to a proposed method of the disclosure. In detail, the decoding method may include the image decoding method described above with reference to FIG. 18.

The apparatus may store the generated bitstream in a non-transitory computer-readable storage medium or transmit the generated bitstream to another apparatus by using wireless or wired communication (operation 1904).

FIGS. 20 and 21 illustrate intra prediction modes applicable to a proposed method of the disclosure. Although an intra prediction mode of ITU-T H.266/Versatile Video Coding (VVC) is mainly explained in the examples of FIGS. 20 and 21, the intra prediction modes applicable to the proposed method of the disclosure are not limited to the examples of FIGS. 20 and 21. For example, the intra prediction modes applicable to the proposed method of the disclosure may include another intra prediction modes of ITU-T H.266/VVC (e.g., a cross component linear model (CCLM)), and/or an intra prediction mode of advanced video coding standards after ITU-T H.266/VVC.

Referring to FIG. 20(a), in image coding, intra prediction refers to a technology of predicting the current block 2002 that is to be decoded, based on data (e.g., surrounding blocks of the current block or samples included in the surrounding block) 2004 already decoded within a picture (or a slice or a tile) including the current block 2002. In detail, samples decoded (or reconstructed) before the current block in the current picture including the current block 2002 are used as reference samples 2004 to perform intra prediction with respect to the current block 2002, based on the reference samples 2004.

The intra prediction may include non-directional prediction and directional prediction. In the case of non-directional prediction, there are (1) an intra direct current (DC) (prediction) mode (or an INTRA_DC mode) that determines the average (of values) of specific samples among the reference samples 2004 as a predicted value of the current sample of the current block 2002, and (2) an intra planar (prediction) mode (or an INTRA_PLANAR mode) that determines, as the predicted value or predictor of the current sample, a value obtained by applying weights according to distances from the current sample, which is to be decoded, to left/upper reference samples (values thereof) of the current block.

In the case of directional prediction, the reference sample (2004) (value thereof) located in a direction (e.g., including a plurality of directions within a range from a left end to a right upper end) corresponding to a directional prediction mode for the current block 2002 among a plurality of directional prediction modes may be determined as the predicted value or predictor of the current sample belonging to the current block 2002. For example, an H.264/Advanced Video Coding (AVC) standard supports 8 directions, an H.265/High Efficiency Video Coding (HEVC) standard supports 33 directions, and an H.266/VVC standard supports 65 directions.

In directional prediction, a sample value corresponding to a fractional position of a reference sample located in the direction of an intra prediction mode for the current block may be calculated, and the calculated sample value may be determined as a predicted value of the current sample of the current block. For example, in the case of H.266/VVC, the filter coefficients for obtaining the sample value corresponding to the fractional position in units of 1/32 samples, which is to be used as the predicted value of the current sample of the current block, may be defined as in Table 1. Table 1 shows examples of filter coefficient values used when a sample value to be used as the predicted value of the current sample is obtained for each fractional position (from p=0 to p=31/32) of the reference sample 2004. In this case, one of a plurality of interpolation filters (A or B in Table 1) may be selected according to the size of the current block 2002 or the intra prediction mode.

[Table 1]

reference samples at integer position used for filtering

p = 0    p = 1

| Fractional sample position, p | DCT based filter coefficient (A) | Gaussian filter coefficient (B) |
|---|---|---|
| 0 | 0, 64, 0, 0 | 16, 32, 16, 0 |
| 1/32 | -1, 63, 2, 0 | 16, 32, 16, 0 |
| 2/32 | -2, 62, 4, 0 | 15, 31, 17, 1 |
| 3/32 | -2, 60, 7, -1 | 15, 31, 17, 1 |
| 4/32 | -2, 58, 10, -2 | 14, 30, 18, 2 |
| 5/32 | -3, 57, 12, -2 | 14, 30, 18, 2 |
| 6/32 | -4, 56, 14, -2 | 13, 29, 19, 3 |
| 7/32 | -4, 55, 15, -2 | 13, 29, 19, 3 |
| 8/32 | -4, 54, 16, -2 | 12, 28, 20, 4 |
| 9/32 | -5, 53, 18, -2 | 12, 28, 20, 4 |
| 10/32 | -6, 52, 20, -2 | 11, 27, 21, 5 |
| 11/32 | -6, 49, 24, -3 | 11, 27, 21, 5 |
| 12/32 | -6, 46, 28, -4 | 10, 26, 22, 6 |
| 13/32 | -5, 44, 29, -4 | 10, 26, 22, 6 |
| 14/32 | -4, 42, 30, -4 | 9, 25, 23, 7 |
| 15/32 | -4, 39, 33, -4 | 9, 25, 23, 7 |
| 16/32 | -4, 36, 36, -4 | 8, 24, 24, 8 |
| 17/32 | -4, 33, 39, -4 | 8, 24, 24, 8 |
| 18/32 | -4, 30, 42, -4 | 7, 23, 25, 9 |
| 19/32 | -4, 29, 44, -5 | 7, 23, 25, 9 |
| 20/32 | -4, 28, 46, -6 | 6, 22, 26, 10 |
| 21/32 | -3, 24, 49, -6 | 6, 22, 26, 10 |
| 22/32 | -2, 20, 52, -6 | 5, 21, 27, 11 |
| 23/32 | -2, 18, 53, -5 | 5, 21, 27, 11 |
| 24/32 | -2, 16, 54, -4 | 4, 20, 28, 12 |
| 25/32 | -2, 15, 55, -4 | 4, 20, 28, 12 |
| 26/32 | -2, 14, 56, -4 | 3, 19, 29, 13 |
| 27/32 | -2, 12, 57, -3 | 3, 19, 29, 13 |
| 28/32 | -2, 10, 58, -2 | 2, 18, 30, 14 |
| 29/32 | -1, 7, 60, -2 | 2, 18, 30, 14 |
| 30/32 | 0, 4, 62, -2 | 1, 17, 31, 15 |
| 31/32 | 0, 2, 63, -1 | 1, 17, 31, 15 |

FIG. 20(b) illustrates the intra prediction mode of the H.266/VVC standard and a direction for each intra prediction mode. Basically, an intra DC mode and an intra planar mode may be supported, directional prediction modes from number 2 to number 66 may exist, and, according to a ratio between a width and a height of a block, a directional prediction mode whose number is less than number 2 or greater than number 66 may be used (e.g., see FIG. 21 and its related description).

Referring to FIG. 20(b), the intra prediction modes applicable to a proposed method of the disclosure may include an intra planar (prediction) mode (or an INTRA_PLANAR mode), an intra DC (prediction) mode (or an INTRA_DC mode), and intra angular (prediction) modes (or INTRA_ANGULAR2 to INTRA_ANGULAR66). Each intra prediction mode may be represented as a specific value. In an example, when the intra prediction mode has a value of 0, the intra prediction mode may indicate an intra-planar (prediction) mode (or an INTRA_PLANAR mode). In an example, when the intra prediction mode has a value of 1, the intra prediction mode may indicate an intra DC (prediction) mode (or an INTRA_DC mode). In an example, when the intra prediction mode has one value among number 2 to number 66, the intra prediction mode may indicate a corresponding intra angular (prediction) mode among the intra angular (prediction) modes (or INTRA_ANGULAR2 to INTRA_ANGULAR66). As mentioned above, the intra prediction mode applicable to a proposed method of the disclosure is not limited to the intra prediction mode illustrated in FIG. 20(b). In this specification, for convenience of description, the intra-planar (prediction) mode (or the INTRA_PLANAR mode) may be referred to simply as an intra-planar mode, the intra DC (prediction) mode (or the INTRA_DC mode) may be referred to simply as an intra DC mode, and the intra angular (prediction) modes (or INTRA_ANGULAR2 to INTRA_ANGULAR66) may be referred to simply as intra angular modes.

The intra prediction mode applicable to a proposed method of the disclosure may be determined based on a most probable mode (MPM). For example, six MPMs may be used, but this is only an example and other numbers of MPMs may be used. In an example, the apparatus (e.g., the image decoding apparatus 100) may obtain (syntax) information related to the intra prediction mode of the current block from the bitstream, and determine the intra prediction mode of the current block, based on an intra prediction mode candidate list including MPMs and the (syntax) information related to the intra prediction mode. In an example, the apparatus (e.g., the image encoding apparatus 200) may obtain (syntax) information related to the intra prediction mode of the current block, based on the intra prediction mode candidate list including MPMs and the intra prediction mode of the current block, and may encode the obtained information into a bitstream. In this specification, for convenience of explanation, the intra prediction mode candidate list including MPMs may be simply referred to as an MPM list, and may be used interchangeably with an intra candidate mode list, a candidate mode list, or the like.

As an example that does not limit a proposed method of the disclosure, when a neighboring block is not available, the intra prediction mode of the neighboring block may be set as an intra planar mode by default. In an example, when intra prediction modes of a left neighboring block and an upper neighboring block are both intra non-angular modes (e.g., intra planar modes or intra DC modes), a MPM list may include {Planar, DC, V, H, V - 4, V + 4}. In this specification, for convenience of explanation, Planar represents an intra planar mode, DC represents an intra DC mode, V represents a vertical intra prediction mode (e.g., INTRA_ANGULAR50 in FIG. 20), H represents a horizontal intra prediction mode (e.g., INTRA_ANGULAR18 in FIG. 20), V - 4 represents an intra prediction mode (e.g., INTRA_ANGULAR46 in FIG. 20) having a value obtained by subtracting 4 from the vertical intra prediction mode, and V + 4 represents an intra prediction mode (e.g., INTRA_ANGULAR54 in FIG. 20) having a value obtained by adding 4 to the vertical intra prediction mode.

In an example, when one of the intra prediction modes of the left neighboring block and the upper neighboring block is an intra angular mode and the other one is an intra non-angular mode, a MPM list may include {Planar, Max, Max - 1, Max + 1, Max - 2, Max + 2}. In this specification, for convenience of explanation, Max represents an intra prediction mode corresponding to a maximum value among the intra prediction mode of the left neighboring block and the intra prediction mode of the upper neighboring block, Max - 1 represents an intra prediction mode corresponding to a value obtained by subtracting 1 from Max, Max + 1 represents an intra prediction mode corresponding to a value obtained by adding 1 to Max, Max - 2 represents an intra prediction mode corresponding to a value obtained by subtracting 2 from Max, and Max + 2 represents an intra prediction mode corresponding to a value obtained by adding 2 to Max.

In an example, when the intra prediction modes of the left neighboring block and the upper neighboring block are both intra angular modes and are different from each other, the MPM list may be determined as follows. In this specification, for convenience of explanation, Min represents an intra prediction mode corresponding to a minimum value among the intra prediction mode of the left neighboring block and the intra prediction mode of the upper neighboring block, Left represents the intra prediction mode of the left neighboring block, Above represents the intra prediction mode of the upper neighboring block, Min - 1 represents an intra prediction mode corresponding to a value obtained by subtracting 1 from Min, Min - 2 represents an intra prediction mode corresponding to a value obtained by subtracting 2 from Min, Min + 1 represents an intra prediction mode corresponding to a value obtained by adding 1 to Min, and Min + 2 represents an intra prediction mode corresponding to a value obtained by adding 2 to Min.

When (Max - Min) is 1, the MPM list includes {Planar, Left, Above, Min - 1, Max + 1, Min - 2}.

Otherwise, when (Max - Min) is equal to or greater than 62, the MPM list includes {Planar, Left, Above, Min + 1, Max - 1, Min + 2}.

Otherwise, when (Max - Min) is 2, the MPM list includes {Planar, Left, Above, Min + 1, Min - 1, Max + 1}.

Otherwise, the MPM list includes {Planar, Left, Above, Min - 1, -Min + 1, Max - 1}.

In an example, when both of the intra prediction modes of the left neighboring block and the upper neighboring block are intra angular modes, the MPM list may include {Planar, Left, Left - 1, Left + 1, Left - 2, Left + 2}. In this specification, for convenience of explanation, Left - 1 represents an intra prediction mode corresponding to a value obtained by subtracting 1 from Left (e.g., the intra prediction mode of the left neighboring block), Left + 1 represents an intra prediction mode corresponding to a value obtained by adding 1 to Left, Left - 2 represents an intra prediction mode corresponding to a value obtained by subtracting 2 from Left, and Left + 2 represents an intra prediction mode corresponding to a value obtained by adding 2 to Left.

FIGS. 21 illustrates wide-angle intra prediction applicable to a proposed method of the disclosure. FIG. 21(a) illustrates an example of applying wide-angle intra prediction to a pixel 2104a of a block 2102a when a width W of the block 2102a is greater than a height H thereof (W > H), and FIG. 21(b) illustrates an example of applying wide-angle intra prediction to a pixel 2104b of a block 2102b when a height H of a block 2102b is greater than a width W thereof (H > W). As described above, the proposed method of the disclosure is not limited to the example of FIG. 21.

Referring to FIG. 21, a direction of a typical intra angular mode is defined within an angle from 45 degrees 2106a or 2106b (e.g., intra angular mode 2 or INTRA_ANGULAR2) to 135 degrees 2108a or 2108b (e.g., intra angular mode 66 or INTRA_ANGULAR66) in a clockwise direction (e.g., see FIG. 20 and its related description). When the block 2102a or 2102b is a non-square block, 2W + 1 neighboring pixels adjacent to the top of the block 2102a or 2102b and/or 2H + 1 neighboring pixels adjacent to the left of the block 2102a or 2102b according to the width W and the height H of the block 2102a or 2102b may be used as reference pixels for intra prediction, and some intra angular modes among the intra angular modes (e.g., see FIG. 20 and its related description) may be adaptively replaced with wide-angle intra prediction modes. For example, a bottom-left diagonal intra angular mode 2106a or 2106b (e.g., intra angular mode 2 or INTRA_ANGULAR2) may be replaced with an intra angular mode 2116a or 2116b, a top-right diagonal intra angular mode 2108a or 2108b (e.g., intra angular mode 66 or INTRA_ANGULAR66) may be replaced with an intra angular mode 2118a or 2118b, and a top-left diagonal intra angular mode (e.g., intra angular mode 34 or INTRA_ANGULAR34) may be replaced with a diagonal mode 2110a or 2110b.

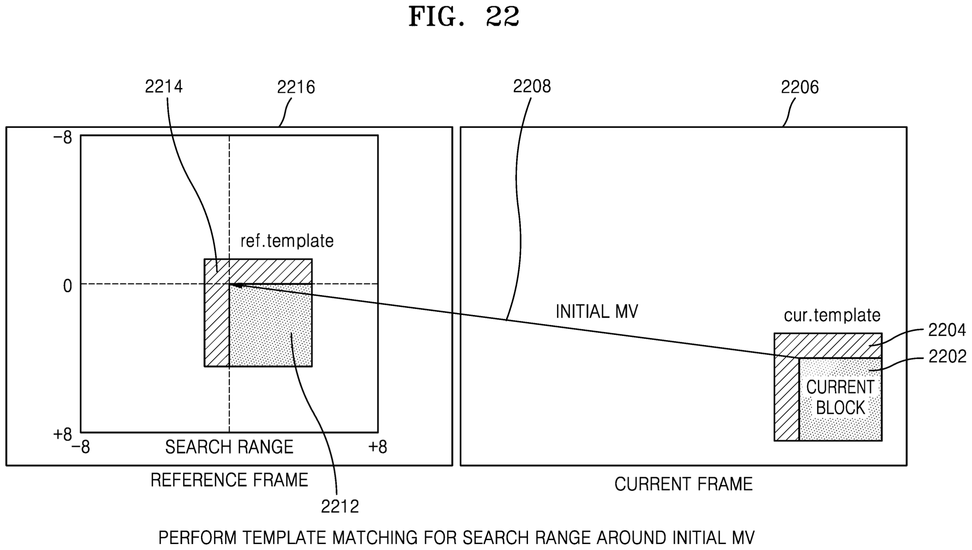

FIGS. 22 and 23 illustrate a template matching method applicable to a proposed method of the disclosure.

In this specification, a template refers to a neighboring pixel region or neighboring block adjacent to a block. The neighboring pixel region or neighboring block corresponding to the template may include at least one neighboring pixel (or a reference pixel) adjacent to the block. In an example, the template may refer to a neighboring pixel region or neighboring block adjacent to the left of the block. In an example, the template may refer to a neighboring pixel region or neighboring block adjacent to the top of the block. In an example, the template may refer to a neighboring pixel region or neighboring block adjacent to the left and the top of the block. In an example, the template may refer to a neighboring pixel region or neighboring block adjacent to at least one of the left side, the top, or the top-left of the block.

In this specification, template matching (TM) refers to a technique of searching for a template (or a pixel region) that best matches a template of a block (or a neighboring pixel region adjacent to the block). For example, template matching may be used as a prediction method of performing prediction on a block, based on a template that best matches the template of a block (e.g., a coding unit (CU)) in a reference picture or the current picture, or as a motion information derivation method on a decoder side that refines motion information of a block. In this specification, inter template matching may refer to a technique of searching for a template that best matches a template of a block in a reference picture, and intra template matching may refer to a technique of searching for a template that best matches a template of a block in a picture (or the current picture) including a block. In this specification, template matching prediction (TMP) may refer to a technique of performing prediction, based on template matching.

FIG. 22 illustrates inter template matching applicable to a proposed method of the disclosure. The example of FIG. 22 is only an example, and inter template matching applicable to a proposed method of the disclosure is not limited to the example of FIG. 22. For example, in the example of FIG. 22, a search range is illustrated as a 16x16 pixel region, but inter template matching applicable to the proposed method of the disclosure may also be applied identically/similarly to search ranges of other sizes.

Referring to FIG. 22, inter template matching may be used in a prediction method of predicting the current block 2202 or a motion vector (MV) derivation method on the decoder side for refining motion information of the current block 2202, by searching for a closest match between a template 2204 in the current picture 2206 (e.g., an upper and/or left and/or upper-left neighboring pixel region or neighboring block of the current block 2202 (e.g., the current coding unit (CU))) and a template 2214 in a reference picture 2216 (e.g., a neighboring pixel region or neighboring block of the same size as the template 2204 in the current picture 2206). For example, (inter) template matching may be used in an advanced motion vector prediction (AMVP) mode or a merge mode.

In this specification, the AMVP mode refers to a method of generating a motion vector predictor (MVP) list by using motion information (e.g., a motion vector (MV)) of at least one neighboring block (e.g., at least one of a left neighboring block, an upper neighboring block, or an upper-left neighboring block) of the current block, and signaling, through a bitstream, a motion vector difference (MVD) representing a difference between a motion vector and a motion vector predictor for the current block and information (e.g., an index indicating an MVP candidate in a MVP list) indicating the motion vector predictor for the current block in the MVP list.

In an example, when (inter) template matching (TM) is used in the AMVP mode, an MVP candidate may be determined based on a template matching error to select a template that reaches a minimum difference between the current block template (cur.template) 2204 and a reference block template (ref.template) 2214. Additionally or alternatively to this example, (inter) template matching (TM) may be performed only on this specific MVP candidate 2208 to achieve motion vector (MV) refinement.

In this specification, the merge mode refers to a method of generating a merge candidate list by using motion information (e.g., a motion vector (MV), a reference picture list index, etc.) of at least one neighboring block of the current block (e.g., at least one of a left neighboring block, an upper neighboring block, a lower-left neighboring block, an upper-left neighboring block, an upper-right neighboring block, or a temporal neighboring block), and signaling information (e.g., an index indicating a merge candidate in the merge candidate list) indicating motion information for the current block in the merge candidate list) through a bitstream.

In an example, when (inter) template matching (TM) is used in the merge mode, (inter) template matching (TM) may be performed for a merge candidate 2208 indicated by a merge index (or an index indicating a merge candidate in the merge candidate list) in the merge candidate list. The merge candidate may be refined by performing template matching for the merge candidate.

Template matching (TM) may operate as an extra refinement process for a block-based or subblock-based bilateral matching method, or may operate independently (as a kind of prediction method). Moreover, template matching (TM) may not be used only in the AMVP mode or the merge mode, but may also be used in other methods or may be used independently.

FIG. 23 illustrates intra template matching applicable to a proposed method of the disclosure. The example of FIG. 23 is only an example, and intra template matching applicable to a proposed method of the disclosure is not limited to the example of FIG. 23. For example, in the example of FIG. 23, an L-shaped template (e.g., a neighboring pixel region or neighboring block on the left, top, top-left of a block) is illustrated. However, the intra template matching applicable to the proposed method of the disclosure may also be equally/similarly applied to templates of other shapes (e.g., a neighboring pixel region or neighboring block on at least one of the left, top, or top-left of a block) other than the L-shaped template.

Referring to FIG. 23, intra template matching prediction (Intra TMP) may refer to determining surrounding samples of the current block 2302 in the current picture 2306 as a template 2304, searching for a template most similar to the template 2304 of the current block 2302 in an already decoded or reconstructed search area (or a search region) 2310 in the current picture 2306, and using, as a prediction value of the current block 2302, a value of a reference area (or a reference block or matching block) 2312 of a template 2314 with a best matching rate found as a result of the searching. As an example that does not limit the proposed method of the disclosure, the template 2304 of the current block 2302 may have an L-shape, and the matching rate may be considered to be higher as a distortion cost is smaller as a result of measuring (e.g., using a SAD) a distortion between the template 2304 of the current block 2302 and the search template. For example, a size of the search area 2310 may be determined based on a size of the current block 2302 (e.g., in proportion to the size of the current block). This may be advantageous in cases where there is a fixed number for comparison of SAD per pixel, but a cost function applicable to the proposed method of the disclosure is not limited to the SAD (e.g., see Equation 3), and other cost functions (e.g., SSD of Equation 4, Num of Equation 5, etc., see FIG. 26 and its related description) may be used. In this specification, intra TMP may be referred to as an intra template matching or intra TMP mode or an intra prediction mode based on intra template matching.

In summary, intra template matching may be used as a special intra prediction mode that determines the block 2312 corresponding to the template 2314 (e.g., an L-shaped template) matching the current template 2304 (or the template 2304 corresponding to the current block 2302) in a reconstructed portion of the current picture or frame 2306 as a best prediction block for the current block 2302 and copies the best prediction block 2312 (as a predictor of the current block 2302).

On the encoder side, an apparatus (e.g., the image encoding apparatus 200) may search for the template 2314 most similar to the current template 2304 (or to the template 2304 corresponding to the current block 2302) from the reconstructed portion of the current picture or frame 2306 from the predefined search area 2310, and may use the block 2312 corresponding to the found template 2314 as a prediction block. The apparatus may determine a residual signal of the current block based on a difference between the original images of a predicted block and the current block, and process the residual signal to encode the residual signal into a bitstream. The apparatus may signal (via the bitstream) whether this mode (e.g., an intra TMP mode) is used, and the decoder may perform the same prediction operation, based on the signaling performed by the apparatus.

For example, on the decoder side, an apparatus (e.g., the image decoding apparatus 100) may perform an operation corresponding to an operation performed on the encoder side to search for the template 2314 most similar to the current template 2304, and may use the block 2312 corresponding to the found template 2314 as a prediction block. The apparatus may reconstruct the current block, based on the residual signal of the current block obtained by processing the bitstream and the predicted block (e.g., based on a sum of the residual signal and the predicted block).

Compared to an intra block copy mode described with reference to FIG. 24, there may be no signaling related to a block vector in intra TMP. For example, in the case of the intra block copy mode, (syntax) information indicating a block vector may be signaled through the bitstream, but, in the case of the intra TMP mode, because the decoder may determine the prediction block by performing an operation corresponding to an operation performed on the encoder side, vector information indicating the template 2314 most similar to the current template 2304 or vector information indicating the block 2312 corresponding to the template 2314 may not be signaled through the bitstream.

FIG. 24 illustrates intra block copying applicable to a proposed method of the disclosure. Although the example of FIG. 24 focuses on an intra block copy (IBC) mode of ITU-T H.266/Versatile Video Coding (VVC) and an IBC mode of an enhanced compression model (ECM), the IBC mode applicable to the proposed method of the disclosure is not limited to the example of FIG. 24. For example, the IBC mode applicable to the proposed method of the disclosure may include an IBC mode of an advanced video coding standard after ITU-T H.266/VVC.

Referring to FIG. 24, the IBC mode refers to searching for a block 2412 most similar to the current block 2402 from a reconstructed portion of the current picture 2406 through block matching and signaling a block vector (BV) 2410 indicating the block 2412 in the current picture 2406 through a bitstream on the encoder side, and determining the reference block 2412 based on the signaled block vector 2410 and using the reference block 2412 to reconstruct the current block 2402 on the decoder side. The IBC mode may refer to determining a predictor for the block 2402 as the block vector 2410 in a spatial domain, similar to performing inter prediction with a motion vector in a temporal domain.

In an example, the IBC mode applicable to the proposed method of the disclosure may include an IBC merge mode of ITU-T H.266/VVC. The IBC merge mode may refer to constructing a merge candidate list with at least one block vector from among a left neighboring block, an upper neighboring block, and an upper-left neighboring block of the current block 2402, and signaling information (e.g., a merge index) indicating a block vector for the current block in the merge candidate list. When the IBC merge mode is applied, the encoder may determine a block vector for the current block 2402, and may signal, through a bitstream, information (e.g., a merge index) indicating a merge candidate corresponding to the determined block vector in the merge candidate list. When the IBC merge mode is applied, the decoder may obtain information (e.g., a merge index) indicating a merge candidate from a bitstream, construct a merge candidate list in the same manner as the encoder, and then determine, as the block vector 2410 for the current block 2402, a block vector of a merge candidate indicated by the information (e.g., the merge index) in the merge candidate list.

In an example, the IBC mode applicable to the proposed method of the disclosure may include an IBC AMVP mode of ITU-T H.266/VVC. The IBC AMVP mode may refer to constructing a block vector predictor (BVP) candidate list with at least one block vector from among the left neighboring block and the upper neighboring block of the current block 2402, and signaling information (e.g., a BVP index) indicating a BVP candidate corresponding to a BVP for the current block 2402 in the BVP candidate list and a block vector difference (BVD) indicating a difference between the block vector for the current block 2402 and a BVP. When the IBC AMVP mode is applied, the encoder may determine the block vector 2410 for the current block 2402, may determine a BVP candidate from the BVP candidate list, based on the block vector 2410, and may signal, through a bitstream, information (e.g., a BVP index) indicating the determined BVP candidate. When the IBC AMVP mode is applied, the decoder may obtain a BVD and information (e.g., a BVP index) indicating a BVP candidate from a bitstream, construct a BVP candidate list in the same manner as the encoder, and then determine the block vector 2410 for the current block 2402, based on a BVP candidate indicated by the information (e.g., the BVP index) in the BVP candidate list and the BVD (e.g., based on a sum of the BVP and the BVD). Optionally, in the IBC AMVP mode, adaptive motion vector resolution (AMVR) using variable vector precision may be signaled via the bitstream. In this specification, an IBC BVP candidate and an IBC BVP candidate list may be referred to as an IBC AMVP candidate and an IBC AMVP candidate list, respectively.

In an example, the IBC mode applicable to the proposed method of the disclosure may include an IBC mode of an enhanced compression model (ECM). The IBC mode of the ECM may include, for example, an IBC merge mode and/or an IBC AMVP mode. Compared with the IBC merge/AMVP mode of ITU-T H.266/VVC, the IBC mode of the ECM may improve IBC merge/AMVP candidate list construction as follows. Only when an IBC merge/AMVP candidate is valid, the IBC merge/AMVP candidate may be inserted into or added to the IBC merge/AMVP candidate list. At least one of the left neighboring block, the upper neighboring block, the upper-right neighboring block, the lower-left neighboring block, or the upper-left neighboring block and at least one pairwise average candidate may be added to a spatial merge/AMVP candidate list. Template-based adaptive reordering may be applied to the IBC merge list (adaptive reordering of merge candidates with template matching, ARMC-TM).

In an example, the IBC mode applicable to the proposed method of the disclosure may include an IBC with template matching (IBC-TM) mode used in combination with template matching (TM). The IBC-TM mode of an ECM may be combined with the IBC merge mode (referred to as the IBC-TM merge mode) or may be combined with the IBC AMVP mode (referred to as the IBC-TM AMVP mode). Therefore, the IBC-TM mode may refer to combined use of IBC and template matching (TM) for the IBC merge mode or the IBC AMVP mode. The IBC-TM mode may include, for example, an IBC-TM merge mode and/or an IBC-TM AMVP mode.

For example, the IBC-TM merge mode may include refining at least one candidate BVP among at least one neighboring block of the block 2402 (e.g., a left neighboring block, an upper neighboring block, and an upper-left neighboring block) according to a template matching method and competing with a regular IBC merge mode (or adding candidates of the regular IBC merge mode to a merge candidate list). The BVP candidate list may be sorted based on a template matching cost. For example, the BVP candidate list may be arranged such that a lower template matching cost has a higher priority (or such that a higher template matching cost has a lower priority) in the BVP candidate list, or the BVP candidate list may be arranged such that a higher template matching cost has a higher priority (or such that a lower template matching cost has a lower priority) in the BVP candidate list.

For example, the IBC-TM AMVP mode may include refining and sorting a BVP, based on template matching, without signaling a block vector difference (BVD) via the bitstream. As a non-limiting example, a BVP may be refined based on integer pixel precision or 4-pixel (or 4-pel) precision.

The IBC-TM mode (e.g., the IBC-TM merge mode and/or the IBC-TM AMVP mode) may include adding an intra TMP block vector as a spatial candidate to the IBC block vector candidate list (or the IBC AMVP candidate list). In the IBC-TM mode, a template may include left and top neighboring reference pixels (or left and top neighboring pixel region or left and top neighboring blocks) of the block 2402, or a left neighboring reference pixel (or a left neighboring pixel region or a left neighboring block), or a top neighboring reference pixel (or a top neighboring pixel region or a top neighboring block).

FIGS. 25 to 30 illustrate embodiments according to a proposed method of the disclosure (e.g., see FIGS. 17 to 19 and their related descriptions). For convenience of explanation, the embodiments of FIGS. 25, 28, 29, and 30 are referred to as "Proposed Method 1," "Proposed Method 2," "Proposed Method 3," and "Proposed Method 4," respectively. In this specification, for convenience of explanation, terms are expressed as follows.

C: current block
R: reference block
$C_{org}$: original signal of current block
$C_{pred}$: prediction signal of current block
$C_{res}$: residual signal of current block
$R_{rec}$: reconstructed signal of reference block
$R_{pred}$: (simulated) prediction signal of reference block
$R_{res}$: (simulated) residual signal of reference block
Tc: template of current block
$T_R$: template of reference block

A simulated prediction signal refers to a signal (or a predictor or a prediction sample) predicted based on an intra prediction mode having best prediction performance by predicting a block (e.g., the current block or a reference block) based on at least one of available intra prediction modes (e.g., see FIG. 20, FIG. 21, and related descriptions). In this specification, the simulated prediction signal may be briefly referred to as a prediction signal or a virtual prediction signal. In an example, a prediction signal $R_{pred}$ of a reference block may be a simulated prediction signal or a virtual prediction signal of the reference block. However, in the proposed method according to the disclosure, the prediction signal $R_{pred}$ of the reference block is not limited to the simulated prediction signal or the virtual prediction signal of the reference block. In an example, the prediction signal $R_{pred}$ of the reference block may be an actual prediction signal used during reconstruction of the reference block.

A simulated residual signal may refer to a residual signal (or a residual sample) determined using a signal or predictor predicted based on an intra prediction mode having best prediction performance among available intra prediction modes (e.g., see FIG. 20, FIG. 21, and their related descriptions), and, in this specification, may be briefly referred to as a residual signal or a virtual residual signal. In an example, a residual signal $R_{res}$ of a reference block may be a simulated residual signal or a virtual residual signal of the reference block. However, in the proposed method according to the disclosure, the residual signal $R_{res}$ of the reference block is not limited to the simulated residual signal or the virtual residual signal of the reference block. In an example, the residual signal $R_{res}$ of the reference block may be an actual residual signal used during reconstruction of the reference block.

The examples described with reference to FIGS. 25 to 30 are intended to aid in understanding the proposed method of the disclosure (e.g., see FIGS. 17 to 19 and their related descriptions) and are not intended to limit the proposed method of the disclosure. Accordingly, some configurations may be excluded from the examples described with reference to FIGS. 25 to 30, other configurations not illustrated may be added, and the execution order may be changed. Moreover, the examples of FIGS. 25 to 30 may be implemented independently, or at least one of the examples may be implemented in combination with each other.

FIG. 25 illustrates the proposed method 1 of the disclosure. The proposed method 1 of the disclosure may be performed by an apparatus (e.g., the image decoding apparatus 100 or the image encoding apparatus 200). The proposed method 1 of the disclosure relates to performing residual prediction based on template matching, and is an example of using an intra prediction mode of a reference block as an intra prediction mode of the current block.

Referring to FIG. 25, in operation 1, the apparatus (e.g., the image encoding apparatus 200) may search for a portion (or a template) that best matches the template $T_C$ of the current block from a given search area (e.g., the search area 2310) of a spatial domain by using the template $T_C$ of the current block. As an example that does not limit the proposed method of the disclosure, the apparatus may search for a template $T_R$ of a reference block, based on template matching prediction (TMP). The apparatus may also determine a reference block corresponding to the template $T_R$ of the reference block. As a more detailed example, the apparatus may search for the template $T_R$ of the reference block by performing the operation described above with reference to FIG. 23.

For example, operation 1 of FIG. 25 may be performed in operation 1702 of FIG. 17, the template $T_C$ of the current block may correspond to the first template or the first pixel region of FIG. 17, and the template $T_R$ of the reference block may correspond to the second template or the second pixel region of FIG. 17.

In operation 2 of FIG. 25, the apparatus (e.g., the image encoding apparatus 200) may determine a prediction signal of a reference block for an intra prediction mode set (or a plurality of intra prediction modes) 2512 by using a reference pixel (or a neighboring pixel) of the reference block corresponding to the found template $T_R$, and may find a best matched intra prediction mode from the intra prediction mode set (or from the plurality of intra prediction modes) by comparing a distortion between a reconstructed signal $R_{rec}$ of the reference block and the prediction signal of the reference block. The apparatus may determine the intra prediction mode found in this way as an intra prediction mode of the reference block, and determine a prediction signal $R_{pred}$ of the reference block, based on the determined intra prediction mode. As an example that does not limit the proposed method of the disclosure, the intra prediction mode set (or the plurality of intra prediction modes) may include the intra prediction modes described above with reference to FIGS. 20 and 21.

For example, operation 2 of FIG. 25 may be performed in operation 1704 of FIG. 17, and the intra prediction mode of the reference block determined from among the intra prediction mode set (or from among the plurality of intra prediction modes) 2512 in FIG. 25 may correspond to the intra prediction mode of the reference block in FIG. 17.

In operation 3 of FIG. 25, the apparatus (e.g., the image encoding apparatus 200) may have or determine, as a residual predictor of the current block, a residual block (e.g., a residual signal $R_{res}$ of the reference block) corresponding to the intra prediction mode determined in operation 2. For example, the apparatus may determine the residual signal $R_{res}$ of the reference block, based on the reconstructed signal $R_{rec}$ of the reference block and the prediction signal $R_{pred}$ of the reference block (e.g., a difference $R_{rec} - R_{pred}$ between the reconstructed signal of the reference block and the prediction signal of the reference block).

In operation 4 of FIG. 25, the apparatus (e.g., the image encoding apparatus 200) may predict the current block with the reference pixel (or with the neighboring pixel) of the current block by using the intra prediction mode (e.g., the best matched intra prediction mode) of the reference block determined in operation 2. For example, the apparatus may determine a prediction signal (or a predictor) $C_{pred}$ of the current block by applying the intra prediction mode of the reference block to the reference pixel (or to the neighboring pixel) of the current block.

In operation 5 of FIG. 25, the apparatus (e.g., the image encoding apparatus 200) may additionally predict the residual signal $C_{res}$ of the current block, based on the residual predictor corresponding to the template $T_R$ of the reference block (e.g., the residual signal $R_{res}$ of the reference block). In an example, as described above with reference to FIG. 17, the apparatus may determine a residual difference signal $\tilde{C}_{res}$ of the current block, based on the original signal $C_{org}$ of the current block, the prediction signal $C_{pred}$ of the current block, and the residual signal $R_{res}$ of the reference block. In an example, the apparatus may determine the residual signal $C_{res}$ of the current block, based on the original signal $C_{org}$ of the current block and the predictor $C_{pred}$ of the current block (e.g., a difference $C_{org} - C_{pred}$ between the original signal of the current block and the predictor of the current block), and may determine the residual difference signal $\tilde{C}_{res}$ of the current block, based on the residual signal $C_{res}$ of the current block and the residual signal $R_{res}$ of the reference block (e.g., a difference $C_{res} - R_{res}$ between the residual signal of the current block and the residual signal of the reference block). For example, an operation of the apparatus illustrated in FIG. 25 may be executed based on Equation 1.

$$[\text{Equation 1}]$$

$$R_{res} = R_{rec} - R_{pred}$$

$$C_{res} = C_{org} - C_{pred}$$

$$\tilde{C}_{res} = C_{res} - R_{res}$$

For example, operations 3 to 5 of FIG. 25 may be performed in operation 1706 of FIG. 17.

The apparatus (e.g., the image encoding apparatus 200) may process the residual difference signal $\tilde{C}_{res}$ of the current block to encode the same into a bitstream (e.g., see operation 1708 of FIG. 17 and its related description). In an example, the apparatus may obtain transform coefficient information for the current block by performing transformation and quantization (or scaling), based on the residual difference signal of the current block, and may encode the transform coefficient information into a bitstream. In an example, the apparatus may omit transformation and quantization (or scaling) and encode the residual difference signal of the current block into a bitstream. In a proposed method of the disclosure, the residual difference signal of the current block may be encoded into the bitstream not only by these examples, but also by various methods.

Alternatively, operation 5 of FIG. 25 may be optional. When operation 5 of FIG. 25 is not performed, residual prediction is not applied to the current block (or to the residual signal $C_{res}$ of the current block), and only the intra prediction mode of the current block may be derived from the template-based reference area. In this case, the apparatus (e.g., the image encoding apparatus 200) may determine the residual signal $C_{res}$ of the current block by using the intra prediction mode of the reference block as the intra prediction mode of the current block, but may encode the residual signal $C_{res}$ of the

current block into a bitstream by processing the residual signal $C_{res}$ of the current block without predicting the residual signal $C_{res}$ of the current block, based on the residual signal $R_{res}$ of the reference block.

For example, when operation 5 of FIG. 25 is optional, the apparatus may determine whether to perform residual prediction for the current block (or on the residual signal $C_{res}$ of the current block). When the apparatus determines not to perform residual prediction, the apparatus may determine the residual signal $C_{res}$ of the current block, based on the original signal $C_{org}$ of the current block and the prediction signal $C_{pred}$ of the current block (e.g., the difference $C_{org}$ - $C_{pred}$ between the original signal of the current block and the prediction signal of the current block), and may process the residual signal $C_{res}$ of the current block to encode the residual signal $C_{res}$ of the current block into a bitstream. In this example, when the apparatus determines to perform residual prediction for the current block (or on the residual signal $C_{res}$ of the current block), the apparatus may perform the operation described above with reference to operation 5 of FIG. 25 to determine the residual difference signal $\tilde{C}_{res}$ of the current block, and may process the determined residual difference signal $\tilde{C}_{res}$ of the current block to encode the same into a bitstream.

In this example, whether operation 5 of FIG. 25 is applied (or whether residual prediction is performed for the current block) may be indicated by flag information (signaled via the bitstream). In an example, when a value of the flag information is 0, the flag information may indicate that residual prediction is performed for the current block, and, when the value of the flag information is 1, the flag information may indicate that residual prediction is not performed for the current block. In an example, when the value of the flag information is 1, the flag information may indicate that residual prediction is not performed for the current block, and, when the value of the flag information is 0, the flag information may indicate that residual prediction is performed for the current block. The value of the flag information may be a value other than 0 and 1. When operation 5 of FIG. 25 is optional, the apparatus (e.g., the image encoding apparatus 200) may encode, in the bitstream, flag information indicating whether residual prediction is performed for the current block.

For example, the flag information indicating whether residual prediction is performed for the current block may be signaled in units of predetermined data. For example, the predetermined data unit may be a block, a maximum coding block (or a coding tree unit (CTU)), a tile, a slice, a picture, a sequence, etc. When the bitstream does not include the flag information, the information may be inferred to be a value indicating either to apply or not to apply residual prediction to the current block. The flag information may be signaled using an index. Even when it is signaled in a higher-level data unit (e.g., a picture (or a picture parameter set (PPS)), a sequence (or a sequence parameter set (SPS)), etc.) that residual prediction is applied to the current block, flag information indicating whether residual prediction is performed for the current block may be transmitted in a lower-level data unit (e.g., a block).

An operation corresponding to the operation on the encoder side described above with reference to FIG. 25 may be performed on the decoder side.

For example, the apparatus (e.g., the image decoding apparatus 100) may obtain the residual difference signal $\tilde{C}_{res}$ of the current block by processing the bitstream (e.g., see operation 1802 of FIG. 18 and its related description). Then, the apparatus may determine the residual signal $R_{res}$ of the reference block and the prediction signal $C_{pred}$ of the current block by performing the operations described above with reference to operations 1 to 4 of FIG. 25 (e.g., see operations 1804 and 1806 of FIG. 18 and their related descriptions). Then, the apparatus may determine the reconstructed signal $C_{rec}$ of the current block, based on, for example, the residual difference signal $\tilde{C}_{res}$ of the current block, the residual signal $R_{res}$ of the reference block, and the prediction signal $C_{pred}$ of the current block (e.g., see operation 1808 of FIG. 18 and its related description). In an example, the apparatus may determine the residual signal $C_{res}$ of the current block, based on the residual difference signal $\tilde{C}_{res}$ of the current block and the residual signal $R_{res}$ of the reference block (e.g., a sum $\tilde{C}_{res}$+ $R_{res}$ of the residual difference signal of the current block and the residual signal of the reference block), and may determine the reconstructed signal $C_{rec}$ of the current block, based on the residual signal $C_{res}$ of the current block and the predictor $C_{pred}$ of the current block (e.g., a sum $C_{res}$ + $C_{pred}$ of the residual signal of the current block and the predictor of the current block).

For example, an operation of the apparatus (e.g., the image decoding apparatus 100) related to FIG. 25 may be performed based on Equation 2. For example, in the operation of the apparatus (e.g., the image decoding apparatus 100) related to FIG. 25, the template Tc of the current block may correspond to the first template or the first pixel region of FIG. 18, and the template $T_R$ of the reference block may correspond to the second template or the second pixel region of FIG. 18.

$$[\text{Equation 2}]$$

$$R_{res} = R_{rec} - R_{pred}$$

$$C_{res} = \tilde{C}_{res} + R_{res}$$

$$C_{rec} = C_{pred} + C_{res}$$

Alternatively, similar to an operation on the encoder side, residual prediction for the current block may be optional. In this case, the apparatus (e.g., the image decoding apparatus 100) may obtain, from the bitstream, flag information indicating whether residual prediction is applied to the current block (or the residual signal $C_{res}$ of the current block). When the flag information indicates that residual prediction is applied to the current block, the apparatus may determine the reconstructed signal $C_{rec}$ of the current block by performing the above-described operations (e.g., based on the residual difference signal $\tilde{C}_{res}$ of the current block, the residual signal $R_{res}$ of the reference block, and the prediction signal $C_{pred}$ of the current block) (e.g., see operation 1808 of FIG. 18 and its related description). When the flag information indicates that residual prediction is not applied to the current block, the apparatus may determine the reconstructed signal $C_{rec}$ of the current block, based on the residual signal $C_{res}$ of the current block and the prediction signal $C_{pred}$ of the current block (e.g., a sum $C_{res} + C_{pred}$ of the residual signal of the current block and the prediction signal of the current block).

In the proposed method 1 of the disclosure, the encoder and the decoder determine a best intra prediction mode for the reference block and determine the prediction signal $C_{pred}$ of the current block and the prediction signal $R_{pred}$ of the reference block by using the determined intra prediction mode, so that the intra prediction mode (e.g., the intra prediction mode described above with reference to FIG. 20) may not be signaled through the bitstream. The proposed method of the disclosure may be defined or used as a new intra mode, and the new intra mode may be referred to as a residual prediction intra mode in this specification.

FIG. 26 illustrates templates applicable to a proposed method of the disclosure. The example of FIG. 26 may be used in operation 1 of FIG. 25 or operation 1702 of FIG. 17 or operation 1804 of FIG. 18 or operation 3 of FIG. 29. In the example of FIG. 26, it is assumed that a width and a height of a block 2602 are W and H, respectively. The example of FIG. 26 is only an example, and shapes and cost functions of templates applicable to a proposed method of the disclosure are not limited to the example of FIG. 26. For example, the numbers of lines constituting templates 2604, 2614, and 2624 of FIG. 26(a), FIG. 26(b), and FIG. 26(c) are illustrated as 4, W/2, and H/2, but the proposed method of the disclosure may be equally applied even when the templates 2604, 2614, and 2624 have different numbers of lines.

Referring to FIG. 26(a), FIG. 26(b), and FIG. 26(c), the templates 2604, 2614, and 2624 corresponding to the block 2602 may have L-shapes, or may include only a top neighboring pixel region (or a top neighboring block), or may include only a left neighboring pixel region (or a left neighboring block). As described above with reference to FIG. 23, an L-shaped template may include, for example, left, top, and upper-left neighboring pixel regions (or left, top, and upper-left neighboring blocks) of the block 2602.

In an example, the shapes of the templates 2604, 2614, and 2624 may be explicitly signaled (via a bitstream). In an example, the shapes of the templates 2604, 2614, and 2624 may be implicitly signaled (without signaling via a bitstream). In this example, the shapes of the templates 2604, 2614, and 2624 may be determined based on a size of the current block 2602. In a specific example, when the width W of the current block 2602 is greater than the height H thereof, the templates 2604, 2614, and 2624 may include top neighboring pixel regions (or top neighboring blocks). In a specific example, when the height H of the current block 2602 is greater than the width W thereof, the templates 2604, 2614, and 2624 may include left neighboring pixel regions (or left neighboring blocks).

Sizes of the templates 2604, 2614, and 2624 may be fixed or may be variable. In an example, widths and heights of the templates 2604, 2614, and 2624 may be 4 and 4xH_4x4_Wx4 (e.g., see FIG. 26(a)). In an example, the widths and heights of the templates 2604, 2614, and 2624 may be W/2 and H/2 (e.g., see FIG. 26(b)). In an example, lengths of the templates 2604, 2614, and 2624 may be equal to the size of the current block (e.g., the current coding unit (CU)) or may be twice the size of the current block (e.g., the current CU) (e.g., see FIG. 26(c)).

Referring back to FIG. 26, in operation 1 of FIG. 25, in order to search for a template that best matches the template Tc of the current block from a given search area, an apparatus (e.g., the image decoding apparatus 100 or the image encoding apparatus 200) may evaluate a pixel difference between the template Tc of the current block and the template currently being searched for by a cost function. The apparatus may determine, as the template $T_R$ of the reference block, a pixel region corresponding to a cost function having a lowest value or highest value in the given search area. As described above with reference to FIGS. 17 and 18, the cost function may include, for example, at least one of a sum of absolute differences (SAD), a sum of squared differences (SSD), or the number of pixels having the same pixel value. For example, the SAD may be determined based on Equation 3, the SSD may be determined based on Equation 4, the number Num of pixels having the same pixel value may be determined based on Equation 5, $Tmp_{cur}(i)$ represents a pixel of the template Tc of the current block, $Tmp_{ref}(i)$ represents a pixel of the template $T_R$ of the reference block, and (A ? B:C) indicates that, when condition A is satisfied, B is determined, and, when condition A is not satisfied, C is determined. Therefore, Equation 5 may represent the number Num of pixels having the same pixel value between the template Tc of the current block and the template $T_R$ of the reference block.

[Equation 3]

$$SAD = \sum_{i=0}^{k} \left| Tmp_{cur}(i) - Tmp_{ref}(i) \right|$$

[Equation 4]

$$SSD = \sum_{i=0}^{k} \left| Tmp_{cur}(i) - Tmp_{ref}(i) \right|^2$$

[Equation 5]

$$Num = \sum_{i=0}^{k} (Tmp_{cur}(i) == Tmp_{ref}(i) \ ? \ 1 : 0)$$

FIG. 27 illustrates a reference pixel for intra prediction applicable to a proposed method of the disclosure. The example of FIG. 27 is only an example, and a reference pixel 2704 for intra prediction applicable to a proposed method of the disclosure is not limited to the example of FIG. 27. For example, in the example of FIG. 27, the number of lines of the reference pixel 2704 for intra prediction is illustrated as 4. However, the number of lines of the reference pixel 2704 may be an integer greater than or equal to 1. For example, in the example of FIG. 27, line lengths of the reference pixel 2704 on the left side and the top are illustrated as twice (2H and 2W) a height H and a width W of a block 2702. However, the line lengths of the reference pixel 2704 may also be other values. For example, although FIG. 27 focuses on the intra prediction of the reference block 2702, the reference pixels described above with reference to FIG. 27 may be equally used even in intra prediction of the current block.

As described above with reference to FIGS. 20 and 21, intra prediction modes applicable to the proposed method of the disclosure may include an intra planar mode (or INTRA_PLANAR), an intra DC mode (or INTRA_DC), intra angular modes (or INTRA_ANGULAR2 to INTRA_ANGULAR66), and/or other intra prediction modes of ITU-T H.266/VVC (e.g., a CCLM mode), and/or an intra prediction mode of an advanced video coding standard after ITU-T H.266/VVC. All or at least some of the available intra prediction modes may be considered for prediction of the reference block 2702.

The number (or size) of reference pixels for intra prediction of the reference block 2702 may be different from a template size (e.g., see FIG. 26 and its related description) for searching for the reference block. In an example, as illustrated in FIG. 27, when a length of a template is equal to a block size (e.g., see related descriptions of FIG. 26(b) and FIG. 26(c)), a reference pixel (or a length of the reference pixel) used for prediction may be twice (2W) the width W of the reference block 2702 at the top, and twice (2H) the height H of the reference block 2702 on the left side. As a non-limiting example, 2Wx4 reference pixels may be used at the top-left, top, and top-right of the block 2702, and 2Hx4 reference pixels may be used at the top-left, top, and bottom-left of the block 2702.

Similar to multiple reference line intra prediction, multiple lines of (neighboring) reference pixels of the reference block 2702 may be used for prediction. In an example, in the example of FIG. 27, four lines of reference pixels 2704 among the (neighboring) reference pixels of the reference block 2702 may be used for intra prediction mode determination and/or intra prediction of the reference block 2702. In an example, the number of reference lines (e.g., an integer greater than or equal to 1) other than four may be used for intra prediction mode determination and/or intra prediction of the reference block 2702. Among the multiple reference lines, a (predicted) intra mode determined by a cost function (e.g., a least distortion cost or minimum cost) and/or a best line (or a line index or line number) used for prediction may be used for intra prediction of the current block. In this case, an intra prediction mode and a reference line index for the current block may not be signaled.

For example, a cost function used to determine the intra prediction mode of the reference block 2702 and/or to compare prediction signals may include at least one of a sum of absolute differences (SAD), a sum of squared differences (SSD), or the number of pixels having the same pixel value (e.g., see FIGS. 17, 18, and 26 and their related descriptions). For example, the SAD may be determined based on Equation 3, the SSD may be determined based on Equation 4, and the number Num of pixels having the same pixel value may be determined based on Equation 5. In this example, in Equations 3 to 5, Tmp$_{cur}$(i) represents a pixel of the reference block 2702, and Tmp$_{ref}$(i) represents the reference pixel 2704 of the reference block 2702.

FIG. 28 illustrates the proposed method 2 of the disclosure.

The proposed method 2 of the disclosure may be performed by the apparatus (e.g., the image decoding apparatus 100 or the image encoding apparatus 200). The proposed method 2 of the disclosure relates to performing residual prediction based on a block vector, and is an example of using an intra prediction mode of a reference block as an intra prediction mode of the current block.

Referring to FIG. 28, in operation 1, the apparatus (e.g., the image encoding apparatus 200) may search for a block (or a reference block) R matching the current block in a given search area of a spatial domain by using a block vector BV. For example, the search area may be the same as or different from the search area 2310 for template matching. As an example that does not limit the proposed method of the disclosure, the apparatus may obtain a block vector BV, based on block matching in the given search area, and search for the block (or the reference block) R that matches the current block. As a more detailed example, the apparatus may search for the block vector BV and search for the reference block R, by performing the operation described with reference to FIG. 24. For example, operation 1 of FIG. 25 may be performed in operation 1702 of FIG. 17.

In operation 2 of FIG. 28, the apparatus (e.g., the image encoding apparatus 200) may determine a prediction signal of a reference block for an intra prediction mode set (or a plurality of intra prediction modes) 2812 by using a reference pixel (or a neighboring pixel) of the reference block, and may find a best matched intra prediction mode from the intra prediction mode set (or from the plurality of intra prediction modes) by comparing a distortion between a reconstructed signal R$_{rec}$ of the reference block and the prediction signal of the reference block. The apparatus may determine the intra prediction mode found in this way as an intra prediction mode of the reference block, and determine a prediction signal R$_{pred}$ of the reference block, based on the determined intra prediction mode. As an example that does not limit the proposed method of the disclosure, the intra prediction mode set (or the plurality of intra prediction modes) may include the intra prediction modes described above with reference to FIGS. 20 and 21. For example, operation 2 of FIG. 28 may be performed in operation 1704 of FIG. 17, and the intra prediction mode of the reference block determined from among the intra prediction mode set (or from among the plurality of intra prediction modes) 2812 in FIG. 28 may correspond to the intra prediction mode of the reference block of FIG. 17.

In operation 3 of FIG. 28, the apparatus (e.g., the image encoding apparatus 200) may have or determine, as a residual predictor of the current block, a residual block (e.g., a residual signal R$_{res}$ of the reference block) corresponding to the intra prediction mode determined in operation 2. For example, the apparatus may determine the residual signal R$_{res}$ of the reference block, based on the reconstructed signal R$_{rec}$ of the reference block and the prediction signal R$_{pred}$ of the reference block (e.g., a difference R$_{rec}$ - R$_{pred}$ between the reconstructed signal of the reference block and the prediction signal of the reference block). For example, operation 3 of FIG. 28 may correspond to operation 3 of FIG. 25.

In operation 4 of FIG. 28, the apparatus (e.g., the image encoding apparatus 200) may predict the current block with a reference pixel (or with the neighboring pixel) 2804 of the current block by using the intra prediction mode (e.g., the best matched intra prediction mode) of the reference block determined in operation 2. For example, the apparatus may determine a prediction signal (or a predictor) C$_{pred}$ of the current block by applying the intra prediction mode of the reference block to the reference pixel (or the neighboring pixel) 2804 of the current block.

In operation 5 of FIG. 28, the apparatus (e.g., the image encoding apparatus 200) may additionally predict the residual signal C$_{res}$ of the current block, based on the residual predictor of the current block (e.g., the residual signal R$_{res}$ of the reference block). In an example, as described above with reference to FIG. 17, the apparatus may determine a residual difference signal $\tilde{C}_{res}$ of the current block, based on the original signal C$_{org}$ of the current block, the prediction signal C$_{pred}$ of the current block, and the residual signal R$_{res}$ of the reference block. In an example, the apparatus may determine the residual signal C$_{res}$ of the current block, based on the original signal C$_{org}$ of the current block and the predictor C$_{pred}$ of the current block (e.g., a difference C$_{org}$ - C$_{pred}$ between the original signal of the current block and the predictor of the current block), and may determine the residual difference signal $\tilde{C}_{res}$ of the current block, based on the residual signal C$_{res}$ of the current block and the residual signal R$_{res}$ of the reference block (e.g., a difference C$_{res}$ - R$_{res}$ between the residual signal of the current block and the residual signal of the reference block). For example, an operation of the apparatus illustrated in FIG. 28 may be executed based on Equation 1 (see FIG. 20 and its related description).

For example, operations 3 to 5 of FIG. 28 may be performed in operation 1706 of FIG. 17.

The apparatus (e.g., the image encoding apparatus 200) may process the residual difference signal $\tilde{C}_{res}$ of the current block to encode the same into a bitstream (e.g., see operation 1708 of FIG. 17 and its related description). In an example, the apparatus may obtain transform coefficient information for the current block by performing transformation and quantization (or scaling), based on the residual difference signal of the current block, and may encode the transform coefficient information into a bitstream. In an example, the apparatus may omit transformation and quantization (or scaling) and encode the residual difference signal of the current block into a bitstream. In a proposed method of the disclosure, the residual difference signal of the current block may be encoded into the bitstream not only by these examples, but also by various methods.

Alternatively, operation 5 of FIG. 28 may be optional. Residual prediction is not applied to the current block (or to the residual signal $C_{res}$ of the current block), and only the intra prediction mode of the current block may be derived from the template-based reference area. In this case, the apparatus (e.g., the image encoding apparatus 200) may determine the residual signal $C_{res}$ of the current block by using the intra prediction mode of the reference block as the intra prediction mode of the current block, but may encode the residual signal $C_{res}$ of the current block into a bitstream by processing the residual signal $C_{res}$ of the current block without predicting the residual signal $C_{res}$ of the current block, based on the residual signal $R_{res}$ of the reference block.

For example, when operation 5 of FIG. 28 is optional, the apparatus may determine whether to perform residual prediction for the current block (or on the residual signal $C_{res}$ of the current block). When the apparatus determines not to perform residual prediction, the apparatus may determine the residual signal $C_{res}$ of the current block, based on the original signal $C_{org}$ of the current block and the prediction signal $C_{pred}$ of the current block (e.g., the difference $C_{org}$ - $C_{pred}$ between the original signal of the current block and the prediction signal of the current block), and may process the residual signal $C_{res}$ of the current block to encode the residual signal $C_{res}$ of the current block into a bitstream. In this example, when the apparatus determines to perform residual prediction for the current block (or on the residual signal $C_{res}$ of the current block), the apparatus may perform the operation described above with reference to operation 5 of FIG. 28 to determine the residual difference signal $\tilde{C}_{res}$ of the current block, and may process the determined residual difference signal $\tilde{C}_{res}$ of the current block to encode the same into a bitstream.

In this example, whether operation 5 of FIG. 28 is applied (or whether residual prediction is performed for the current block) may be indicated by flag information (signaled via the bitstream). In an example, when a value of the flag information is 0, the flag information may indicate that residual prediction is performed for the current block, and, when the value of the flag information is 1, the flag information may indicate that residual prediction is not performed for the current block. In an example, when the value of the flag information is 1, the flag information may indicate that residual prediction is not performed for the current block, and, when the value of the flag information is 0, the flag information may indicate that residual prediction is performed for the current block. The value of the flag information may be a value other than 0 and 1. When operation 5 of FIG. 28 is optional, the apparatus (e.g., the image encoding apparatus 200) may encode, in the bitstream, flag information indicating whether residual prediction is performed for the current block.

For example, the flag information indicating whether residual prediction is performed for the current block may be signaled in units of predetermined data. For example, the predetermined data unit may be a block, a maximum coding block (or a coding tree unit (CTU)), a tile, a slice, a picture, a sequence, etc. When the bitstream does not include the flag information, the information may be inferred to be a value indicating either to apply or not to apply residual prediction to the current block. The flag information may be signaled using an index. Even when it is signaled in a higher-level data unit (e.g., a picture (or a picture parameter set (PPS)), a sequence (or a sequence parameter set (SPS)), etc.) that residual prediction is applied to the current block, flag information indicating whether residual prediction is performed for the current block may be transmitted in a lower-level data unit (e.g., a block).

An operation corresponding to the operation on the encoder side described above with reference to FIG. 28 may be performed on the decoder side.

For example, the apparatus (e.g., the image decoding apparatus 100) may obtain the residual difference signal $\tilde{C}_{res}$ of the current block by processing the bitstream (e.g., see operation 1802 of FIG. 18 and its related description). The apparatus may process the bitstream to obtain the block vector BV of the current block (e.g., see FIG. 24 and its related description), and may search for the block (or the reference block) R matching the current block by using the BV. Then, the apparatus may determine the residual signal $R_{res}$ of the reference block and the prediction signal $C_{pred}$ of the current block by performing the operations described above with reference to operations 2 to 4 of FIG. 28 (e.g., see operations 1804 and 1806 of FIG. 18 and their related descriptions). Then, the apparatus may determine the reconstructed signal $C_{rec}$ of the current block, based on, for example, the residual difference signal $\tilde{C}_{res}$ of the current block, the residual signal $R_{res}$ of the reference block, and the prediction signal $C_{pred}$ of the current block (e.g., see operation 1808 of FIG. 18 and its related description). In an example, the apparatus may determine the residual signal $C_{res}$ of the current block, based on the residual difference signal $\tilde{C}_{res}$ of the current block and the residual signal $R_{res}$ of the reference block (e.g., a sum $\tilde{C}_{res}$ + $R_{res}$ of the residual difference signal of the current block and the residual signal of the reference block), and may determine the reconstructed signal $C_{rec}$ of the current block, based on the residual signal $C_{res}$ of the current block and the predictor $C_{pred}$ of the current block (e.g., a sum $C_{res}$ + $C_{pred}$ of the residual signal of the current block and the predictor of the current block). For example, an operation of the apparatus (e.g., the image decoding apparatus 100) related to FIG. 28 may be performed based on Equation 2.

Alternatively, similar to an operation on the encoder side, residual prediction for the current block may be optional. In this case, the apparatus (e.g., the image decoding apparatus 100) may obtain, from the bitstream, flag information indicating whether residual prediction is applied to the current block (or the residual signal $C_{res}$ of the current block). When the flag information indicates that residual prediction is applied to the current block, the apparatus may determine the reconstructed signal $C_{rec}$ of the current block by performing the above-described operations (e.g., based on the residual difference signal $\tilde{C}_{res}$ of the current block, the residual signal $R_{res}$ of the reference block, and the prediction signal $C_{pred}$ of the current block) (e.g., see operation 1808 of FIG. 18 and its related description). When the flag information indicates that residual prediction is not applied to the current block, the apparatus may determine the reconstructed signal $C_{rec}$ of the current block, based on the residual signal $C_{res}$ of the current block and the prediction signal $C_{pred}$ of the current block (e.g., a sum $C_{res} + C_{pred}$ of the residual signal of the current block and the prediction signal of the current block).

The proposed method 2 of the disclosure differs from the proposed method 1 of the disclosure in that the reference block R is searched for using the block vector BV instead of template matching. Therefore, in the proposed method 2 of the disclosure, the block vector BV may be signaled via a bitstream. Similar to the proposed method 1 of the disclosure, in the proposed method 2 of the disclosure, the encoder and the decoder determine a best intra prediction mode for the reference block and determine the prediction signal $C_{pred}$ of the current block and the prediction signal $R_{pred}$ of the reference block by using the determined intra prediction mode, so that the intra prediction mode (e.g., the intra prediction mode described above with reference to FIG. 20) may not be signaled through the bitstream. The proposed method of the disclosure may be defined or used as a new intra mode (or a residual prediction intra mode).

For example, the intra prediction mode for intra prediction of the reference block may consider all or at least some of the intra prediction modes described above with reference to FIGS. 20, 21, and 27. A reference pixel for intra prediction of a reference block may be determined as described above with reference to FIG. 27. A cost function used to determine the intra prediction mode of the reference block may be at least one of the cost functions described above with reference to FIG. 27 (e.g., see FIGS. 17, 18, and 26 and their related descriptions).

And/or, for the cost function, a sum of absolute transformed differences (SATD) may be used. FIG. 27 and the entire related description thereof are incorporated herein by reference.

FIG. 29 illustrates the proposed method 3 of the disclosure.

The proposed method 3 of the disclosure may be performed by an apparatus (e.g., the image decoding apparatus 100 or the image encoding apparatus 200). The proposed method 3 of the disclosure relates to execution of residual prediction based on template matching (or a residual prediction intra mode), and is an example of signaling an intra prediction mode of the current block through a bitstream and using the intra prediction mode of the current block as an intra prediction mode of the reference block.

Referring to FIG. 29, in operation 1, the apparatus (e.g., the image encoding apparatus 200) may determine a prediction signal of the current block for an intra prediction mode set (or a plurality of intra prediction modes) 2902 by using a reference pixel (or a neighboring pixel) of the current block, and may find a best matched intra prediction mode from the intra prediction mode set (or from the plurality of intra prediction modes) by comparing a distortion between an original signal $C_{org}$ of the current block and the prediction signal of the current block. The apparatus may determine the intra prediction mode found in this way as the intra prediction mode of the current block, and determine a prediction signal $C_{pred}$ of the current block, based on the determined intra prediction mode. As an example that does not limit the proposed method of the disclosure, the intra prediction mode set (or the plurality of intra prediction modes) may include the intra prediction modes described above with reference to FIGS. 20 and 21. The intra prediction mode of the current block determined in this way may be used as the intra prediction mode of the reference block, and may be signaled to the decoder through a bitstream.

Alternatively, in operation 1 of FIG. 29, the intra prediction mode of the current block may be determined based on a template-based intra mode derivation (TIMD) method. Because the decoder may also determine the intra prediction mode of the current block in the same manner, the apparatus (e.g., the image encoding apparatus 200) may not signal the intra prediction mode of the current block through the bitstream. In detail, the apparatus may determine a prediction signal for a template of the current block by performing intra prediction for a template of the current block by using a reference pixel of the template of the current block (or a neighboring pixel region or neighboring block of the current block) for each of the intra prediction mode set (or the plurality of intra prediction modes) (e.g., see FIGS. 20 and 21 and their related descriptions), may determine cost functions (e.g., an SAD, an SSD, a sum of absolute transformed difference (SATD)) by using a reconstructed signal and the prediction signal of the template of the current block, and may derive one or two intra prediction modes corresponding to a cost function of a lowest or highest value among the determined cost functions. As an example that does not limit the proposed method of the disclosure, the template of the current block may include at least one of an upper neighboring pixel region, a left neighboring pixel region, or an upper-left neighboring pixel region of the current block. Instead of TIMD, a decoder side intra mode derivation (DIMD) method may be used.

For example, operation 1 of FIG. 29 may be performed in operation 1704 of FIG. 17, and the intra prediction mode of the current block determined from among the intra prediction mode set (or from among the plurality of intra prediction modes) 2902 in FIG. 29 may correspond to the intra prediction mode of the current block in FIG. 17.

In operation 2 of FIG. 29, the apparatus (e.g., the image encoding apparatus 200) may generate or determine a residual signal $C_{res}$ of the current block. For example, the apparatus may generate or determine the residual signal $C_{res}$ of the current block, based on the original signal $C_{org}$ of the current block and the prediction signal $C_{pred}$ of the current block (e.g., a difference $C_{org} - C_{pred}$ between the original signal of the current block and the prediction signal of the current block).

In operation 3 of FIG. 29, the apparatus (e.g., the image encoding apparatus 200) may search for a portion (or a template) that best matches the template Tc of the current block from a given search area of a spatial domain by using the template Tc of the current block. As an example that does not limit the proposed method of the disclosure, the apparatus may search for a template $T_R$ of a reference block, based on template matching prediction (TMP). The apparatus may also determine a reference block corresponding to the template $T_R$ of the reference block. As a more detailed example, the apparatus may search for the template $T_R$ of the reference block by performing the operation described above in relation to FIG. 23.

For example, operation 3 of FIG. 29 may be performed in operation 1702 of FIG. 17, the template Tc of the current block may correspond to the first template or the first pixel region of FIG. 17, and the template $T_R$ of the reference block may correspond to the second template or the second pixel region of FIG. 17. Operation 3 of FIG. 29 may correspond to operation 1 of FIG. 25.

In operation 4 of FIG. 29, the apparatus (e.g., the image encoding apparatus 200) may predict the reference block with the reference pixel (or with the neighboring pixel) of the reference block by using the intra prediction mode (e.g., the best matched intra prediction mode) of the current block determined in operation 1. For example, the apparatus may determine a prediction signal (or a predictor) $R_{pred}$ of the reference block by applying the intra prediction mode of the current block to the reference pixel (or the neighboring pixel) of the reference block.

In operation 5 of FIG. 29, the apparatus (e.g., the image encoding apparatus 200) may have or determine, as a residual predictor of the current block, a residual block (e.g., a residual signal $R_{res}$ of the reference block) corresponding to the intra prediction mode determined in operation 1. For example, the apparatus may determine the residual signal $R_{res}$ of the reference block, based on the reconstructed signal $R_{rec}$ of the reference block and the prediction signal $R_{pred}$ of the reference block (e.g., a difference $R_{rec}$ - $R_{pred}$ between the reconstructed signal of the reference block and the prediction signal of the reference block).

In operation 6 of FIG. 29, the apparatus (e.g., the image encoding apparatus 200) may additionally predict the residual signal $C_{res}$ of the current block, based on the residual predictor corresponding to the template $T_R$ of the reference block (e.g., the residual signal $R_{res}$ of the reference block). In an example, as described above with reference to FIG. 17, the apparatus may determine a residual difference signal $\check{C}_{res}$ of the current block, based on the original signal $C_{org}$ of the current block, the prediction signal $C_{pred}$ of the current block, and the residual signal $R_{res}$ of the reference block. In an example, the apparatus may determine the residual signal $C_{res}$ of the current block, based on the original signal $C_{org}$ of the current block and the predictor $C_{pred}$ of the current block (e.g., a difference $C_{org}$ - $C_{pred}$ between the original signal of the current block and the predictor of the current block), and may determine the residual difference signal $\check{C}_{res}$ of the current block, based on the residual signal $C_{res}$ of the current block and the residual signal $R_{res}$ of the reference block (e.g., a difference $C_{res}$ - $R_{res}$ between the residual signal of the current block and the residual signal of the reference block). For example, an operation of the apparatus illustrated in FIG. 29 may be executed based on Equation 1 (see FIG. 20 and its related description).

For example, operations 4 to 6 of FIG. 29 may be performed in operation 1706 of FIG. 17.

The apparatus (e.g., the image encoding apparatus 200) may process the residual difference signal $\check{C}_{res}$ of the current block to encode the same into a bitstream (e.g., see operation 1708 of FIG. 17 and its related description). In an example, the apparatus may obtain transform coefficient information for the current block by performing transformation and quantization (or scaling), based on the residual difference signal of the current block, and may encode the transform coefficient information into a bitstream. In an example, the apparatus may omit transformation and quantization (or scaling) and encode the residual difference signal of the current block into a bitstream. In a proposed method of the disclosure, the residual difference signal of the current block may be encoded into the bitstream not only by these examples, but also by various methods.

Alternatively, operation 6 of FIG. 29 may be optional. When operation 6 of FIG. 29 is not performed, residual prediction may not be applied to the current block (or to the residual signal $C_{res}$ of the current block). In this case, the apparatus (e.g., the image encoding apparatus 200) may determine the residual signal $C_{res}$ of the current block by using the intra prediction mode of the current block signaled via the bitstream, but may encode the residual signal $C_{res}$ of the current block into a bitstream by processing the residual signal $C_{res}$ of the current block without predicting the residual signal $C_{res}$ of the current block, based on the residual signal $R_{res}$ of the reference block.

For example, when operation 6 of FIG. 29 is optional, the apparatus may determine whether to perform residual prediction for the current block (or the residual signal $C_{res}$ of the current block). When the apparatus determines not to perform residual prediction, the apparatus may determine the residual signal $C_{res}$ of the current block, based on the original signal $C_{org}$ of the current block and the prediction signal $C_{pred}$ of the current block (e.g., the difference $C_{org}$ - $C_{pred}$ between the original signal of the current block and the prediction signal of the current block), and may process the residual signal $C_{res}$ of the current block to encode the residual signal $C_{res}$ of the current block into a bitstream. In this example, when the apparatus determines to perform residual prediction for the current block (or the residual signal $C_{res}$ of the current block), the apparatus may perform the operation described above with reference to operation 6 of FIG. 29 to determine the residual difference signal $\check{C}_{res}$ of the current block, and may process the determined residual difference signal $\check{C}_{res}$ of the current block to encode the same into a bitstream.

In this example, whether operation 6 of FIG. 29 is applied (or whether residual prediction is performed for the current block) may be indicated by flag information (signaled via the bitstream). In an example, when a value of the flag information is 0, the flag information may indicate that residual prediction is performed for the current block, and, when the value of the flag information is 1, the flag information may indicate that residual prediction is not performed for the current block. In an example, when the value of the flag information is 1, the flag information may indicate that residual prediction is not performed for the current block, and, when the value of the flag information is 0, the flag information may indicate that residual prediction is performed for the current block. The value of the flag information may be a value other than 0 and 1. When operation 6 of FIG. 29 is optional, the apparatus (e.g., the image encoding apparatus 200) may encode, in the bitstream, flag information indicating whether residual prediction is performed for the current block.

For example, the flag information indicating whether residual prediction is performed for the current block may be signaled in units of predetermined data. For example, the predetermined data unit may be a block, a maximum coding block (or a coding tree unit (CTU)), a tile, a slice, a picture, a sequence, etc. When the bitstream does not include the flag information, the information may be inferred to be a value indicating either to apply or not to apply residual prediction to the current block. The flag information may be signaled using an index. Even when it is signaled in a higher-level data unit (e.g., a picture (or a picture parameter set (PPS)), a sequence (or a sequence parameter set (SPS)), etc.) that residual prediction is applied to the current block, flag information indicating whether residual prediction is performed for the current block may be transmitted in a lower-level data unit (e.g., a block).

An operation corresponding to the operation on the encoder side described above with reference to FIG. 29 may be performed on the decoder side.

For example, the apparatus (e.g., the image decoding apparatus 100) may obtain the residual difference signal $\check{C}_{res}$ of the current block by processing the bitstream (e.g., see operation 1802 of FIG. 18 and its related description). The apparatus may also obtain the intra prediction mode of the current block by processing the bitstream. Alternatively, the apparatus may determine the intra prediction mode of the current block, based on the template (or a neighboring pixel region) of the current block, without obtaining the intra prediction mode of the current block from the bitstream (e.g., a TIMD method). Then, the apparatus may determine the residual signal $R_{res}$ of the reference block and the prediction signal $C_{pred}$ of the current block by performing the operations described above with reference to operations 2 to 5 of FIG. 29 (e.g., see operations 1804 and 1806 of FIG. 18 and their related descriptions). Then, the apparatus may determine the reconstructed signal $C_{rec}$ of the current block, based on, for example, the residual difference signal $\check{C}_{res}$ of the current block, the residual signal $R_{res}$ of the reference block, and the prediction signal $C_{pred}$ of the current block (e.g., see operation 1808 of FIG. 18 and its related description). In an example, the apparatus may determine the residual signal $C_{res}$ of the current block, based on the residual difference signal $\tilde{C}_{res}$ of the current block and the residual signal $R_{res}$ of the reference block (e.g., a sum $\tilde{C}_{res}+R_{res}$ of the residual difference signal of the current block and the residual signal of the reference block), and may determine the reconstructed signal $C_{rec}$ of the current block, based on the residual signal $C_{res}$ of the current block and the predictor $C_{pred}$ of the current block (e.g., a sum $C_{res} + C_{pred}$ of the residual signal of the current block and the predictor of the current block).

For example, an operation of the apparatus (e.g., the image decoding apparatus 100) related to FIG. 29 may be performed based on Equation 2. For example, in the operation of the apparatus (e.g., the image decoding apparatus 100) related to FIG. 29, the template Tc of the current block may correspond to the first template or the first pixel region of FIG. 18, and the template $T_R$ of the reference block may correspond to the second template or the second pixel region of FIG. 18.

Alternatively, similar to an operation on the encoder side, residual prediction for the current block may be optional. In this case, the apparatus (e.g., the image decoding apparatus 100) may obtain, from the bitstream, flag information indicating whether residual prediction is applied to the current block (or the residual signal $C_{res}$ of the current block). When the flag information indicates that residual prediction is applied to the current block, the apparatus may determine the reconstructed signal $C_{rec}$ of the current block by performing the above-described operations (e.g., based on the residual difference signal $\tilde{C}_{res}$ of the current block, the residual signal $R_{res}$ of the reference block, and the prediction signal $C_{pred}$ of the current block) (e.g., see operation 1808 of FIG. 18 and its related description). When the flag information indicates that residual prediction is not applied to the current block, the apparatus may determine the reconstructed signal $C_{rec}$ of the current block, based on the residual signal $C_{res}$ of the current block and the prediction signal $C_{pred}$ of the current block (e.g., a sum $C_{res} + C_{pred}$ of the residual signal of the current block and the prediction signal of the current block).

As described above, in the proposed method 3 of the disclosure, information (e.g., flag information) indicating whether residual prediction is applied to the current block (or during intra prediction of the current block) may be signaled (via the bitstream). In the proposed method 3 of the disclosure, the encoder may determine a best intra prediction mode for the current block and signal the best intra prediction mode (via the bitstream), and the decoder may determine the prediction signal $C_{pred}$ of the current block and the prediction signal $R_{pred}$ of the reference block by using the signaled intra prediction mode. The proposed method of the disclosure may be defined or used as a new intra mode (or a residual prediction intra mode).

For example, in operation 3 of FIG. 29, the template shape and/or cost function described above with reference to FIG. 26 may be used to search for a portion (or a template) that best matches the template Tc of the current block. FIG. 26 and the entire related description thereof are incorporated herein by reference.

FIG. 30 illustrates the proposed method 4 of the disclosure.

The proposed method 4 of the disclosure may be performed by an apparatus (e.g., the image decoding apparatus 100 or the image encoding apparatus 200). The proposed method 4 of the disclosure relates to execution of residual prediction based on a BV (or a residual prediction intra mode), and is an example of signaling an intra prediction mode of the current block through a bitstream and using the intra prediction mode of the current block as an intra prediction mode of the reference block.

Referring to FIG. 30, in operation 1, the apparatus (e.g., the image encoding apparatus 200) may determine a prediction signal of the current block for an intra prediction mode set (or a plurality of intra prediction modes) 3002 by using a reference pixel (or a neighboring pixel) of the current block, and may find a best matched intra prediction mode from the intra prediction mode set (or from the plurality of intra prediction modes) by comparing a distortion between an original signal $C_{org}$ of the current block and the prediction signal of the current block. The apparatus may determine the intra prediction mode found in this way as the intra prediction mode of the current block, and determine a prediction signal $C_{pred}$ of the current block, based on the determined intra prediction mode. As an example that does not limit the proposed method of the disclosure, the intra prediction mode set (or the plurality of intra prediction modes) may include the intra prediction modes described above with reference to FIGS. 20 and 21. The intra prediction mode of the current block determined in this way may be used as the intra prediction mode of the reference block, and may be signaled to the decoder through a bitstream.

Alternatively, in operation 1 of FIG. 30, the intra prediction mode of the current block may be determined based on a TIMD method. Because the decoder may also determine the intra prediction mode of the current block in the same manner, the apparatus (e.g., the image encoding apparatus 200) may not signal the intra prediction mode of the current block through the bitstream. In detail, the apparatus may determine a prediction signal for a template of the current block by performing intra prediction for a template of the current block by using a reference pixel of the template of the current block (or a neighboring pixel region or neighboring block of the current block) for each of the intra prediction mode set (or the plurality of intra prediction modes) (e.g., see FIGS. 20 and 21 and their descriptions), may determine cost functions (e.g., an SAD, an SSD, and an SATD) by using a reconstructed signal and the prediction signal of the template of the current block, and may derive one or two intra prediction modes corresponding to a cost function of a lowest or highest value among the determined cost functions. As an example that does not limit the proposed method of the disclosure, the template of the current block may include at least one of an upper neighboring pixel region, a left neighboring pixel region, or an upper-left neighboring pixel region of the current block. Instead of TIMD, a decoder side intra mode derivation (DIMD) method may be used.

For example, operation 1 of FIG. 30 may be performed in operation 1704 of FIG. 17, and the intra prediction mode of the current block determined from among the intra prediction mode set (or from among the plurality of intra prediction modes) 3002 in FIG. 30 may correspond to the intra prediction mode of the current block of FIG. 17.

In operation 2 of FIG. 30, the apparatus (e.g., the image encoding apparatus 200) may generate or determine a residual signal $C_{res}$ of the current block. For example, the apparatus may generate or determine the residual signal $C_{res}$ of the current block, based on the original signal $C_{org}$ of the current block and the prediction signal $C_{pred}$ of the current block (e.g., a difference $C_{org}$ - $C_{pred}$ between the original signal of the current block and the prediction signal of the current block).

In operation 3 of FIG. 30, the apparatus (e.g., the image encoding apparatus 200) may search for a block (or a reference block) R matching the current block in a given search area of a spatial domain by using a block vector BV. For example, the search area may be the same as or different from the search area 2310 for template matching. As an example that does not limit the proposed method of the disclosure, the apparatus may obtain a block vector BV, based on block matching in the given search area, and search for the block (or reference block) R that matches the current block. As a more detailed example, the apparatus may search for the block vector BV of the current block and search for the reference block R, by performing the operation described with reference to FIG. 24. For example, operation 3 of FIG. 30 may be performed in operation 1702 of FIG. 17.

In operation 4 of FIG. 30, the apparatus (e.g., the image encoding apparatus 200) may predict the reference block with the reference pixel (or with the neighboring pixel) of the reference block by using the intra prediction mode (e.g., the best matched intra prediction mode) of the current block determined in operation 1. For example, the apparatus may determine a prediction signal (or a predictor) $R_{pred}$ of the reference block by applying the intra prediction mode of the current block to the reference pixel (or the neighboring pixel) of the reference block.

In operation 5 of FIG. 30, the apparatus (e.g., the image encoding apparatus 200) may have or determine, as a residual predictor of the current block, a residual block (e.g., a residual signal $R_{res}$ of the reference block) corresponding to the intra prediction mode determined in operation 1. For example, the apparatus may determine the residual signal $R_{res}$ of the reference block, based on the reconstructed signal $R_{rec}$ of the reference block and the prediction signal $R_{pred}$ of the reference block (e.g., a difference $R_{rec}$ - $R_{pred}$ between the reconstructed signal of the reference block and the prediction signal of the reference block).

In operation 6 of FIG. 30, the apparatus (e.g., the image encoding apparatus 200) may additionally predict the residual signal $C_{res}$ of the current block, based on the residual predictor corresponding to the template $T_R$ of the reference block (e.g., the residual signal $R_{res}$ of the reference block). In an example, as described above with reference to FIG. 17, the apparatus may determine a residual difference signal $\tilde{C}_{res}$ of the current block, based on the original signal $C_{org}$ of the current block, the prediction signal $C_{pred}$ of the current block, and the residual signal $R_{res}$ of the reference block. In an example, the apparatus may determine the residual signal $C_{res}$ of the current block, based on the original signal $C_{org}$ of the current block and the predictor $C_{pred}$ of the current block (e.g., a difference $C_{org}$ - $C_{pred}$ between the original signal of the current block and the predictor of the current block), and may determine the residual difference signal $\tilde{C}_{res}$ of the current block, based on the residual signal $C_{res}$ of the current block and the residual signal $R_{res}$ of the reference block (e.g., a difference $C_{res}$ - $R_{res}$ between the residual signal of the current block and the residual signal of the reference block). For example, an operation of the apparatus illustrated in FIG. 30 may be executed based on Equation 1 (see FIG. 20 and its related description).

For example, operations 4 to 6 of FIG. 30 may be performed in operation 1706 of FIG. 17.

The apparatus (e.g., the image encoding apparatus 200) may process the residual difference signal $\tilde{C}_{res}$ of the current block to encode the same into a bitstream (e.g., see operation 1708 of FIG. 17 and its related description). In an example, the apparatus may obtain transform coefficient information for the current block by performing transformation and quantization (or scaling), based on the residual difference signal of the current block, and may encode the transform coefficient information into a bitstream. In an example, the apparatus may omit transformation and quantization (or scaling) and encode the residual difference signal of the current block into a bitstream. In a proposed method of the disclosure, the residual difference signal of the current block may be encoded into the bitstream not only by these examples, but also by various methods.

Alternatively, operation 6 of FIG. 30 may be optional. When operation 6 of FIG. 30 is not performed, residual prediction may not be applied to the current block (or to the residual signal $C_{res}$ of the current block). In this case, the apparatus (e.g., the image encoding apparatus 200) may determine the residual signal $C_{res}$ of the current block by using the intra prediction mode of the current block signaled via the bitstream, but may encode the residual signal $C_{res}$ of the current block into a bitstream by processing the residual signal $C_{res}$ of the current block without predicting the residual signal $C_{res}$ of the current block, based on the residual signal $R_{res}$ of the reference block.

For example, when operation 6 of FIG. 30 is optional, the apparatus may determine whether to perform residual prediction for the current block (or on the residual signal $C_{res}$ of the current block). When the apparatus determines not to perform residual prediction, the apparatus may determine the residual signal $C_{res}$ of the current block, based on the original signal $C_{org}$ of the current block and the prediction signal $C_{pred}$ of the current block (e.g., the difference $C_{org}$ - $C_{pred}$ between the original signal of the current block and the prediction signal of the current block), and may process the residual signal $C_{res}$ of the current block to encode the residual signal $C_{res}$ of the current block into a bitstream. In this example, when the apparatus determines to perform residual prediction for the current block (or the residual signal $C_{res}$ of the current block), the apparatus may perform the operation described above with reference to operation 6 of FIG. 30 to determine the residual difference signal $\tilde{C}_{res}$ of the current block, and may process the determined residual difference signal $\tilde{C}_{res}$ of the current block to encode the same into a bitstream.

In this example, whether operation 6 of FIG. 30 is applied (or whether residual prediction is performed for the current block) may be indicated by flag information (signaled via the bitstream). In an example, when a value of the flag information is 0, the flag information may indicate that residual prediction is performed for the current block, and, when the value of the flag information is 1, the flag information may indicate that residual prediction is not performed for the current block. In an example, when the value of the flag information is 1, the flag information may indicate that residual prediction is not performed for the current block, and, when the value of the flag information is 0, the flag information may indicate that residual prediction is performed for the current block. The value of the flag information may be a value other than 0 and 1. When operation 6 of FIG. 30 is optional, the apparatus (e.g., the image encoding apparatus 200) may encode, in the bitstream, flag information indicating whether residual prediction is performed for the current block.

For example, the flag information indicating whether residual prediction is performed for the current block may be signaled in units of predetermined data. For example, the predetermined data unit may be a block, a maximum coding block (or a coding tree unit (CTU)), a tile, a slice, a picture, a sequence, etc. When the bitstream does not include the flag information, the information may be inferred to be a value indicating either to apply or not to apply residual prediction to the current block. The flag information may be signaled using an index. Even when it is signaled in a higher-level data unit (e.g., a picture (or a picture parameter set (PPS)), a sequence (or a sequence parameter set (SPS)), etc.) that residual prediction is applied to the current block, flag information indicating whether residual prediction is performed for the current block may be transmitted in a lower-level data unit (e.g., a block).

An operation corresponding to the operation on the encoder side described above with reference to FIG. 30 may be performed on the decoder side.

For example, the apparatus (e.g., the image decoding apparatus 100) may obtain the residual difference signal $\tilde{C}_{res}$ of the current block by processing the bitstream (e.g., see operation 1802 of FIG. 18 and its related description). The apparatus may also obtain the intra prediction mode of the current block by processing the bitstream. Alternatively, the apparatus may determine the intra prediction mode of the current block, based on the template (or a neighboring pixel region) of the current block, without obtaining the intra prediction mode of the current block from the bitstream (e.g., a TIMD method). Then, the apparatus may determine the residual signal $R_{res}$ of the reference block and the prediction signal $C_{pred}$ of the current block by performing the operations described above with reference to operations 2 to 5 of FIG. 30 (e.g., see operations 1804 and 1806 of FIG. 18 and their related descriptions). Then, the apparatus may determine the reconstructed signal $C_{rec}$ of the current block, based on, for example, the residual difference signal $\tilde{C}_{res}$ of the current block, the residual signal $R_{res}$ of the reference block, and the prediction signal $C_{pred}$ of the current block (e.g., see operation 1808 of FIG. 18 and its related description). In an example, the apparatus may determine the residual signal $C_{res}$ of the current block, based on the residual difference signal $\tilde{C}_{res}$ of the current block and the residual signal $R_{res}$ of the reference block (e.g., a sum $\tilde{C}_{res} + R_{res}$ of the residual difference signal of the current block and the residual signal of the reference block), and may determine the reconstructed signal $C_{rec}$ of the current block, based on the residual signal $C_{res}$ of the current block and the predictor $C_{pred}$ of the current block (e.g., a sum $C_{res} + C_{pred}$ of the residual signal of the current block and the predictor of the current block). In an example, an operation of the apparatus (e.g., the image decoding apparatus 100) related to FIG. 30 may be performed based on Equation 2.

Alternatively, similar to an operation on the encoder side, residual prediction for the current block may be optional. In this case, the apparatus (e.g., the image decoding apparatus 100) may obtain, from the bitstream, flag information indicating whether residual prediction is applied to the current block (or the residual signal $C_{res}$ of the current block). When the flag information indicates that residual prediction is applied to the current block, the apparatus may determine the reconstructed signal $C_{rec}$ of the current block by performing the above-described operations (e.g., based on the residual difference signal $\tilde{C}_{res}$ of the current block, the residual signal $R_{res}$ of the reference block, and the prediction signal $C_{pred}$ of the current block) (e.g., see operation 1808 of FIG. 18 and its related description). When the flag information indicates that residual prediction is not applied to the current block, the apparatus may determine the reconstructed signal $C_{rec}$ of the current block, based on the residual signal $C_{res}$ of the current block and the prediction signal $C_{pred}$ of the current block (e.g., a sum $C_{res} + C_{pred}$ of the residual signal of the current block and the prediction signal of the current block).

As described above, in the proposed method 4 of the disclosure, information (e.g., flag information) indicating whether residual prediction is applied to the current block (or during intra prediction of the current block) may be signaled (via the bitstream). In the proposed method 4 of the disclosure, the encoder may determine a best intra prediction mode for the current block and signal the best intra prediction mode (via the bitstream), and the decoder may determine the prediction signal $C_{pred}$ of the current block and the prediction signal $R_{pred}$ of the reference block by using the signaled intra prediction mode. In the proposed method 4 of the disclosure, the encoder may signal the block vector BV of the current block (via a bitstream), and the decoder may determine a reference block corresponding to the current block by using the signaled block vector BV of the current block. The proposed method of the disclosure may be defined or used as a new intra mode (or a residual prediction intra mode).

The proposed method of the disclosure may be used as an independent intra prediction mode. For example, the proposed method of the disclosure may be referred to as a residual prediction intra mode. As described above with reference to the proposed methods 1 to 4 of the disclosure, flag information indicating whether residual prediction is applied to the current block may be signaled through the bitstream in units of predetermined blocks (e.g., a coding unit (CU) and a coding tree unit (CTU)). As described above with reference to the proposed methods 1 to 4 of the disclosure, residual prediction with respect to the current block may be optional when the flag information is signaled via the bitstream.

In an example, when the residual prediction intra mode is applied in the proposed method of the disclosure, residual reordering may be applied to the current block. Whether residual reordering is applied to the current block may be signaled by separate flag information from the flag information indicating whether residual prediction is applied to the current block.

In an example, the proposed method of the disclosure may be used as an additional option when the intra block copy (IBC) mode is applied. For example, when the IBC mode is applied to the current block, flag information indicating whether the reference block is used as a predictor of the current block in the IBC mode or the residual signal $R_{res}$ of the reference block is generated as the predictor of the current block by using the proposed method of the disclosure and residual prediction is performed for the current block may be signaled through the bitstream.

In an example, the proposed method of the disclosure may be used as an additional option in the intra TMP mode. For example, when the intra TMP mode is applied to the current block, flag information indicating whether the reference block is used as a predictor of the current block in the intra TMP mode or the residual signal $R_{res}$ of the reference block is generated as the predictor of the current block by using the proposed method of the disclosure and residual prediction is performed for the current block may be signaled through the bitstream.

In an example, a prediction mode (or a residual prediction intra mode) according to the proposed method of the disclosure may be weighted combined (e.g., weighted averaged or weighted summed) with another intra prediction mode (e.g., see FIGS. 20 and 21 and their related descriptions) to determine a predictor for the current block. In an example, the prediction signal $C_{pred}$ of the current block determined based on the proposed method of the disclosure and the prediction signal of the current block determined based on the intra prediction mode (e.g., see FIGS. 20 and 21 and their related descriptions) may be weighted combined (e.g., weighted averaged or weighted summed) with each other to determine the prediction signal $C_{pred}$ of the current block. In an example, the residual difference signal $\tilde{C}_{res}$ of the current block determined based on the proposed method of the disclosure and the residual signal of the current block determined based on the intra prediction mode (e.g., see FIGS. 20 and 21 and their related descriptions) may be weighted combined (e.g., weighted averaged or weighted summed) with each other to determine the residual signal of the current block.

In an example, in the proposed method of the disclosure, a block (e.g., the current block or a reference block) may be a coding unit (CU) (or a coding block), a prediction unit (PU) (or a prediction block), a transform unit (TU) (or a transform block), or any other unit block.

In an example, in the proposed method of the disclosure, the residual signal $C_{res}$ of the current block may be predicted in the spatial domain, but may be predicted in the transform domain. When the residual signal is predicted in the transform domain, the apparatus (e.g., the image encoding apparatus 200) may determine transform coefficient information by performing transformation (using a transform kernel such as a discrete cosine transform (DCT)), based on the residual signal $C_{res}$ of the current block, and may perform residual subtraction in the transform domain by discarding at least some highfrequency coefficients from the transform coefficient information (e.g., by setting a highfrequency coefficient to be 0). Then, the apparatus may determine a final residual signal of the current block in the spatial domain by inversely transforming a result of the residual subtraction, and may process the final residual signal to encode the final residual signal into a bitstream. The decoder may process the bitstream to obtain the residual signal $C_{res}$ of the current block, and may determine the reconstructed signal $C_{rec}$ of the current block, based on the proposed method of the disclosure.

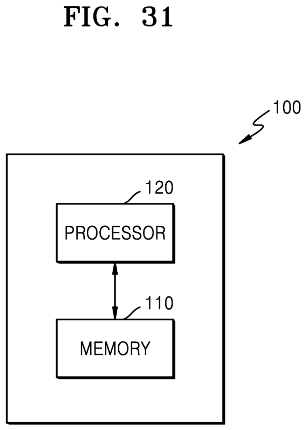

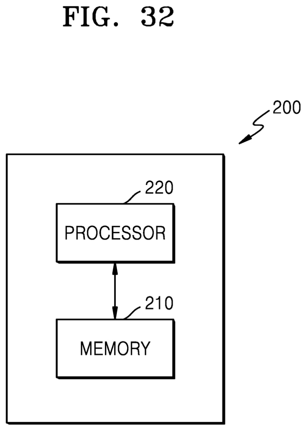

FIGS. 31 and 32 illustrate apparatuses configured to perform the proposed method of the disclosure. The example of FIG. 31 illustrates the image decoding apparatus 100 configured to implement the proposed method of the disclosure, and the example of FIG. 32 illustrates the image encoding apparatus 200 configured to implement the proposed method of the disclosure. FIGS. 31 and 32 are only examples, and are not intended to limit apparatuses for implementing the proposed method of the disclosure. For example, the apparatuses 100 and 200 may further include other components (e.g., a transceiver) in addition to the components illustrated in FIGS. 31 and 32, and some components may be omitted or may be provided outside the apparatuses 100 and 200.

Referring to FIG. 31, the apparatus 100 may include at least one memory 110 and at least one processor 120. The at least one memory 110 may include instructions implementing the proposed method of the disclosure. The at least one processor 120 may be operably connected to the at least one memory 110 and configured to execute the instructions included in the at least one memory 110 to implement the proposed method of the disclosure (e.g., see FIG. 18 and its related description).

Referring to FIG. 32, the apparatus 200 may include at least one memory 210 and at least one processor 220. The at least one memory 210 may include instructions implementing the proposed method of the disclosure. The at least one processor 220 may be operably connected to the at least one memory 210 and configured to execute the instructions included in the at least one memory 210 to implement the proposed method of the disclosure (e.g., see FIG. 17 and its related description).

The proposed method of the disclosure may be implemented as hardware, software, or a combination of hardware and software. When implemented in software, the proposed method of the disclosure may be implemented as a program executable on a computer, and the implemented program can be stored in a non-transitory computer-readable storage medium. A program stored in a non-transitory computer-readable storage medium may be configured to be executable by the at least one processor 120 or 220 of the apparatus 100 or 200, and may be configured with instructions configured to implement the proposed method of the disclosure when executed by the at least one processor 120 or 220.

The non-transitory computer-readable storage medium may continuously store computer-executable programs, or temporarily store the computer-executable programs for execution or downloading. Also, the medium may be any one of various recording media or storage media in which a single piece or plurality of pieces of hardware are combined, and the medium is not limited to a medium directly connected to a computer system, but may be distributed on a network. Examples of the medium include a magnetic medium (e.g., a hard disk, a floppy disk, or a magnetic tape), an optical medium (e.g., a compact disk-read-only memory (CD-ROM) or a digital versatile disk (DVD), a magnetooptical medium (e.g., a floptical disk), and a ROM, a random-access memory (RAM), and a flash memory, which are configured to store program instructions. Machine-readable storage media may be provided as non-transitory storage media. The 'non-transitory storage medium' is a tangible apparatus and only means that it does not contain a signal (e.g., electromagnetic waves). This term does not distinguish a case in which data is stored semi-permanently in a storage medium from a case in which data is temporarily stored. For example, the 'non-transitory storage medium' may include a buffer in which data is temporarily stored.

Other examples of the medium include recording media and storage media managed by application stores distributing applications or by websites, servers, and the like supplying or distributing other various types of software.

While one or more embodiments of the disclosure have been described with reference to the figures, it will be understood by those of ordinary skill in the art that various changes in form and details may be made therein without departing from the spirit and scope as defined by the following claims.

**Claims**

1. A method, performed by an apparatus, of decoding a bitstream, the method comprising:

   obtaining a residual difference signal of a current block by processing the bitstream;
   determining a reference block corresponding to the current block, in a current picture including the current block;
   determining a residual signal of the reference block, based on a reconstructed signal of the reference block and a prediction signal of the reference block; and
   determining a reconstructed signal of the current block, based on the residual difference signal of the current block, the residual signal of the reference block, and a prediction signal of the current block,
   wherein the prediction signal of the reference block is determined based on at least one reference pixel included in a neighboring block of the reference block in the current picture, and
   wherein the prediction signal of the current block is determined based on at least one reference pixel included in a neighboring block of the current block in the current picture.

2. The method of claim 1, further comprising:

   determining an intra prediction mode of the reference block from among a plurality of intra prediction modes, based on the reconstructed signal of the reference block and at least one reference pixel included in the neighboring block of the reference block,
   wherein the prediction signal of the reference block is determined based on the intra prediction mode of the reference block and at least one reference pixel included in the neighboring block of the reference block in the current picture, and
   wherein the prediction signal of the current block is determined based on the intra prediction mode of the reference block and at least one reference pixel included in the neighboring block of the current block in the current picture.

3. The method of claim 2, wherein the determining of the intra prediction mode of the reference block from among the plurality of intra prediction modes comprises:

   calculating a function value for each of the plurality of intra prediction modes, based on the reconstructed signal of the reference block and the at least one reference pixel included in the neighboring block of the reference block; and
   determining, as an intra prediction mode of the current block, an intra prediction mode corresponding to a lowest function value or a highest function value, among the calculated function values.

4. The method of claim 3, wherein the function value includes at least one of a sum of absolute differences (SAD), a sum of squared differences (SSD), or a number of pixels having a same pixel value.

5. The method of claim 1, further comprising:

   identifying an intra prediction mode of the reference block, based on the reference block being coded in an intra prediction mode,
   wherein the prediction signal of the reference block is determined based on the intra prediction mode of the reference block and at least one reference pixel included in the neighboring block of the reference block in the current picture, and
   wherein the prediction signal of the current block is determined based on the intra prediction mode of the reference block and at least one reference pixel included in the neighboring block of the current block in the current picture.

6. The method of claim 1, further comprising:

   obtaining an intra prediction mode of the current block from the bitstream,
   wherein the prediction signal of the reference block is determined based on the intra prediction mode of the current block and at least one reference pixel included in the neighboring block of the reference block in the current picture, and
   wherein the prediction signal of the current block is determined based on the intra prediction mode of the current block and at least one reference pixel included in the neighboring block of the current block in the current picture.

7. The method of claim 1, further comprising:

   determining an intra prediction mode of the current block from among a plurality of intra prediction modes, based on a pixel region adjacent to the current block,
   wherein the prediction signal of the reference block is determined based on the intra prediction mode of the current block and at least one reference pixel included in the neighboring block of the reference block in the current picture, and
   wherein the prediction signal of the current block is determined based on the intra prediction mode of the current block and at least one reference pixel included in the neighboring block of the current block in the current picture.

8. The method of claim 1, wherein the determining of the reference block corresponding to the current block comprises:

   determining a first pixel region adjacent to the current block in the current picture;
   determining a second pixel region corresponding to the first pixel region adjacent to the current block in the current picture; and
   determining the reference block corresponding to the second pixel region in the current picture.

9. The method of claim 8, wherein the first pixel region adjacent to the current block includes at least one of a pixel region adjacent to a top of the current block, a pixel region adjacent to a top-left of the current block, or a pixel region adjacent to a left of the current block.

10. The method of claim 8, wherein the first pixel region adjacent to the current block has a fixed size, has a size determined based on a size of the current block, has a same width or a same height as a coding unit including the current block, or has a width or a height that is twice the width or the height of the coding unit including the current block.

11. The method of claim 8, wherein the determining of the second pixel region corresponding to the first pixel region adjacent to the current block in the current picture comprises determining, as the second pixel region, a pixel region corresponding to a lowest function value or a highest function value among function values calculated based on a pixel of the first pixel region and a pixel of a pixel region within a reconstructed area of the current picture.

12. The method of claim 1, wherein the determining of the reference block corresponding to the current block comprises:
    obtaining a block vector of the current block from the bitstream; and
    determining the reference block in the current picture, based on the block vector of the current block.

13. The method of claim 1, further comprising:
    obtaining, from the bitstream, flag information indicating whether residual prediction is performed for the current block,
    wherein the obtaining of the residual difference signal of the current block, and the determining of the reconstructed signal of the current block, based on the residual difference signal of the current block, the residual signal of the reference block, and the prediction signal of the current block, are performed based on the flag information indicating that residual prediction is performed for the current block.

14. A method, performed by an apparatus, of encoding a bitstream, the method comprising:

    determining a reference block corresponding to a current block, in a current picture including the current block;
    determining a residual signal of the reference block, based on a reconstructed signal of the reference block and a prediction signal of the reference block;
    determining a residual difference signal of the current block, based on the residual signal of the reference block, an original signal of the current block, and a prediction signal of the current block; and
    encoding the residual difference signal of the current block into the bitstream by processing the residual difference signal of the current block,
    wherein the prediction signal of the reference block is determined based on at least one reference pixel included in a neighboring block of the reference block in the current picture, and
    wherein the prediction signal of the current block is determined based on at least one reference pixel included in a neighboring block of the current block in the current picture.

15. A non-transitory storage medium for storing a bitstream generated by a method, wherein the method comprises:

    determining a reference block corresponding to a current block, in a current picture including the current block;

**EP 4 723 622 A1**

determining a residual signal of the reference block, based on a reconstructed signal of the reference block and a prediction signal of the reference block;

determining a residual difference signal of the current block, based on the residual signal of the reference block, an original signal of the current block, and a prediction signal of the current block; and

encoding the residual difference signal of the current block into the bitstream by processing the residual difference signal of the current block,

wherein the prediction signal of the reference block is determined based on at least one reference pixel included in a neighboring block of the reference block in the current picture, and

wherein the prediction signal of the current block is determined based on at least one reference pixel included in a neighboring block of the current block in the current picture.

# FIG. 1

BITSTREAM

100

110

RECEIVER

120

DECODER

OUTPUT IMAGE

# FIG. 2

START

OBTAIN BIN STRING CORRESPONDING TO
SPLIT SHAPE MODE — 210

DETERMINE SPLIT RULE — 220

SPLIT CODING UNIT INTO PLURALITY OF
CODING UNITS — 230

END

# FIG. 3

# FIG. 4

400

410

420a

420b

430a

430b

430c

450

460

470a 470b

480a 480b 480c

# FIG. 5

## FIG. 6

# FIG. 7

# FIG. 8

# FIG. 9

# FIG. 10

FIG. 11

EP 4 723 622 A1

# FIG. 12

1200

1210a 1210b

1220a

1220b

1216a 1216b

1217

1216c 1216d

1226a 1226b

1226c 1226d

1227

# FIG. 13

| BLOCK SHAPE DEPTH | 0: SQUARE | 1: NS_VER | 2: NS_HOR |
|---|---|---|---|
| DEPTH D | 1300 | 1310 | 1320 |
| DEPTH D+1 | 1302 | 1312 | 1322 |
| DEPTH D+2 | 1304 | 1314 | 1324 |
| … | … | … | … |

## FIG. 14

EP 4 723 622 A1

# FIG. 15

FIG. 16

EP 4 723 622 A1

# FIG. 17

DETERMINE REFERENCE BLOCK CORRESPONDING TO CURRENT BLOCK IN CURRENT PICTURE INCLUDING CURRENT BLOCK — 1702

DETERMINE RESIDUAL SIGNAL OF REFERENCE BLOCK, BASED ON RECONSTRUCTED SIGNAL OF REFERENCE BLOCK AND PREDICTION SIGNAL OF REFERENCE BLOCK — 1704

DETERMINE RESIDUAL DIFFERENCE SIGNAL OF CURRENT BLOCK, BASED ON ORIGINAL SIGNAL OF CURRENT BLOCK, PREDICTION SIGNAL OF CURRENT BLOCK, AND RESIDUAL SIGNAL OF REFERENCE BLOCK — 1706

ENCODE RESIDUAL DIFFERENCE SIGNAL OF CURRENT BLOCK INTO BITSTREAM BY PROCESSING RESIDUAL DIFFERENCE SIGNAL OF CURRENT BLOCK — 1708

# FIG. 18

OBTAIN RESIDUAL DIFFERENCE SIGNAL OF CURRENT BLOCK BY PROCESSING BITSTREAM ——1802

DETERMINE REFERENCE BLOCK CORRESPONDING TO CURRENT BLOCK IN CURRENT PICTURE INCLUDING CURRENT BLOCK ——1804

DETERMINE RESIDUAL SIGNAL OF REFERENCE BLOCK, BASED ON RECONSTRUCTED SIGNAL OF REFERENCE BLOCK AND PREDICTION SIGNAL OF REFERENCE BLOCK ——1806

DETERMINE RECONSTRUCTED SIGNAL OF CURRENT BLOCK, BASED ON RESIDUAL DIFFERENCE SIGNAL OF CURRENT BLOCK, RESIDUAL SIGNAL OF REFERENCE BLOCK, AND PREDICTION SIGNAL OF CURRENT BLOCK ——1808

# FIG. 19

```
┌─────────────────────────────────────────┐
│   GENERATE BITSTREAM ACCORDING TO        │── 1902
│   ENCODING METHOD                        │
└─────────────────────────────────────────┘
                    │
                    ▼
┌─────────────────────────────────────────┐
│   STORE GENERATED BITSTREAM IN           │
│   COMPUTER-READABLE STORAGE MEDIUM OR     │
│   TRANSMIT GENERATED BITSTREAM TO ANOTHER │── 1904
│   APPARATUS BY USING WIRELESS OR WIRED   │
│   COMMUNICATION                          │
└─────────────────────────────────────────┘
```

FIG. 20

# FIG. 21

DIAGONAL MODE    2W+1

2110a    2108a

2102a

2H+1

MODE 66   2118a

2104a

RANGE OF INTRA PREDICTION ANGLES

MODE 2

2116a   2106a

45 DEGREES

(a)

DIAGONAL MODE    2W+1

2110b

45 DEGREES

MODE 66   2108b

2118b

2102b

2H+1

2104b

RANGE OF INTRA PREDICTION ANGLES

2106b   MODE 2

2116b

(b)

EP 4 723 622 A1

# FIG. 22

PERFORM TEMPLATE MATCHING FOR SEARCH RANGE AROUND INITIAL MV

EP 4 723 622 A1

# FIG. 23

INTRA TMP 2306

# FIG. 24

2412
REFERENCE BLOCK

Ref block

2410
BLOCK VECTOR (BV)

2402
Cur block
(IBC)
CURRENT BLOCK

IBC                    2406

# FIG. 25

RESIDUAL PREDICTION

$C_{org}$  : ORIGINAL SIGNAL OF CURRENT BLOCK
$C_{pred}$ : PREDICTION SIGNAL OF CURRENT BLOCK
$C_{res}$  : RESIDUAL SIGNAL OF CURRENT BLOCK
$R_{rec}$  : RECONSTRUCTED SIGNAL OF REFERENCE BLOCK
$R_{pred}$ : (SIMULATED) PREDICTION SIGNAL OF REFERENCE BLOCK
$R_{res}$  : (SIMULATED) RESIDUAL SIGNAL OF REFERENCE BLOCK
$T_C$     : TEMPLATE OF CURRENT BLOCK
$T_R$     : TEMPLATE OF REFERENCE BLOCK

EP 4 723 622 A1

# FIG. 26

(a)

(b)

(c)

# FIG. 27

REFERENCE PIXELS FOR INTRA PREDICTION
OF REFERENCE BLOCK

# FIG. 28

# FIG. 29

RESIDUAL PREDICTION

$C_{org}$ : ORIGINAL SIGNAL OF CURRENT BLOCK
$C_{pred}$ : PREDICTION SIGNAL OF CURRENT BLOCK
$C_{res}$ : RESIDUAL SIGNAL OF CURRENT BLOCK
$R_{rec}$ : RECONSTRUCTED SIGNAL OF REFERENCE BLOCK
$R_{pred}$ : (SIMULATED) PREDICTION SIGNAL OF REFERENCE BLOCK
$R_{res}$ : (SIMULATED) RESIDUAL SIGNAL OF REFERENCE BLOCK
$T_C$ : TEMPLATE OF CURRENT BLOCK
$T_R$ : TEMPLATE OF REFERENCE BLOCK

EP 4 723 622 A1

# FIG. 30

RESIDUAL PREDICTION

$C_{org}$ : ORIGINAL SIGNAL OF CURRENT BLOCK
$C_{pred}$ : PREDICTION SIGNAL OF CURRENT BLOCK
$C_{res}$ : RESIDUAL SIGNAL OF CURRENT BLOCK
$R_{rec}$ : RECONSTRUCTED SIGNAL OF REFERENCE BLOCK
$R_{pred}$ : (SIMULATED) PREDICTION SIGNAL OF REFERENCE BLOCK
$R_{res}$ : (SIMULATED) RESIDUAL SIGNAL OF REFERENCE BLOCK
$T_{C}$ : TEMPLATE OF CURRENT BLOCK
$T_{R}$ : TEMPLATE OF REFERENCE BLOCK

# FIG. 31

— not applicable

EP 4 723 622 A1

# FIG. 32

200

PROCESSOR    220

MEMORY    210

## INTERNATIONAL SEARCH REPORT

| | International application No. |
|---|---|
| | **PCT/KR2024/006660** |

### A. CLASSIFICATION OF SUBJECT MATTER

**H04N 19/105**(2014.01)i; **H04N 19/176**(2014.01)i; **H04N 19/11**(2014.01)i; **H04N 19/593**(2014.01)i; **H04N 19/157**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/105(2014.01); H04N 13/00(2006.01); H04N 19/11(2014.01); H04N 19/124(2014.01); H04N 19/159(2014.01); H04N 19/176(2014.01); H04N 19/593(2014.01); H04N 19/597(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 잔차(residual), 차분(difference), 참조(reference), 복원(reconstruct), 이웃(neighbor), 픽셀(pixel), 인트라(intra)

### C. DOCUMENTS CONSIDERED TO BE RELEVANT

| Category* | Citation of document, with indication, where appropriate, of the relevant passages | Relevant to claim No. |
|---|---|---|
| Y | KR 10-2018-0107082 A (SAMSUNG ELECTRONICS CO., LTD.) 01 October 2018 (2018-10-01) See paragraphs [0061], [0069]-[0074], [0077], [0211] and [0221]; claims 13-14; and figures 2-3. | 1-15 |
| Y | US 9998727 B2 (QUALCOMM INCORPORATED) 12 June 2018 (2018-06-12) See column 3, line 63 - column 4, line 15; column 14, lines 15-18; column 15, lines 64-67 and column 20, line 63 - column 21, line 3; claims 16-17; and figure 6. | 1-15 |
| Y | US 2019-0281290 A1 (ELECTRONICS AND TELECOMMUNICATIONS RESEARCH INSTITUTE et al.) 12 September 2019 (2019-09-12) See paragraphs [0224]-[0225], [0292], [0754] and [0803]; and claims 1 and 8-12. | 2-5 |
| Y | COBAN, Muhammed et al. Algorithm description of Enhanced Compression Model 8 (ECM 8). JVET-AC2025, Joint Video Experts Team (JVET) of ITU-T SG 16 WP 3 and ISO/IEC JTC 1/SC 29, 29th Meeting, by teleconference. pp. 1-73, 06 April 2023. See page 7. | 7 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **19 August 2024** | **19 August 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/006660** |

**C.   DOCUMENTS CONSIDERED TO BE RELEVANT**

| Category* | Citation of document, with indication, where appropriate, of the relevant passages | Relevant to claim No. |
| --- | --- | --- |
| A | US 10575000 B2 (MEDIATEK INC.) 25 February 2020 (2020-02-25)<br>      See claims 1-6. | 1-15 |

Form PCT/ISA/210 (second sheet) (July 2022)

**INTERNATIONAL SEARCH REPORT**
Information on patent family members

International application No.

**PCT/KR2024/006660**

| Patent document cited in search report | | | Publication date (day/month/year) | Patent family member(s) | | | Publication date (day/month/year) |
|---|---|---|---|---|---|---|---|
| KR | 10-2018-0107082 | A | 01 October 2018 | EP | 3396960 | A1 | 31 October 2018 |
| | | | | US | 2019-0037217 | A1 | 31 January 2019 |
| | | | | WO | 2017-142326 | A1 | 24 August 2017 |
| US | 9998727 | B2 | 12 June 2018 | CN | 104704833 | A | 10 June 2015 |
| | | | | CN | 104704833 | B | 28 May 2019 |
| | | | | EP | 2898692 | A1 | 29 July 2015 |
| | | | | EP | 2898692 | B1 | 25 October 2023 |
| | | | | US | 2014-0078250 | A1 | 20 March 2014 |
| | | | | WO | 2014-047188 | A1 | 27 March 2014 |
| US | 2019-0281290 | A1 | 12 September 2019 | US | 10771781 | B2 | 08 September 2020 |
| | | | | US | 11363260 | B2 | 14 June 2022 |
| | | | | US | 11956426 | B2 | 09 April 2024 |
| | | | | US | 2021-0021816 | A1 | 21 January 2021 |
| | | | | US | 2022-0303528 | A1 | 22 September 2022 |
| | | | | US | 2024-0223755 | A1 | 04 July 2024 |
| US | 10575000 | B2 | 25 February 2020 | CN | 107454414 | A | 08 December 2017 |
| | | | | CN | 107454414 | B | 14 August 2020 |
| | | | | US | 2017-0310987 | A1 | 26 October 2017 |

Form PCT/ISA/210 (patent family annex) (July 2022)